# EUROPEAN PATENT APPLICATION

(11) **EP 4 838 672 A1**
(43) Date of publication of application: **11.11.2026**
(21) Application number: 24941177.8
(22) Date of filing: 31.05.2024
(51) Int. Cl.: H01M 50/474, H01M 50/489

(54) **BATTERY CELL, BATTERY AND ELECTRIC DEVICE**

(71) Applicant: Contemporary Amperex Technology Co., Limited, Ningde, Fujian 352100 (CN)
(72) Inventor: HUANG, Biao, Ningde, Fujian 352100 (CN); GUO, Zhengshan, Ningde, Fujian 352100 (CN)
(74) Representative: Lorenz Seidler Gossel Part. mbB
(86) International application number: PCT/CN2024/096887
(87) International publication number: WO 2025/245890

(57) **Abstract**

A battery cell, a battery and an electric device. The battery cell comprises a casing component, a terminal post component and an electrode component, wherein the casing component comprises a mounting wall; the terminal post component is mounted on the mounting wall, and comprises a terminal post body; the electrode component comprises an active material coating portion, an electrically conductive portion and an insulating member; the electrically conductive portion is connected between the active material coating portion and the terminal post body; at least part of the insulating member is arranged between the end of the active material coating portion connected to the electrically conductive portion and the terminal post body; the insulating member is provided with an avoidance hole allowing the electrically conductive portion to pass therethrough; the electrically conductive portion is bent to form an open slot; and the insulating member extends into the open slot and abuts against at least part of a slot wall of the electrically conductive portion that forms the open slot. In the technical solutions of the embodiments of the present application, the bent part of the electrically conductive portion can be pressed and supported by using the insulating member, so that the bending shape of the electrically conductive portion is controllable; moreover, the risk of the battery cell short-circuiting can be reduced, thereby being conducive to improving the operational reliability of the battery cell.

## Description

### TECHNICAL FIELD

The present application relates to the technical field of batteries, and in particular, to a battery cell, a battery, and an electric device.

### BACKGROUND

Energy conservation and emission reduction are the keys to the sustainable development of the automobile industry. Electric vehicles have become an important part of the sustainable development of the automobile industry due to their energy-saving and environmental protection advantages. For electric vehicles, the battery technology is an important factor in their development.

In the related art, the tabs of the battery cell may be short-circuited, which affects the reliability of the battery cell and hinders further improvement in the reliability of the battery.

### SUMMARY

In view of the above problems, the present application provides a battery cell, a battery, and an electric device, which can reduce the risk of short circuits and improve the use reliability.

In a first aspect, the present application provides a battery cell. The battery cell includes a housing component, a post terminal component, and an electrode component. The housing component defines an accommodating cavity, and the housing component includes a mounting wall. The post terminal component is mounted on the mounting wall, and the post terminal component includes a post terminal body. The electrode component is accommodated in the accommodating cavity, and the electrode component includes an active substance-coated part, a conductive part, and an insulating member, where the conductive part is connected between the active substance-coated part and the post terminal body; at least part of the insulating member is disposed between an end part of the active substance-coated part connected to the conductive part and the post terminal body, and the insulating member is provided with a clearance hole for the conductive part to pass through. The conductive part is bent to form an open slot, and the insulating member extends into the open slot and abuts against at least part of a slot wall of the conductive part that is configured to form the open slot.

In the technical solutions of embodiments of the present application, by allowing the insulating member to extend into the open slot and abut against the at least part of the slot wall of the conductive part that forms the open slot, in one aspect, the insulating member can press against and support the bent part of the conductive part, such that the conductive part can maintain a preset bent shape, that is, enabling the bent shape of the conductive part to be controllable; in another aspect, the insulating member can be interposed between two oppositely disposed slot walls of the open slot, that is, between the slot wall of the open slot distal to the active substance-coated part and the active substance-coated part, which reduces the probability that the conductive part is inserted in a reverse manner into the interior of the active substance-coated part and the slot wall of the open slot proximal to the active substance-coated part due to redundancy, thereby reducing the risk of short circuits of the battery cell, and helping to improve the use reliability of the battery cell.

In some embodiments, the clearance hole includes a first clearance hole, and the insulating member includes: an insulating support, disposed at one end of the active substance-coated part proximal to the mounting wall and provided with the first clearance hole, where the insulating support at least partially extends into the open slot and abuts against the at least part of the slot wall of the conductive part that forms the open slot. In the above technical solutions, by disposing the insulating support at one end of the active substance-coated part proximal to the mounting wall, the conductive part can be shaped by using the insulating support, such that the conductive part can maintain a preset bent shape; moreover, the insulating support can also be interposed between the slot wall of the open slot distal to the active substance-coated part and the active substance-coated part, which reduces the probability that the conductive part is inserted in a reverse manner into the interior of the active substance-coated part and the slot wall of the open slot proximal to the active substance-coated part due to redundancy, thereby reducing the risk of short circuits of the battery cell, and helping to improve the use reliability of the battery cell.

In some embodiments, the insulating support includes: a support body, disposed at one end of the active substance-coated part proximal to the mounting wall, where the first clearance hole is formed in the support body, and the first clearance hole is provided with a first hole wall and a second hole wall disposed opposite to each other in a width direction of the post terminal body; and a first partition sheet, disposed on the first hole wall and connected to the support body, where the first partition sheet extends in a direction close to a center of the first clearance hole, extends into the open slot, and abuts against the at least part of the slot wall of the conductive part that forms the open slot. In the above technical solutions, by configuring the insulating support to include the support body and the first partition sheet described above, the bent part of the conductive part can be pressed and supported by using the first partition sheet, such that the conductive part can maintain a preset bent shape, that is, enabling the bent shape of the conductive part to be controllable; moreover, the first partition sheet can also be interposed between part of the conductive part and the active substance-coated part, which reduces the probability that the conductive part is inserted in a reverse manner into the interior of the active substance-coated part due to redundancy, thereby reducing the risk of short circuits of the battery cell, and helping to improve the use reliability of the battery cell.

In some embodiments, the first partition sheet extends horizontally from the first hole wall to the second hole wall, or extends obliquely in a direction close to the active substance-coated part.

In the above technical solutions, since the root parts of a plurality of tab plates of the conductive part adjacent to the active substance-coated part converge to form a structure with a certain slope, by configuring the first partition sheet as the above structure, after penetration of the conductive part is completed, the first partition sheet and the root parts of the conductive part adjacent to the active substance-coated part press against each other, such that the root parts of the conductive part adjacent to the active substance-coated part converge more closely. As a result, the conductive part can maintain a preset gathered shape and cannot be dispersed, thereby further reducing the probability that the conductive part is inserted in a reverse manner into the interior of the active substance-coated part. In addition, such an arrangement can reduce the internal space of the first clearance hole distal to the active substance-coated part occupied by the first partition sheet, and reserve a larger placement space for part of the conductive part distal to the active substance-coated part and even the post terminal component, which is conducive to reducing the dimension of the bent conductive part in the thickness direction of the mounting wall, thereby reducing the dimension of the battery cell in the thickness direction of the mounting wall.

In some embodiments, a thickness of the first partition sheet is less than a thickness of the support body, and the first partition sheet is separated from a hole wall of the first clearance hole on both sides thereof in a length direction of the post terminal body, such that the first partition sheet is deformable under pressing of the conductive part. In the above technical solutions, by configuring the first partition sheet to satisfy the above conditions, the first partition sheet can be deformed under the action of an external force (e.g., the pressing action of the conductive part). In this way, the first partition sheet can undergo conformal deformation based on the root parts of the conductive part adjacent to the active substance-coated part and press against the root parts of the conductive part adjacent to the active substance-coated part, such that the root parts of the conductive part adjacent to the active substance-coated part converge more closely. As a result, the conductive part can maintain a preset gathered shape and cannot be dispersed.

In some embodiments, in a length direction of the post terminal body, a dimension of the first partition sheet is greater than or equal to a dimension of the conductive part.

In the above technical solutions, by controlling the dimension of the first partition sheet in the length direction of the post terminal body to satisfy the above conditions, both sides of the first partition sheet in the length direction of the post terminal body can extend beyond both sides of the conductive part in the length direction of the post terminal body. In this way, the first partition sheet can completely partition part of the conductive part distal to the active substance-coated part from the active substance-coated part, which can greatly reduce the probability that the conductive part is inserted in a reverse manner into the interior of the active substance-coated part due to redundancy, further reduce the risk of short circuits of the battery cell, and also reduce the problem of local deformation caused by the first partition sheet pressing against part of the conductive part in the length direction of the post terminal body, thereby reducing the risk of failure and damage of the conductive part, and further improving the reliability and stability of the battery cell.

In some embodiments, the conductive part includes a convergence segment, a first extension segment, and a second extension segment arranged in an extension direction thereof, the convergence segment is connected to the active substance-coated part, the second extension segment is connected to the post terminal body, a first end of the first extension segment is connected to the convergence segment by a first bent part, and the other end of the first extension segment is connected to the second extension segment by a second bent part, such that the conductive part forms at least two open slots spaced apart from each other in a thickness direction of the mounting wall, and openings of the two open slots face different directions. The first partition sheet at least partially extends into the open slot between the first extension segment and the convergence segment, and at least abuts against the first extension segment. In the above technical solutions, the first partition sheet can partition the first extension segment and the second extension segment from the active substance-coated part, which reduces the probability that the first extension segment and the second extension segment are inserted in a reverse manner into the interior of the active substance-coated part and the convergence segment due to redundancy, and further reduces the risk of short circuits of the battery cell. By abutting the first partition sheet against the first extension segment, the first partition sheet can support the first extension segment, such that the conductive part can maintain a bent shape with at least two open slots.

In some embodiments, in the width direction of the post terminal body, a dimension of an overlapping region between the first partition sheet and the first extension segment is greater than half of a dimension of the first extension segment and less than the dimension of the first extension segment. In the above technical solutions, by limiting the dimension of the overlapping region between the first partition sheet and the first extension segment to satisfy the above range, the first partition sheet can effectively support the first extension segment, thereby improving the reliability of the conductive part in a bent shape with at least two open slots.

In some embodiments, the insulating support further includes: a second partition sheet, disposed on the second hole wall and connected to the support body, where the second partition sheet extends in a direction close to the center of the first clearance hole and is spaced apart from the first partition sheet, a perforation in communication with the first clearance hole is formed between the second partition sheet and the first partition sheet, the conductive part passes through the perforation, and the second partition sheet abuts against the conductive part. In the above technical solutions, by configuring the insulating support to include the first partition sheet and the second partition sheet, two opposite sides of the root part of the conductive part adjacent to the active substance-coated part can be pressed by using the first partition sheet and the second partition sheet, respectively. This further enables the root parts of the conductive part adjacent to the active substance-coated part to converge more closely, such that the conductive part can maintain a preset gathered shape and cannot be dispersed.

In some embodiments, a dimension of the perforation in the width direction of the post terminal body is greater than or equal to a thickness of the conductive part. By limiting the dimension of the perforation in the width direction of the post terminal body to satisfy the above conditions, the conductive part can smoothly pass through the perforation, which reduces the scratch on the conductive part caused by the first partition sheet and the second partition sheet, thereby reducing the risk of failure and damage of the conductive part, and improving the reliability and stability of the battery cell.

In some embodiments, in a length direction of the post terminal body, a dimension of the second partition sheet is greater than or equal to a dimension of the conductive part. In the above technical solutions, by controlling the dimension of the second partition sheet in the length direction of the post terminal body to satisfy the above conditions, both sides of the second partition sheet in the length direction of the post terminal body can extend beyond both sides of the conductive part in the length direction of the post terminal body. In this way, the problem of local deformation caused by the second partition sheet pressing against part of the conductive part in the length direction of the post terminal body can be reduced, thereby reducing the risk of failure and damage of the conductive part, and further improving the reliability and stability of the battery cell.

In some embodiments, the conductive part includes a convergence segment, a first extension segment, and a second extension segment arranged in an extension direction thereof, the convergence segment is connected to the active substance-coated part, the second extension segment is connected to the post terminal body, a first end of the first extension segment is connected to the convergence segment by a first bent part, and the other end of the first extension segment is connected to the second extension segment by a second bent part, such that the conductive part forms at least two open slots spaced apart from each other in a thickness direction of the mounting wall, and openings of the two open slots face different directions. The second partition sheet extends toward the open slot between the first extension segment and the second extension segment, and at least abuts against the convergence part. In the above technical solutions, the second partition sheet extends toward the open slot between the first extension segment and the second extension segment, such that the second extension segment is separated from the convergence segment, which can reduce the risk of short circuits of the battery cell; the second partition sheet abuts against the convergence segment, such that the second partition sheet can constrain the shape of the convergence segment, thereby enabling the root parts of the conductive part adjacent to the active substance-coated part to converge more closely, and thus enabling the conductive part to maintain a preset gathered shape and not to be dispersed.

In some embodiments, in the width direction of the post terminal body, a dimension of an overlapping region between the second partition sheet and the convergence segment is less than half of a dimension of the convergence segment. In the above technical solutions, by limiting the dimension of the overlapping region between the second partition sheet and the convergence segment to satisfy the above range, the convergence segment and the first extension segment of the conductive part can maintain a preset shape, thereby enabling the bent shape of the conductive part to be controllable.

In some embodiments, the clearance hole includes a second clearance hole, and the insulating member includes: an insulating film, where the insulating film completely wraps the active substance-coated part, the second clearance hole is formed in the insulating film at a position opposite to the mounting wall and is adapted to a thickness of the conductive part, a peripheral wall of the insulating film where the second clearance hole is formed is interposed between the insulating support and the active substance-coated part, and the conductive part sequentially passes through the second clearance hole and the first clearance hole to be connected to the post terminal body. In the above technical solutions, by adjusting the dimension of the second clearance hole to be adapted to the thickness of the conductive part, in one aspect, the second clearance hole allows the conductive part to pass through the insulating film, such that the conductive part can be electrically connected to the post terminal body of the post terminal component; in another aspect, in the case where the conductive part passes through the second clearance hole, the insulating film can also cover the position of the root parts of the plurality of tab plates of the conductive part adjacent to the active substance-coated part, thereby further achieving insulating protection on the active substance-coated part, reducing the risk of exposure of the active substance-coated part, and also achieving insulating protection on the root parts of the plurality of tab plates of the conductive part adjacent to the active substance-coated part. In this way, part of the conductive part passing through the second clearance hole is separated from the active substance-coated part and the root parts of the plurality of tab plates of the conductive part adjacent to the active substance-coated part, which reduces the probability that the conductive part is inserted in a reverse manner into the interior of the active substance-coated part and the root parts of the plurality of tab plates of the conductive part adjacent to the active substance-coated part due to redundancy, thereby reducing the risk of short circuits of the battery cell. In addition, the insulating film can also isolate the active substance-coated part from the mounting wall of the housing component, which reduces the probability that the active substance-coated part is in contact with the mounting wall of the housing component, thereby reducing the risk of corrosion of the mounting wall of the housing component due to exposure of the active substance-coated part, reducing the risk of failure of the active substance-coated part, and reducing the risk of liquid leakage, thus improving the reliability and stability of the battery cell.

In some embodiments, the insulating film is provided with a retaining piece in a connected manner in at least a partial region in a circumferential direction of the second clearance hole, and a hardness of the retaining piece is greater than a hardness of the insulating film. In the above technical solutions, by disposing the retaining piece on the insulating film in a connected manner, the rigidity of the insulating film can be increased, such that the root parts of the plurality of tab plates of the conductive part adjacent to the active substance-coated part can maintain a gathered shape, which reduces the probability that the conductive part is inserted in a reverse manner into the interior of the active substance-coated part and the root parts of the plurality of tab plates of the conductive part adjacent to the active substance-coated part due to redundancy, thereby reducing the risk of short circuits of the battery cell.

In some embodiments, the conductive part includes a convergence segment, a first extension segment, and a second extension segment arranged in an extension direction thereof, the convergence segment is connected to the active substance-coated part, the second extension segment is connected to the post terminal body, and two ends of the first extension segment are connected to the convergence segment and the second extension segment, respectively; the first extension segment passes through the clearance hole, and the convergence segment and the second extension segment are located on two sides of the insulating member, respectively. The insulating member can separate the convergence segment from the second extension segment, thereby reducing the probability that the second extension segment is inserted in a reverse manner into the convergence segment due to redundancy. The insulating member can also separate the second extension segment from the active substance-coated part, thereby reducing the probability that the second extension segment is inserted in a reverse manner into the interior of the active substance-coated part due to redundancy, and thus reducing the risk of short circuits of the battery cell and improving the reliability and stability of the battery cell.

In some embodiments, the conductive part includes a plurality of stacked tab plates, and root parts of the plurality of tab plates adjacent to the active substance-coated part converge to form the convergence segment in a triangular shape; the plurality of tab plates converge at a position of the convergence segment facing away from the active substance-coated part and are connected to form the first extension segment and the second extension segment. In the above technical solutions, the root parts of the plurality of tab plates adjacent to the active substance-coated part converge to form the convergence segment in a triangular shape, such that the plurality of tab plates can be stacked to form an overall structure that is not easily loosened, thereby facilitating the connection between the conductive part and the post terminal body.

In some embodiments, a first end of the first extension segment is connected to the convergence segment by a first bent part and a first open slot is defined therebetween, and a second end of the first extension segment is connected to the second extension segment by a second bent part and a second open slot is defined therebetween; openings of the first open slot and the second open slot face different directions, and the two open slots are spaced apart from each other in a thickness direction of the mounting wall; the insulating member at least partially extends into the first open slot to be located between the first extension segment and the active substance-coated part. The insulating member can isolate one side of the first extension segment facing the active substance-coated part from the active substance-coated part, which reduces the probability that the first extension segment of the conductive part is inserted in a reverse manner into the interior of the active substance-coated part and the convergence segment due to redundancy, thereby reducing the risk of short circuits of the battery cell, and helping to improve the use reliability of the battery cell.

In some embodiments, the insulating member at least partially extends in a direction close to the second open slot to be located between the second extension segment and the active substance-coated part. The insulating member may be interposed between the second extension segment and one side of the first extension segment facing away from the active substance-coated part, or between the second extension segment and one side of the convergence segment facing away from the active substance-coated part, such that the insulating member can be interposed between the second extension segment and the active substance-coated part, which further reduces the probability that the conductive part is inserted in a reverse manner into the interior of the active substance-coated part, the first extension segment, or the convergence segment due to redundancy, thereby reducing the risk of short circuits of the battery cell, and helping to improve the use reliability of the battery cell.

In some embodiments, the convergence segment, the first extension segment, and the second extension segment define a third open slot, and the insulating member at least partially extends into the third open slot to be interposed between the second extension segment and the active substance-coated part. The insulating member is interposed between the second extension segment and the active substance-coated part, which can reduce the probability that the second extension segment is inserted in a reverse manner into the interior of the active substance-coated part and the convergence segment due to redundancy, thereby reducing the risk of short circuits of the battery cell, and helping to improve the use reliability of the battery cell.

In some embodiments, the conductive part includes a tab, the tab includes a plurality of stacked tab plates, and the convergence segment, the first extension segment, and the second extension segment are formed by different parts of the tab. The tab is directly connected to the post terminal body, so the conductive member can be omitted, and the step of connecting the conductive member to the tab is omitted, which is conducive to improving the production efficiency of the battery cell.

In some embodiments, the conductive part includes: a tab, connected to one end of the active substance-coated part proximal to the mounting wall, where the tab includes a plurality of stacked tab plates; and a conductive member, connected between the tab and the post terminal body, where part of the conductive member forms the second extension segment, and another part forms at least part of the first extension segment; at least part of the tab forms the convergence segment. By indirectly connecting the tab to the post terminal body by the conductive member, the length of the tab can be shortened, and problems such as wrinkling, bending, and fracture of the tab plate can be alleviated. Moreover, by flexibly designing the shape and material of the conductive member, the difficulty in connecting to the post terminal body can be reduced, thereby improving the ease of connection between the conductive member and the post terminal body. In addition, the operation of passing the tab through the perforation, the connection operation between the tab and the post terminal component (this operation may be omitted), and the connection operation between the post terminal component and the housing component are all less likely to cause cracking at the connection position between the active substance-coated part and the conductive part, thereby improving the reliability of the battery cell.

In some embodiments, the conductive member includes an adapter piece, and the adapter piece includes a plurality of stacked and connected adapter foils, such that the adapter piece is deformable. Due to the small thickness of the plurality of adapter foils, the plurality of adapter foils are equivalent to multi-layer thin plates. Compared with an integrally formed adapter piece, an adapter piece formed by the plurality of adapter foils is easier to bend, such that the adapter piece and the tab can be bent as required, thereby enabling the conductive part to form a preset bent shape, and thus satisfying the design requirements.

In some embodiments, the post terminal component further includes an adapter structure and an insulating structure, the adapter structure surrounds the post terminal body and is connected to the mounting wall, and the insulating structure is fitted between the adapter structure and the post terminal body in an insulating and sealing manner. In the above technical solutions, the post terminal component features a simple structure and is easy to manufacture. In addition, since two parts, i.e., the post terminal body and the adapter structure, are included, the shape and dimension of the post terminal body and the shape and dimension of the adapter structure can be separately designed based on different factors to flexibly adapt to the connection requirements with the housing component and the electrode component in different forms, thereby expanding the application range of the post terminal component.

In some embodiments, the adapter structure is formed as an elongated strip extending in a length direction of the mounting wall, and a contour shape of the post terminal body matches a contour shape of the adapter structure; or the adapter structure is formed as an elongated strip extending in a length direction of the mounting wall, and the post terminal body is disposed at a central position of adapter structure in the length direction and is circular. In the above technical solutions, when the contour shape of the post terminal body is formed into an elongated strip matching the contour shape of the adapter structure, the post terminal body has a large area, which is conducive to increasing the connection area between the conductive part and the post terminal body, thereby improving the conductive performance. When the post terminal body is disposed at the central position of the elongated strip-shaped adapter structure in the length direction and is circular, it is conducive to reducing the connection area between the post terminal body and the adapter structure and improving the force uniformity at the joint between the post terminal body and the adapter structure, thereby improving the connection reliability between the post terminal body and the adapter structure.

In some embodiments, the insulating structure includes a sealing structural member, and the sealing structural member is disposed around a peripheral side of the adapter structure facing the post terminal body and is at least partially clamped between the adapter structure and the post terminal body in an inner-outer direction of the mounting wall. In the above technical solutions, by clamping at least part of the sealing structural member between the adapter structure and the post terminal body in the inner-outer direction of the mounting wall, axial sealing between the adapter structure and the post terminal body is achieved. By using the axial sealing, a relatively reliable sealing effect can be achieved, thereby alleviating the problem of leakage at the mating position between the adapter structure and the post terminal body. In addition, in the embodiments of the present application, by integrating the axial sealing into the post terminal component, the acting force received by the mounting wall in the axial direction can be reduced. In addition, by disposing the sealing structural member around the inner ring of the adapter structure, the sealing structural member can be proximal to the mating position between the adapter structure and the post terminal body, which is conducive to sealing the mating position between the adapter structure and the post terminal body in a shorter path, thereby improving the sealing reliability. Moreover, it is conducive to reducing the dimension of the sealing structural member and reducing the sealing area, facilitating compression and sealing, reducing sealing failure, and improving the sealing effect.

In some embodiments, the mounting wall is provided with a mounting hole, the post terminal component covers the mounting hole, and an edge of the adapter structure overlaps one side of the mounting wall in a wall thickness direction. In the above technical solutions, the assembly of the adapter structure and the mounting wall is facilitated, and the production efficiency is improved. When the edge of the adapter structure overlaps one side of the mounting wall facing away from the electrode component, the assembly and connection between the post terminal component and the mounting wall are facilitated, which is conducive to improving the connection reliability between the post terminal component and the mounting wall. When the edge of the adapter structure overlaps one side of the mounting wall facing the electrode component, the electrode component and the post terminal component can be mounted into the housing body together, and the post terminal component does not need to pass through the mounting hole, thereby reducing the operation steps and reducing the operation difficulty.

In some embodiments, an edge of the adapter structure overlaps one side of the mounting wall facing away from the electrode component, the mounting wall is provided with a first recess disposed around the mounting hole, the first recess is open in a direction facing away from the electrode component, and the edge of the adapter structure is provided with a flange part embedded in the first recess. In the above technical solutions, it is convenient to support and position the connection between the adapter structure and the mounting wall, which is conducive to the welding connection between the two from the outer side of the mounting wall.

In some embodiments, an edge of the adapter structure overlaps one side of the mounting wall facing away from the electrode component, the mounting hole is an elongated strip-shaped hole, and the post terminal component is formed as an elongated strip-shaped structure matching a shape of the mounting hole. In the above technical solutions, the space required for the flipping motion of the post terminal component is small, which can reduce the space required for the flipping of the post terminal component, thereby helping to shorten the length of the conductive part, save materials, and reduce costs. In addition, the redundancy of the conductive part can be reduced, and the space of the accommodating cavity occupied by the conductive part can be reduced, which is conducive to improving the energy density of the battery cell.

In some embodiments, an edge of the adapter structure overlaps one side of the mounting wall facing the electrode component, the edge of the adapter structure is provided with a second recess that is open in a direction facing away from the electrode component, the mounting wall includes a lap joint part protruding into the mounting hole, and the lap joint part is embedded in the second recess. In the above technical solutions, it is convenient to support and position the connection between the post terminal component and the mounting wall, which is conducive to the welding connection between the two from the outer side of the mounting wall.

In some embodiments, the post terminal component defines, in an enclosing manner, a first accommodating groove that is, relative to the mounting wall, recessed in a direction facing away from the electrode component and open in a direction facing the electrode component, the electrode component is connected to the post terminal component by the conductive part, and at least part of the conductive part is accommodated in the first accommodating groove and connected to the post terminal body. In the above technical solutions, by providing the first accommodating groove to accommodate the conductive part, the space of the accommodating cavity occupied by the conductive part can be reduced, such that the accommodating cavity has a larger space to accommodate the active substance-coated part, which is conducive to increasing the volume of the active substance-coated part, thereby increasing the energy density of the battery cell. In addition, since the first accommodating groove is open in the direction facing the electrode component, the conductive part can easily extend into the first accommodating groove, thereby reducing the operation difficulty.

In some embodiments, the post terminal body is provided with a second accommodating groove, the second accommodating groove is open facing away from the accommodating cavity, a groove bottom wall of the second accommodating groove is provided with a through hole, and the conductive part passes through the through hole and is at least partially accommodated in the second accommodating groove. In the above technical solutions, in one aspect, the arrangement of the second accommodating groove in the post terminal body can reduce the weight of the post terminal body to a certain extent, so as to improve the gravimetric energy density of the battery cell and the battery. In another aspect, since the groove opening of the second accommodating groove is formed in the outer end surface of the post terminal body, and the outer end surface of the post terminal body is the surface of the post terminal body on the side distal to the active substance-coated part, the second accommodating groove can be open in a direction facing away from the active substance-coated part. In this way, when at least part of the conductive part is accommodated in the second accommodating groove, the receiving or sorting of the conductive part and operations on the electrical connection between the conductive part and the post terminal body can be easily achieved by means of the groove opening of the second accommodating groove, thereby reducing difficulties in producing the battery cell and improving the production efficiency of the battery cell.

In some embodiments, the housing component includes a housing body provided with an opening and a housing cover, and the housing cover covers the opening; the mounting wall includes a wall body of the housing body disposed opposite to the opening, and/or the mounting wall includes the housing cover. In the above technical solutions, the flexible arrangement of the post terminal component can be achieved.

In a second aspect, the present application provides a battery. The battery includes the battery cell according to the above embodiments.

In the technical solutions of the embodiments of the present application, by adopting the battery cell described above, the risk of short circuits of the battery cell can be reduced, which is conducive to improving the use reliability of the battery cell, thereby improving the use reliability of the battery.

In some embodiments, the battery includes a case, a plurality of battery cells are provided and accommodated in the case, a bottom of the case is a case bottom plate, and the post terminal component is disposed on one side of the housing component facing the case bottom plate or on one side of the housing component facing away from the case bottom plate. In the above technical solutions, when the post terminal component of the battery cell is disposed on the side of the housing component facing the case bottom plate, the battery cell is in an inverted state, and the products of pressure relief are ejected in a direction facing away from the passenger compartment, which is safer; when the post terminal component of the battery cell is disposed on one side of the housing component proximal to the case bottom plate, the battery cell is in an upright state, and the electrolytic solution is not prone to leakage. Therefore, the flexible arrangement of orientations of the battery cell and the case can be achieved.

In a third aspect, the present application provides an electric device. The electric device includes the battery according to the above embodiments, or includes the battery according to the above embodiments.

In the technical solutions of the embodiments of the present application, by adopting the battery cell or the battery described above, the use reliability of the electric device can be improved.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred implementations and shall not be construed as limiting the present application. Furthermore, the same reference numerals in all the drawings denote identical components. In the drawings:
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is a structural cross-sectional view of a battery cell according to some embodiments of the present application;
FIG. 5 is a partially enlarged view of the battery cell shown in FIG. 4;
FIG. 6 is a schematic structural diagram of an insulating support of a battery cell according to some embodiments of the present application;
FIG. 7 is an assembly diagram of an insulating support and an electrode component of a battery cell according to some embodiments of the present application;
FIG. 8 is another assembly diagram of an insulating support and an electrode component of a battery cell according to some embodiments of the present application;
FIG. 9 is a schematic structural diagram of an insulating support of a battery cell according to some embodiments of the present application;
FIG. 10 is a structural cross-sectional view of the insulating support of the battery cell shown in FIG. 9;
FIG. 11 is an assembly diagram of an insulating support and an electrode component of a battery cell according to some embodiments of the present application;
FIG. 12 is another assembly diagram of an insulating support and an electrode component of a battery cell according to some embodiments of the present application;
FIG. 13 is an assembly diagram of an insulating support and a housing component of the battery cell shown in FIG. 9;
FIG. 14 is a schematic structural diagram of an electrode component of a battery cell being mounted into a housing component with an insulating support in an undeformed state according to some embodiments of the present application;
FIG. 15 is a schematic structural diagram of an electrode component of a battery cell being mounted into a housing component with an insulating support in a deformed state according to some embodiments of the present application;
FIG. 16 is a partial schematic structural diagram of connection between a conductive part and a post terminal component of the battery cell shown in FIG. 15;
FIG. 17 is a partial schematic structural diagram of connection between a post terminal component and a housing component of the battery cell shown in FIG. 15;
FIG. 18 is a schematic structural diagram of an electrode component and an insulating film of a battery cell according to some embodiments of the present application;
FIG. 19 is a schematic structural diagram of an electrode component and an insulating film of a battery cell according to some other embodiments of the present application;
FIG. 20 is a schematic structural diagram of an insulating film of the battery cell shown in FIG. 19;
FIG. 21 is a schematic structural diagram of an electrode component and an insulating film of a battery cell according to yet some other embodiments of the present application;
FIG. 22 is a top view of the structure shown in FIG. 21;
FIG. 23 is a structural cross-sectional view of the electrode component and the insulating film shown in FIG. 21;
FIG. 24 is a schematic structural diagram of an electrode component and an insulating film of a battery cell according to yet some other embodiments of the present application;
FIG. 25 is a top view of the structure shown in FIG. 24;
FIG. 26 is a structural cross-sectional view of the electrode component and the insulating film shown in FIG. 24;
FIG. 27 is a partial schematic structural diagram of a conductive part of the battery cell shown in FIG. 3 in a straightened state;
FIG. 28 is a partial schematic structural diagram of connection between a conductive part and a post terminal component of the battery cell shown in FIG. 3;
FIG. 29 is a partial schematic structural diagram of connection between a post terminal component and a housing component of the battery cell shown in FIG. 3;
FIG. 30 is a structural cross-sectional view of a battery cell according to some other embodiments of the present application;
FIG. 31 is a partially enlarged view of the battery cell shown in FIG. 30;
FIG. 32 is a partial schematic structural diagram of a conductive part of the battery cell shown in FIG. 30 during shaping;
FIG. 33 is an exploded view of a structure of a conductive part of the battery cell shown in FIG. 30;
FIG. 34 is a partial schematic structural diagram of a conductive part of the battery cell shown in FIG. 30 in a straightened state;
FIG. 35 is a schematic structural diagram of an electrode component of the battery cell shown in FIG. 30 being mounted into a housing component;
FIG. 36 is a partial schematic structural diagram of connection between a conductive part and a post terminal component of the battery cell shown in FIG. 30;
FIG. 37 is a partial schematic structural diagram of connection between a post terminal component and a housing component of the battery cell shown in FIG. 30;
FIG. 38 is a schematic structural diagram of a battery cell according to some other embodiments of the present application;
FIG. 39 is a schematic diagram of a post terminal component according to some embodiments of the present application;
FIG. 40 is a top view of the post terminal component shown in FIG. 39;
FIG. 41 is a view in a B direction shown in FIG. 40;
FIG. 42 is a cross-sectional view along line C-C in FIG. 40;
FIG. 43 is a partial cross-sectional view of a battery cell according to some embodiments of the present application;
FIG. 44 is a partial cross-sectional view of a battery cell according to some embodiments of the present application;
FIG. 45 is a partial cross-sectional view of a battery cell according to some embodiments of the present application;
FIG. 46 is a cross-sectional view of a battery cell according to some embodiments of the present application;
FIG. 47 is a cross-sectional view of a battery cell according to some embodiments of the present application;
FIG. 48 is a cross-sectional view of a battery cell according to some embodiments of the present application;
FIG. 49 is a partial cross-sectional view of a battery cell according to some embodiments of the present application, where a post terminal component is in a state before covering a mounting wall;
FIG. 50 is a state diagram of the post terminal component shown in FIG. 49 after covering a mounting wall;
FIG. 51 is an exploded view of a partial configuration of a battery cell according to some embodiments of the present application;
FIG. 52 is a partial cross-sectional view of a battery cell according to some embodiments of the present application, where a post terminal component is in a state before covering a mounting wall;
FIG. 53 is a state diagram of the post terminal component shown in FIG. 52 after covering a mounting wall;
FIG. 54 is a structural cross-sectional view of a battery cell according to yet some other embodiments of the present application;
FIG. 55 is a partially enlarged view of the battery cell shown in FIG. 54;
FIG. 56 is a structural cross-sectional view of a battery cell according to some other embodiments of the present application;
FIG. 57 is a partially enlarged view of the battery cell shown in FIG. 56;
FIG. 58 is a structural cross-sectional view of a battery cell according to still some other embodiments of the present application;
FIG. 59 is a partially enlarged view of the battery cell shown in FIG. 58;
FIG. 60 is a schematic structural diagram of a battery cell according to yet some other embodiments of the present application;
FIG. 61 is an exploded view of a structure of the battery cell shown in FIG. 60;
FIG. 62 is a structural cross-sectional view of the battery cell shown in FIG. 60;
FIG. 63 is a partially enlarged view of the battery cell shown in FIG. 62;
FIG. 64 is an exploded view of a manufacturing process of a battery cell according to an embodiment of the present application;
FIG. 65 is an exploded view of a manufacturing process of a battery cell according to an embodiment of the present application;
FIG. 66 is an exploded view of a manufacturing process of a battery cell according to an embodiment of the present application;
FIG. 67 is an exploded view of a manufacturing process of a battery cell according to an embodiment of the present application; and
FIG. 68 is an exploded view of a manufacturing process of a battery cell according to an embodiment of the present application.

Reference numerals in the detailed description are as follows:
vehicle 1000;
battery 100; controller 200; motor 300;
case 101; first case part 1011; second case part 1012; case bottom plate 1013;
battery cell 102; first direction F1; second direction F2; third direction F3;
fourth direction F4; fifth direction F5;
housing component 1; housing body 11; mounting wall 111; first recess 1111; lap joint part 1112; mounting hole 112; opening 113; peripheral wall 114; housing cover 12; accommodating cavity 13; seal ring 14; support plate 15;
post terminal component 2; first accommodating groove 201; second accommodating groove 202; post terminal body 21; through hole 210; inner end surface 211; peripheral edge part 212; outer end surface 213; penetration part 214; riveted part 2141; inner limiting part 215; outer limiting part 216; first post terminal member 21a; second post terminal member 21b; mating hole 21b1; adapter structure 22; adapter structure inner end surface 220; surrounding region 2201; flange part 22a; second recess 22b; first adapter ring 221; second adapter ring 222; stopper ring part 2221; third adapter ring 223; inner extending part 2231; outer extending part 2232; first insulating frame 224; second insulating frame 225; fourth adapter ring 227; mating ring part 2271; third insulating frame 228; insulating structure 23; sealing structural member 231; axial side part 231a; first insulating member 232; second insulating member 234;
electrode component 3; electrode assembly 31; tab plate 311; gathering part 313; active substance-coated part 32; conductive part 33; convergence segment 331; first extension segment 332; first bent part 3320; second extension segment 333; second bent part 3330; first connecting part 3331; second connecting part 3332; third connecting part 3333; open slot 334; first open slot 3341; second open slot 3342; third open slot 3343; tab 335; tab end part 3351; conductive member 336; clamping part 3360; slot 3361; first connecting segment 3362; second connecting segment 3363; first conductive segment 3365; second conductive segment 3366; third conductive segment 3367;
pressure relief device 6;
insulating film 7; second clearance hole 701; tear structure 702; first tear part 7021; second tear part 7022; rupture structure 703; main insulating part 71; main body part 711; first insulating part 72; second insulating part 73;
retaining piece 8;
insulating support 9; first clearance hole 901; first hole wall 9011; second hole wall 9012; perforation 902; support body 91; first partition sheet 92; second partition sheet 93.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

In the related art, the tabs of the battery cell may be short-circuited, which affects the reliability of the battery cell and hinders further improvement in the reliability of the battery.

To improve the reliability of the battery cell, in the embodiments of the present application, an insulating member extends into an open slot formed by the bending of a conductive part and abuts against at least part of a slot wall of the conductive part that forms the open slot, which can enable the conductive part to maintain a preset bent shape, cause the bent shape of the conductive part to be controllable, and reduce the probability that the conductive part is inserted in a reverse manner into the interior of an active substance-coated part and a slot wall of the open slot proximal to the active substance-coated part due to redundancy, thereby reducing the risk of short circuits of the battery cell, and helping to improve the use reliability of the battery cell.

The battery cell disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

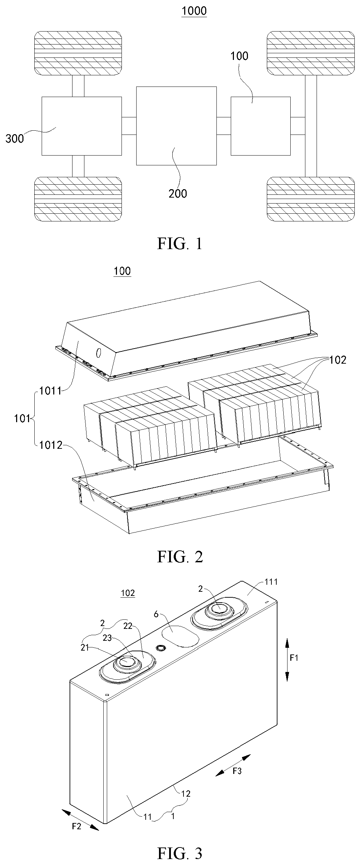

Referring to FIG. 1, FIG. 1 is a schematic structural diagram of a vehicle 1000 according to some embodiments of the present application. A vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case 101 and battery cells 102. The battery cells 102 are accommodated in the case 101. The case 101 is configured to provide an accommodating space for the battery cell 102, and the case 101 may be of various structures. In some embodiments, the case 101 may include a first case part 1011 and a second case part 1012. The first case part 1011 and the second case part 1012 are mutually lidded, and the first case part 1011 and the second case part 1012 jointly define an accommodating space for accommodating the battery cell 102. The second case part 1012 may be of a hollow structure with one end open, the first case part 1011 may be of a plate-like structure, and the first case part 1011 covers an open side of the second case part 1012, such that the first case part 1011 and the second case part 1012 jointly define an accommodating space. The first case part 1011 and the second case part 1012 may also each be of a hollow structure with one side open, and an open side of the first case part 1011 covers an open side of the second case part 1012. Certainly, the case 101 formed by the first case part 1011 and the second case part 1012 may be in various shapes, such as a cylinder and a rectangular parallelepiped.

In the battery 100, a plurality of battery cells 102 may be provided, and the plurality of battery cells 102 may be connected in series, in parallel, or in series-parallel. The series-parallel connection means that both series connection and parallel connection are present for the connection among the plurality of battery cells 102. The plurality of battery cells 102 may be directly connected in series, in parallel, or in series-parallel, and then the whole formed by the plurality of battery cells 102 is accommodated in the case 101. Certainly, the case may also be that in the battery 100, a plurality of battery cells 102 are first connected in series, in parallel, or in series-parallel to form battery 100 modules, and then the plurality of battery 100 modules are connected in series, in parallel, or in series-parallel to form a whole and accommodated in the case 101. The battery 100 may further include other structures. For example, the battery 100 may further include a busbar component for achieving an electrical connection among the plurality of battery cells 102.

Each battery cell 102 may be a secondary battery or a primary battery; it may also be a lithium-sulfur battery, a sodium-ion battery, a magnesium-ion battery, or a solid-state battery, but is not limited thereto. The battery cell 102 may be cylindrical, flat, rectangular parallelepiped-shaped, or in other shapes.

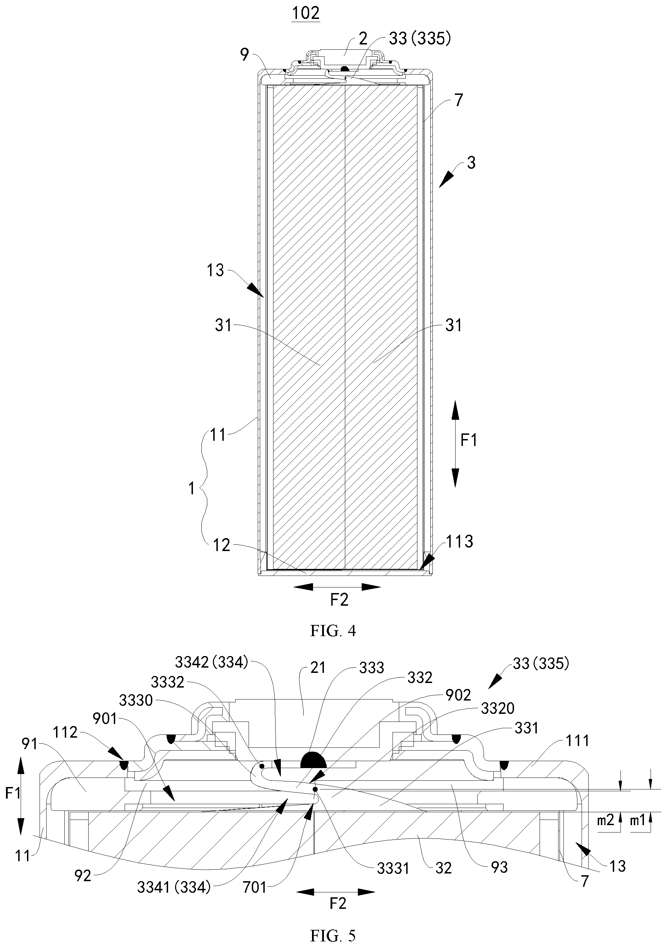

Referring to FIGs. 3 and 4, FIG. 3 is a schematic structural diagram of a battery cell 102 according to some embodiments of the present application; FIG. 4 is a structural cross-sectional view of a battery cell 102 according to some embodiments of the present application. The battery cell 102 refers to the smallest unit forming a battery 100. As shown in FIGs. 3 and 4, the battery cell 102 includes a housing component 1, a post terminal component 2, an electrode component 3, an electrolytic solution, and other functional components. The housing component 1 includes a housing cover 12 and a housing body 11.

The housing cover 12 refers to a component that covers the opening 113 of the housing body 11 to isolate the internal environment of the battery cell 102 from the external environment. Without limitation, the shape of the housing cover 12 may be adapted to the shape of the housing body 11 to match the housing body 11. Optionally, the housing cover 12 may be made of a material with a certain hardness and strength (for example, aluminum alloy), such that the housing cover 12 is not easily deformed when being squeezed or collided. This provides the battery cell 102 with higher structural strength and improved reliability. Functional components such as the post terminal component 2 may be disposed on the housing cover 12. The post terminal component 2 may be configured to be electrically connected to the electrode component 3 to output or input the electric energy of the battery cell 102. In some embodiments, the housing cover 12 may also be provided with a pressure relief mechanism for releasing the internal pressure when the internal pressure or temperature of the battery cell 102 reaches a threshold. The housing cover 12 may also be made of a variety of materials, such as copper, iron, aluminum, stainless steel, an aluminum alloy, plastic, etc., which is not specified in the embodiments of the present application. In some embodiments, an insulating member may be disposed on the inner side of the housing cover 12. The insulating member may be configured to isolate an electrical connection component in the housing body 11 from the housing cover 12 to reduce the risk of short circuits. Illustratively, the insulating member may be made of plastic, rubber, or the like.

The housing body 11 is an assembly configured to form the internal environment of the battery cell 102 in combination with the housing cover 12. The formed internal environment may be used to accommodate the electrode component 3, the electrolytic solution, and other components. The housing body 11 and the housing cover 12 may be independent components. An opening 113 may be formed in the housing body 11, and at the opening 113, the housing cover 12 covers the opening 113 to form the internal environment of the battery cell 102. Without limitation, the housing cover 12 and the housing body 11 may be integrated. Specifically, the housing cover 12 and the housing body 11 may form a common connecting surface before other components are placed in the housing body, and when the interior of the housing body 11 needs to be encapsulated, the housing cover 12 is lidded onto the housing body 11. The housing body 11 may be in various shapes and sizes, such as a rectangular parallelepiped, a cylinder, and a hexagonal prism. Specifically, the shape of the housing body 11 may be determined based on the specific shape and dimension of the electrode component 3. The housing body 11 may be made of a variety of materials, such as copper, iron, aluminum, stainless steel, an aluminum alloy, plastic, etc., which is not specified in the embodiments of the present application.

The electrode component 3 includes an electrode assembly 31, and the electrode assembly 31 is a component where the electrochemical reaction occurs in the battery cell 102. One or more electrode assemblies 31 may be accommodated in the housing body 11. The electrode assembly 31 is mainly formed by winding or stacking a positive electrode plate and a negative electrode plate, and a separator is generally disposed between the positive electrode plate and the negative electrode plate. The parts of the positive electrode plate and the negative electrode plate that contain the active substance constitute the main body part of the electrode assembly 31, and the parts of the positive electrode plate and the negative electrode plate that do not contain the active substance each constitute a tab 335. The positive electrode tab 335 and the negative electrode tab 335 may be located together at one end of the main body part or separately at two ends of the main body part. During the charging and discharging of the battery 100, the positive electrode active substance and the negative electrode active substance react with the electrolytic solution, and the tabs 335 are connected to the post terminal component 2 to form a current circuit. In a solid-state battery, the electrolytic solution may be a solid-state electrolyte layer located between the positive electrode plate and the negative electrode plate, and the above separator may be omitted.

According to some embodiments of the present application, referring to FIG. 4 and further referring to FIG. 5, FIG. 5 is a partially enlarged view of the battery cell 102 shown in FIG. 4. The housing component 1 defines an accommodating cavity 13, the housing component 1 includes a mounting wall 111, the post terminal component 2 is mounted on the mounting wall 111, and the post terminal component 2 includes a post terminal body 21.

The mounting wall 111 is part of the housing wall of the housing of the housing component 1, which may serve as a mounting carrier for the post terminal component 2. The mounting wall 111 may be part of the housing wall of the housing body 11, or may be the housing cover 12 of the housing, or may include part of the housing wall of the housing body 11 and the housing cover 12.

Referring to FIGs. 4 and 5 again, the battery cell 102 further includes an electrode component 3. The electrode component 3 is accommodated in the accommodating cavity 13, the electrode component 3 includes an active substance-coated part 32, a conductive part 33, and an insulating member, and the conductive part 33 is connected between the active substance-coated part 32 and the post terminal body 21 to output or input the electric energy of the battery cell 102.

At least part of the insulating member is disposed between an end part of the active substance-coated part 32 connected to the conductive part 33 and the post terminal body 21; that is, the at least part of the insulating member is disposed between the active substance-coated part 32 and the mounting wall 111. The insulating member is provided with a clearance hole, and the clearance hole can allow the conductive part 33 to pass through, such that the conductive part 33 can pass through the insulating member to be electrically connected to the post terminal body 21 of the post terminal component 2.

As shown in FIGs. 3 and 4, in the figure, the height direction of the active substance-coated part 32 is a first direction F1, the thickness direction of the active substance-coated part 32 is a second direction F2, and the width direction of the active substance-coated part 32 is a third direction F3. The active substance-coated part 32 is provided with a first end and a second end disposed opposite to each other in the height direction thereof.

If the conductive part 33 is disposed at the first end of the active substance-coated part 32, a wall body of the housing component 1 disposed opposite to the first end of the active substance-coated part 32 is the mounting wall 111, and at least part of the insulating member is disposed between the first end of the active substance-coated part 32 and the post terminal body 21. If the conductive part 33 is disposed at the second end of the active substance-coated part 32, a wall body of the housing component 1 disposed opposite to the second end of the active substance-coated part 32 is the mounting wall 111, and at least part of the insulating member is disposed between the second end of the active substance-coated part 32 and the post terminal body 21. If the conductive part 33 is disposed at the first end and the second end of the active substance-coated part 32, wall bodies of the housing component 1 disposed opposite to the first end and the second end of the active substance-coated part 32 are both mounting walls 111, at least part of the insulating member is disposed between the first end of the active substance-coated part 32 and one of the post terminal bodies 21, and at least another part of the insulating member is disposed between the second end of the active substance-coated part 32 and the other of the post terminal bodies 21.

The insulating member may be configured to isolate the active substance-coated part 32 from the mounting wall 111 of the housing component 1, which reduces the probability that the active substance-coated part 32 is in contact with the mounting wall 111 of the housing component 1, thereby reducing the risk of corrosion of the mounting wall 111 of the housing component 1 due to exposure of the active substance-coated part 32, reducing the risk of failure of the active substance-coated part 32, and reducing the risk of liquid leakage, thus improving the reliability and stability of the battery cell 102.

As shown in FIG. 5, the conductive part 33 is bent to form an open slot 334, the insulating member extends into the open slot 334, and the insulating member abuts against at least part of a slot wall of the conductive part 33 that is configured to form the open slot 334.

For example, the insulating member may abut against a slot wall of the open slot 334 proximal to the active substance-coated part 32 to prevent the slot wall of the open slot 334 proximal to the active substance-coated part 32 from deforming in a direction away from the active substance-coated part 32. For another example, the insulating member may abut against a slot wall of the open slot 334 distal to the active substance-coated part 32 to prevent the slot wall of the open slot 334 distal to the active substance-coated part 32 from deforming in a direction close to the active substance-coated part 32; that is, the insulating member can press against and support the bent part of the conductive part 33, such that the conductive part 33 can maintain a preset bent shape, that is, enabling the bent shape of the conductive part 33 to be controllable.

In the technical solutions of the embodiments of the present application, by allowing the insulating member to extend into the open slot 334 and abut against the at least part of the slot wall of the conductive part 33 that forms the open slot 334, in one aspect, the insulating member can press against and support the bent part of the conductive part 33, such that the conductive part 33 can maintain a preset bent shape, that is, enabling the bent shape of the conductive part 33 to be controllable; in another aspect, the insulating member can be interposed between two oppositely disposed slot walls of the open slot 334, that is, between the slot wall of the open slot 334 distal to the active substance-coated part 32 and the active substance-coated part 32, which reduces the probability that the conductive part 33 is inserted in a reverse manner into the interior of the active substance-coated part 32 and the slot wall of the open slot 334 proximal to the active substance-coated part 32 due to redundancy, thereby reducing the risk of short circuits of the battery cell 102, and helping to improve the use reliability of the battery cell 102.

In some embodiments, one end of the conductive part 33 is directly connected to the active substance-coated part 32, and the other end is directly connected to the post terminal body 21. That is, the active substance-coated part 32 is connected to the post terminal body 21 by the conductive part 33 to form electrical conduction. With such an arrangement, the structure of the battery cell 102 can be simplified, and the production efficiency of the battery cell 102 can be improved.

Illustratively, the battery 100 includes a busbar component located outside the battery cell 102, and the post terminal body 21 is connected to the busbar component to form electrical conduction, such that a plurality of battery cells 102 can be connected by the busbar component.

Illustratively, when the post terminal component 2 is a negative electrode, the post terminal body 21 may be a copper-aluminum composite member. The copper-aluminum composite member may include an aluminum material part and a copper material part. The aluminum material part is disposed on one side of the copper material part facing away from the active substance-coated part 32, such that the aluminum material part easily forms a reliable connection to the busbar component made of aluminum, and the copper material part is easily connected to a tab plate 311 made of copper foil of the negative electrode. When the post terminal component 2 is a positive electrode, the post terminal body 21 may be an aluminum material member; the aluminum material member easily forms a reliable connection to the busbar component made of aluminum, and the aluminum material member is also easily connected to a tab plate 311 made of aluminum foil of the positive electrode.

The connection manner between the conductive part 33 and the post terminal component 2 is not limited, and may include, for example, but is not limited to, ultrasonic welding, a combination of ultrasonic pre-welding and laser welding, resistance welding, pressure fusion welding, brazing, adhesive bonding, and the like.

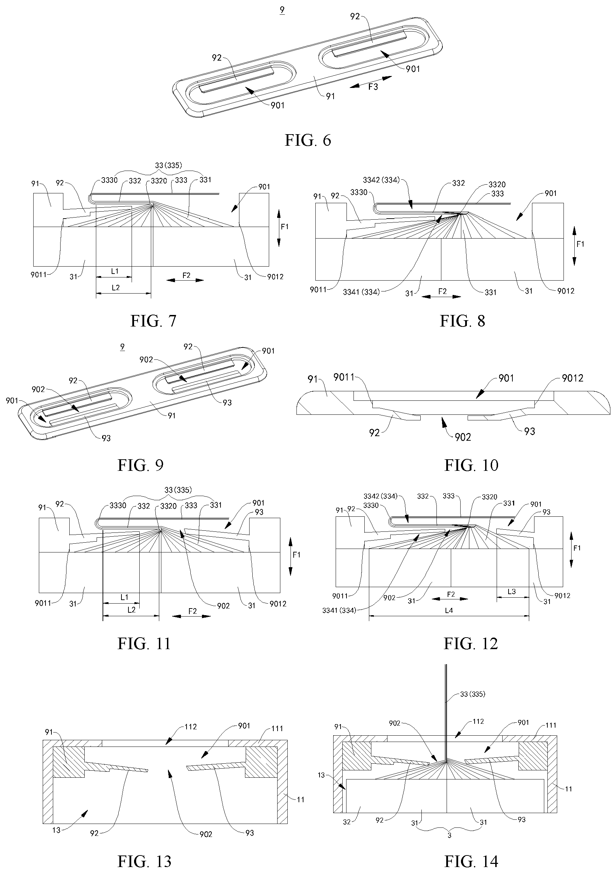

Referring to FIGs. 4 and 5, and further referring to FIGs. 6 to 8, FIG. 6 is a schematic structural diagram of an insulating support 9 of a battery cell 102 according to some embodiments of the present application; FIG. 7 is an assembly diagram of an insulating support 9 and an electrode component 3 of a battery cell 102 according to some embodiments of the present application; FIG. 8 is another assembly diagram of an insulating support 9 and an electrode component 3 of a battery cell 102 according to some embodiments of the present application. In the embodiments of the present application, the insulating member includes an insulating support 9, and the insulating support 9 is disposed at one end of the active substance-coated part 32 proximal to the mounting wall 111. The insulating support 9 can support the active substance-coated part 32 of the electrode component 3 and can also isolate the active substance-coated part 32 from the mounting wall 111 of the housing component 1, which reduces the probability that the active substance-coated part 32 is in contact with the mounting wall 111 of the housing component 1, thereby reducing the risk of corrosion of the mounting wall 111 of the housing component 1 due to exposure of the active substance-coated part 32, and reducing the risk of liquid leakage, thus improving the reliability and stability of the battery cell 102.

The clearance hole includes a first clearance hole 901, and the insulating support 9 is provided with the first clearance hole 901, such that the conductive part 33 can pass through the first clearance hole 901, enabling the conductive part 33 to be electrically connected to the post terminal body 21. The insulating support 9 at least partially extends into the open slot 334, and the insulating support 9 abuts against the at least part of the slot wall of the conductive part 33 that forms the open slot 334, thereby providing a supporting force for the conductive part 33.

The number of first clearance holes 901 formed in the insulating support 9 is related to the number of post terminal components 2 on the mounting wall 111 of the housing component 1 and the number of conductive parts 33 of the electrode component 3 that are disposed opposite to the mounting wall 111. If the mounting wall 111 of the housing component 1 is provided with one post terminal component 2, and the electrode component 3 is provided with one conductive part 33 at a position opposite to the mounting wall 111, the insulating support 9 is provided with one first clearance hole 901. If the mounting wall 111 of the housing component 1 is provided with two post terminal components 2, and the electrode component 3 is provided with two conductive parts 33 at a position opposite to the mounting wall 111, the insulating support 9 is provided with two first clearance holes 901, and the two first clearance holes 901 are in a one-to-one correspondence with the two post terminal components 2 in position, such that the two conductive parts 33 on the same side of the electrode component 3 can pass through the two first clearance holes 901 of the insulating support 9 in a one-to-one correspondence, and be electrically connected to the post terminal bodies 21 of the two post terminal components 2 on the mounting wall 111 in a one-to-one correspondence.

When the battery cell 102 is assembled, the conductive part 33 of the electrode component 3 may first pass through the first clearance hole 901 of the insulating support 9, then the conductive part 33 may be connected to the post terminal component 2, and finally the post terminal component 2 connected to the electrode component 3 may be connected to the housing component 1. Alternatively, the conductive part 33 of the electrode component 3 may be first connected to the post terminal component 2, then the conductive part 33 and the post terminal component 2 may pass through the first clearance hole 901 of the insulating support 9, and finally the post terminal component 2 passing through the first clearance hole 901 may be connected to the housing component 1. Certainly, based on the specific structures of the housing component 1, the post terminal component 2, and the electrode component 3, other sequences may also be used for assembly.

After the housing component 1, the post terminal component 2, and the electrode component 3 are combined, the conductive part 33 is bent, and the insulating support 9 can press against the conductive part 33 to support the conductive part 33, such that the conductive part 33 can be shaped to enable the conductive part 33 to maintain a preset bent shape.

Therefore, in the above technical solutions, by disposing the insulating support 9 at one end of the active substance-coated part 32 proximal to the mounting wall 111, the conductive part 33 can be shaped by using the insulating support 9, such that the conductive part 33 can maintain a preset bent shape; moreover, the insulating support can also be interposed between the slot wall of the open slot 334 distal to the active substance-coated part 32 and the active substance-coated part 32, which reduces the probability that the conductive part 33 is inserted in a reverse manner into the interior of the active substance-coated part 32 and the slot wall of the open slot 334 proximal to the active substance-coated part 32 due to redundancy, thereby reducing the risk of short circuits of the battery cell 102, and helping to improve the use reliability of the battery cell 102.

Referring to FIGs. 7 and 8 again, in the embodiments of the present application, the insulating support 9 includes a support body 91, the support body 91 is disposed at one end of the active substance-coated part 32 proximal to the mounting wall 111, the first clearance hole 901 is formed in the support body 91, the first clearance hole 901 is provided with a first hole wall 9011 and a second hole wall 9012, and the first hole wall 9011 and the second hole wall 9012 are disposed opposite to each other in the width direction of the post terminal body 21 (the second direction F2 as shown in the figure, i.e., the thickness direction of the active substance-coated part 32).

The support body 91 can support the active substance-coated part 32 and can also isolate the active substance-coated part 32 from the mounting wall 111 of the housing component 1, which reduces the probability that the active substance-coated part 32 is in contact with the mounting wall 111, thereby reducing the risk of corrosion of the mounting wall 111 of the housing component 1 due to exposure of the active substance-coated part 32, and reducing the risk of liquid leakage, thus improving the reliability and stability of the battery cell 102.

The insulating support 9 further includes a first partition sheet 92. The first partition sheet 92 is disposed on the first hole wall 9011, and the first partition sheet 92 is connected to the support body 91. The first partition sheet 92 extends in a direction close to the center of the first clearance hole 901, the first partition sheet 92 extends into the open slot 334, and the first partition sheet 92 abuts against the at least part of the slot wall of the conductive part 33 that forms the open slot 334.

For ease of understanding, it may be defined that the first partition sheet 92 is provided with a first side edge and a second side edge disposed opposite to each other in the second direction F2. The second side edge of the first partition sheet 92 is disposed closer to the center of the first clearance hole 901 than the first side edge, and the first side edge of the first partition sheet 92 is connected to the first hole wall 9011 of the first clearance hole 901. When the conductive part 33 is bent, the first partition sheet 92 may extend into the open slot 334 formed by the conductive part 33, and the first partition sheet 92 abuts against the conductive part 33 to press against and support the conductive part 33.

Therefore, in the above technical solutions, by configuring the insulating support 9 to include the support body 91 and the first partition sheet 92 described above, the bent part of the conductive part 33 can be pressed and supported by using the first partition sheet 92, such that the conductive part 33 can maintain a preset bent shape, that is, enabling the bent shape of the conductive part 33 to be controllable; moreover, the first partition sheet can also be interposed between part of the conductive part 33 and the active substance-coated part 32, which reduces the probability that the conductive part 33 is inserted in a reverse manner into the interior of the active substance-coated part 32 due to redundancy, thereby reducing the risk of short circuits of the battery cell 102, and helping to improve the use reliability of the battery cell 102.

Referring to FIGs. 7 and 8 again, in the embodiments of the present application, the first partition sheet 92 extends horizontally from the first hole wall 9011 to the second hole wall 9012, or the first partition sheet 92 extends obliquely in a direction close to the active substance-coated part 32.

Since the root parts of a plurality of tab plates 311 of the conductive part 33 adjacent to the active substance-coated part 32 converge to form a structure with a certain slope, by configuring the first partition sheet 92 as the above structure, after penetration of the conductive part 33 is completed, the first partition sheet 92 and the root parts of the conductive part 33 adjacent to the active substance-coated part 32 press against each other, such that the root parts of the conductive part 33 adjacent to the active substance-coated part 32 converge more closely. As a result, the conductive part 33 can maintain a preset gathered shape and cannot be dispersed, thereby further reducing the probability that the conductive part 33 is inserted in a reverse manner into the interior of the active substance-coated part 32.

In addition, such an arrangement can reduce the internal space of the first clearance hole 901 distal to the active substance-coated part 32 occupied by the first partition sheet 92, and reserve a larger placement space for part of the conductive part 33 distal to the active substance-coated part 32 and even the post terminal component 2, which is conducive to reducing the dimension of the bent conductive part 33 in the thickness direction of the mounting wall 111, thereby reducing the dimension of the battery cell 102 in the thickness direction of the mounting wall 111.

In the embodiments of the present application, the thickness of the first partition sheet 92 is less than the thickness of the support body 91. In this way, the space occupied by the first partition sheet 92 in the first clearance hole 901 can be reduced, thereby reserving a larger placement space for the conductive part 33 and even the post terminal component 2, which is conducive to improving the energy density of the electrode component 3.

For example, one side of the first partition sheet 92 proximal to the active substance-coated part 32 may be farther away from the active substance-coated part 32 than one side of the support body 91 proximal to the active substance-coated part 32. In this way, the internal space of the first clearance hole 901 proximal to the active substance-coated part 32 occupied by the first partition sheet 92 can be reduced, thereby reserving a placement space for the root part of the conductive part 33 proximal to the active substance-coated part 32.

For another example, one side of the first partition sheet 92 distal to the active substance-coated part 32 may be closer to the active substance-coated part 32 than one side of the support body 91 distal to the active substance-coated part 32. In this way, the internal space of the first clearance hole 901 distal to the active substance-coated part 32 occupied by the first partition sheet 92 can be reduced, thereby reserving a larger placement space for the root part of the conductive part 33 proximal to the active substance-coated part 32 and even the post terminal component 2.

Referring to FIG. 6 again, the dimension of the first partition sheet 92 in the length direction of the post terminal body 21 is less than the dimension of the first clearance hole 901 in the length direction of the post terminal body 21, and the first partition sheet 92 is separated from the hole wall of the first clearance hole 901 on both sides thereof in the length direction of the post terminal body 21 (the third direction F3 as shown in the figure, i.e., the width direction of the active substance-coated part 32), such that the first partition sheet 92 is deformable under the pressing of the conductive part 33.

Therefore, in the above technical solutions, by configuring the first partition sheet 92 to satisfy the above conditions, the first partition sheet 92 can be deformed under the action of an external force (e.g., the pressing action of the conductive part 33). In this way, the first partition sheet 92 can undergo conformal deformation based on the root parts of the conductive part 33 adjacent to the active substance-coated part 32 and press against the root parts of the conductive part 33 adjacent to the active substance-coated part 32, such that the root parts of the conductive part 33 adjacent to the active substance-coated part 32 converge more closely. As a result, the conductive part 33 can maintain a preset gathered shape and cannot be dispersed.

The first partition sheet 92 may be made of a relatively soft material, such that the first partition sheet 92 can be deformed under the action of the conductive part 33, and thus the shape of the first partition sheet 92 is made to conform to that of the root part of the conductive part 33 adjacent to the active substance-coated part 32.

In the embodiments of the present application, in the length direction of the post terminal body 21 (the third direction F3 as shown in the figure), the dimension of the first partition sheet 92 is greater than or equal to the dimension of the conductive part 33.

In the above technical solutions, by controlling the dimension of the first partition sheet 92 in the length direction of the post terminal body 21 to satisfy the above conditions, both sides of the first partition sheet 92 in the length direction of the post terminal body 21 can extend beyond both sides of the conductive part 33 in the length direction of the post terminal body 21. In this way, the first partition sheet 92 can completely partition part of the conductive part 33 distal to the active substance-coated part 32 from the active substance-coated part 32, which can greatly reduce the probability that the conductive part 33 is inserted in a reverse manner into the interior of the active substance-coated part 32 due to redundancy, further reduce the risk of short circuits of the battery cell 102, and also reduce the problem of local deformation caused by the first partition sheet 92 pressing against part of the conductive part 33 in the length direction of the post terminal body 21, thereby reducing the risk of failure and damage of the conductive part 33, and further improving the reliability and stability of the battery cell 102.

Referring to FIG. 5 again, in the embodiments of the present application, the conductive part 33 includes a convergence segment 331, a first extension segment 332, and a second extension segment 333. The convergence segment 331, the first extension segment 332, and the second extension segment 333 are arranged in the extension direction of the conductive part 33. The convergence segment 331 is connected to the active substance-coated part 32; the second extension segment 333 is connected to the post terminal body 21; a first end of the first extension segment 332 is connected to the convergence segment 331 by a first bent part 3320, and the other end of the first extension segment 332 is connected to the second extension segment 333 by a second bent part 3330, such that the conductive part 33 forms at least two open slots 334 spaced apart from each other in the thickness direction of the mounting wall 111, and the openings of the two open slots 334 face different directions; that is, the conductive part 33 can be in a serpentine shape with alternating bends.

By bending the conductive part 33 into the above shape, in one aspect, the conductive part 33 can play a better buffering role, such that vibration can be absorbed when the battery cell 102 is used in a vibration environment, thereby protecting the electrode component 3, and improving the reliability of the battery cell 102; in another aspect, by providing the two open slots 334, the conductive part 33 is bent regularly, and the bent part thereof is less likely to be inserted in a reverse manner into the interior of the active substance-coated part 32 due to redundancy, such that the risk of short circuits of the battery cell 102 can be reduced, the mutual interference and scraping between the tab plates 311 in the conductive part 33 can also be improved, and lithium plating is reduced, further improving the reliability of the battery cell 102.

The first partition sheet 92 at least partially extends into the open slot 334 between the first extension segment 332 and the convergence segment 331, and at least abuts against the first extension segment 332. The first partition sheet 92 can partition the first extension segment 332 and the second extension segment 333 from the active substance-coated part 32, which reduces the probability that the first extension segment 332 and the second extension segment 333 are inserted in a reverse manner into the interior of the active substance-coated part 32 and the convergence segment 331 due to redundancy, and further reduces the risk of short circuits of the battery cell 102. By abutting the first partition sheet 92 against the first extension segment 332, the first partition sheet 92 can support the first extension segment 332, such that the conductive part 33 can maintain a bent shape with at least two open slots 334.

Referring to FIG. 7 again, in the embodiments of the present application, in the width direction of the post terminal body 21 (the second direction F2 as shown in the figure), the dimension of an overlapping region between the first partition sheet 92 and the first extension segment 332 is greater than half of the dimension of the first extension segment 332 and less than the dimension of the first extension segment 332.

The "overlapping region" herein refers to a part, on a plane perpendicular to the height direction of the active substance-coated part 32, where the projection of the first partition sheet 92 on the plane overlaps the projection of the first extension segment 332 on the plane. Specifically, the dimension of the overlapping region between the first partition sheet 92 and the first extension segment 332 in the width direction of the post terminal body 21 is L1, and the dimension of the first extension segment 332 in the width direction of the post terminal body 21 is L2. L1 is greater than half of L2, and L1 is less than L2. For example, L1 may be 0.6, 0.7, 0.8, or 0.9 times L2.

In the above technical solutions, by limiting the dimension of the overlapping region between the first partition sheet 92 and the first extension segment 332 to satisfy the above range, the first partition sheet 92 can effectively support the first extension segment 332, thereby improving the reliability of the conductive part 33 in a bent shape with at least two open slots 334.

Referring to FIGs. 9 to 12, FIG. 9 is a schematic structural diagram of an insulating support 9 of a battery cell 102 according to some embodiments of the present application; FIG. 10 is a structural cross-sectional view of the insulating support 9 of the battery cell 102 shown in FIG. 9; FIG. 11 is an assembly diagram of an insulating support 9 and an electrode component 3 of a battery cell 102 according to some embodiments of the present application; FIG. 12 is another assembly diagram of an insulating support 9 and an electrode component 3 of a battery cell 102 according to some embodiments of the present application. In the embodiments of the present application, the insulating support 9 further includes a second partition sheet 93. The second partition sheet 93 is disposed on the second hole wall 9012, and the second partition sheet 93 is connected to the support body 91. The second partition sheet 93 extends in a direction close to the center of the first clearance hole 901.

The first partition sheet 92 and the first partition sheet 92 are spaced apart from each other, a perforation 902 is formed between the first partition sheet 92 and the second partition sheet 93, the perforation 902 is in communication with the first clearance hole 901, the conductive part 33 passes through the perforation 902, and the second partition sheet 93 abuts against the conductive part 33.

In the above technical solutions, by configuring the insulating support 9 to include the first partition sheet 92 and the second partition sheet 93, two opposite sides of the root part of the conductive part 33 adjacent to the active substance-coated part 32 can be pressed by using the first partition sheet 92 and the second partition sheet 93, respectively. This further enables the root parts of the conductive part 33 adjacent to the active substance-coated part 32 to converge more closely, such that the conductive part 33 can maintain a preset gathered shape and cannot be dispersed.

The second partition sheet 93 extends horizontally from the second hole wall 9012 to the first hole wall 9011, or the second partition sheet 93 extends obliquely in a direction close to the active substance-coated part 32.

Since the root parts of a plurality of tab plates 311 of the conductive part 33 adjacent to the active substance-coated part 32 converge to form a structure with a certain slope, by configuring the second partition sheet 93 as the above structure, after penetration of the conductive part 33 is completed, the second partition sheet 93 and the root parts of the conductive part 33 adjacent to the active substance-coated part 32 press against each other, such that the root parts of the conductive part 33 adjacent to the active substance-coated part 32 converge more closely. As a result, the conductive part 33 can maintain a preset gathered shape and cannot be dispersed, thereby further reducing the probability that the conductive part 33 passes through the perforation 902 and is inserted in a reverse manner into the root parts of the plurality of tab plates 311 of the conductive part 33 adjacent to the active substance-coated part 32.

In addition, such an arrangement can reduce the internal space of the first clearance hole 901 distal to the active substance-coated part 32 occupied by the second partition sheet 93, and reserve a larger placement space for a part of the conductive part 33 distal to the active substance-coated part 32 and even the post terminal component 2, which is conducive to reducing the dimension of the bent conductive part 33 in the thickness direction of the mounting wall 111, thereby reducing the dimension of the battery cell 102 in the thickness direction of the mounting wall 111.

The thickness of the second partition sheet 93 is less than the thickness of the support body 91. In this way, the space occupied by the second partition sheet 93 in the first clearance hole 901 can be reduced, thereby reserving a larger placement space for the conductive part 33 and even the post terminal component 2, which is conducive to improving the energy density of the electrode component 3. The second partition sheet 93 is separated from the hole wall of the first clearance hole 901 on both sides thereof in the length direction of the post terminal body 21 (the third direction F3 as shown in the figure, i.e., the width direction of the active substance-coated part 32), such that the second partition sheet 93 is deformable under the pressing of the conductive part 33.

In the embodiments of the present application, the dimension of the perforation 902 in the width direction of the post terminal body 21 is greater than or equal to the thickness of the conductive part 33.

In the above technical solutions, by limiting the dimension of the perforation 902 in the width direction of the post terminal body 21 to satisfy the above conditions, the conductive part 33 can smoothly pass through the perforation 902, which reduces the scratch on the conductive part 33 caused by the first partition sheet 92 and the second partition sheet 93, thereby reducing the risk of failure and damage of the conductive part 33, and improving the reliability and stability of the battery cell 102.

The position of the perforation 902 between the first partition sheet 92 and the second partition sheet 93 may be centered with the gathered position of the plurality of tab plates 311 of the conductive part 33 adjacent to the active substance-coated part 32. The position of the perforation 902 between the first partition sheet 92 and the second partition sheet 93 may be adjusted based on the gathered position of the plurality of tab plates 311 of the conductive part 33 adjacent to the active substance-coated part 32.

For example, if the gathered position of the plurality of tab plates 311 of the conductive part 33 adjacent to the active substance-coated part 32 is centered with the middle of the active substance-coated part 32 in the width direction, the perforation 902 formed between the first partition sheet 92 and the second partition sheet 93 may be centered with the middle of the active substance-coated part 32 in the width direction.

For another example, if the gathered position of the plurality of tab plates 311 of the conductive part 33 adjacent to the active substance-coated part 32 is arranged eccentrically relative to the middle of the active substance-coated part 32 in the width direction, the perforation 902 formed between the first partition sheet 92 and the second partition sheet 93 may be arranged eccentrically relative to the middle of the active substance-coated part 32 in the width direction.

Referring to FIG. 9 again, in the embodiments of the present application, in the length direction of the post terminal body 21, the dimension of the second partition sheet 93 is greater than or equal to the dimension of the conductive part 33.

In the above technical solutions, by controlling the dimension of the second partition sheet 93 in the length direction of the post terminal body 21 to satisfy the above conditions, both sides of the second partition sheet 93 in the length direction of the post terminal body 21 can extend beyond both sides of the conductive part 33 in the length direction of the post terminal body 21. In this way, the problem of local deformation caused by the second partition sheet 93 pressing against part of the conductive part 33 in the length direction of the post terminal body 21 can be reduced, thereby reducing the risk of failure and damage of the conductive part 33, and further improving the reliability and stability of the battery cell 102.

Referring to FIG. 5 again, in the embodiments of the present application, the conductive part 33 includes a convergence segment 331, a first extension segment 332, and a second extension segment 333 arranged in the extension direction thereof. The convergence segment 331 is connected to the active substance-coated part 32; the second extension segment 333 is connected to the post terminal body 21; a first end of the first extension segment 332 is connected to the convergence segment 331 by a first bent part 3320, and the other end of the first extension segment 332 is connected to the second extension segment 333 by a second bent part 3330, such that the conductive part 33 forms at least two open slots 334 spaced apart from each other in the thickness direction of the mounting wall 111, and the openings of the two open slots 334 face different directions; that is, the conductive part 33 can be in a serpentine shape with alternating bends.

By bending the conductive part 33 into the above shape, in one aspect, the conductive part 33 can play a better buffering role, such that vibration can be absorbed when the battery cell 102 is used in a vibration environment, thereby protecting the electrode component 3, and improving the reliability of the battery cell 102; in another aspect, by providing the two open slots 334, the conductive part 33 is bent regularly, and the bent part thereof is less likely to be inserted in a reverse manner into the interior of the active substance-coated part 32 due to redundancy, such that the risk of short circuits of the battery cell 102 can be reduced, the mutual interference and scraping between the tab plates 311 in the conductive part 33 can also be improved, and lithium plating is reduced, further improving the reliability of the battery cell 102.

The second partition sheet 93 extends toward the open slot 334 between the first extension segment 332 and the second extension segment 333 and at least abuts against the convergence part.

In the above technical solutions, the second partition sheet 93 extends toward the open slot 334 between the first extension segment 332 and the second extension segment 333, such that the second extension segment 333 is separated from the convergence segment 331, which can reduce the risk of short circuits of the battery cell 102; the second partition sheet 93 abuts against the convergence segment 331, such that the second partition sheet 93 can constrain the shape of the convergence segment 331, thereby enabling the root parts of the conductive part 33 adjacent to the active substance-coated part 32 to converge more closely, and thus enabling the conductive part 33 to maintain a preset gathered shape and not to be dispersed.

Referring to FIG. 11 again, in the embodiments of the present application, in the width direction of the post terminal body 21, the dimension of an overlapping region between the second partition sheet 93 and the convergence segment 331 is less than half of the dimension of the convergence segment 331.

The "overlapping region" herein refers to a part, on a plane perpendicular to the height direction of the active substance-coated part 32, where the projection of the second partition sheet 93 on the plane overlaps the projection of the convergence segment 331 on the plane. Specifically, the dimension of the overlapping region between the second partition sheet 93 and the convergence segment 331 in the width direction of the post terminal body 21 is L3, and the dimension of the convergence segment 331 in the width direction of the post terminal body 21 is L4. L3 is less than half of L4. For example, L3 may be 0.2, 0.3, or 0.4 times L4.

In the above technical solutions, by limiting the dimension of the overlapping region between the second partition sheet 93 and the convergence segment 331 to satisfy the above range, the convergence segment 331 and the first extension segment 332 of the conductive part 33 can maintain a preset shape, thereby enabling the bent shape of the conductive part 33 to be controllable.

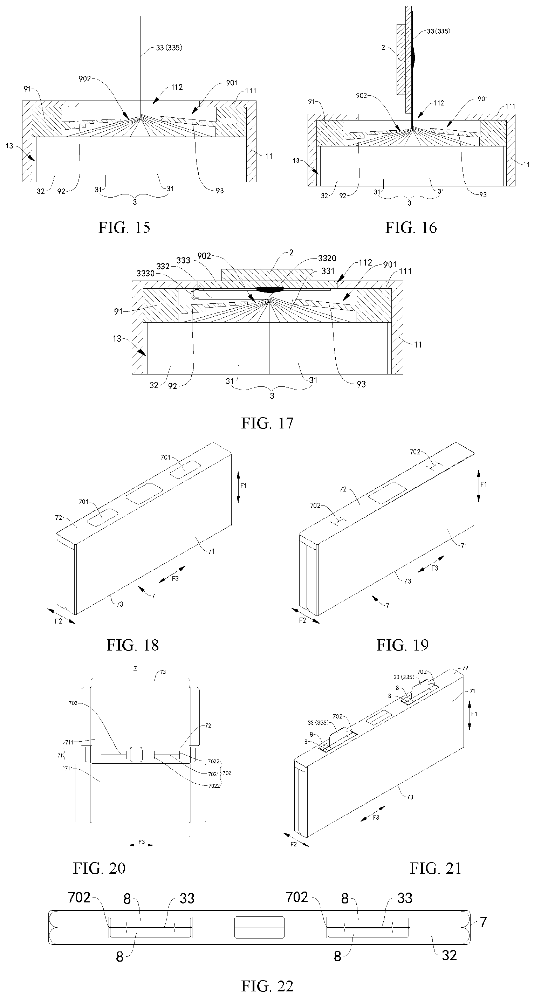

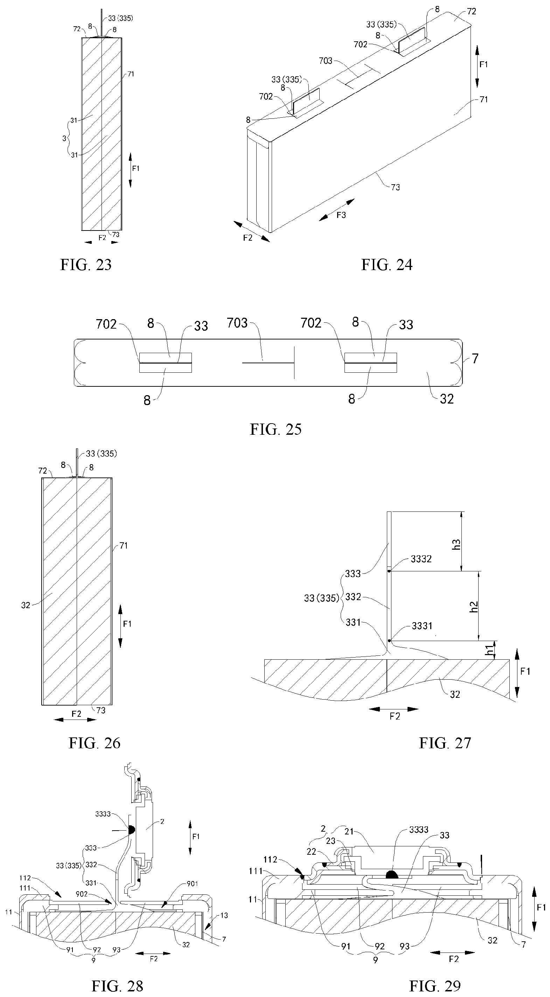

The assembly process of the battery cell 102 according to the embodiments of the present application is described below. Referring to FIG. 13, FIG. 13 is an assembly diagram of an insulating support 9 and a housing component 1 of the battery cell 102 shown in FIG. 9. In an embodiment where the mounting wall 111 is a wall body of the housing body 11 opposite the housing cover 12, the insulating support 9 may be pre-mounted into the housing body 11, and the insulating support 9 abuts against an inner surface of the mounting wall 111. Before the electrode assembly 31 coated with an insulating film 7 is mounted into the housing component 1, the first partition sheet 92 and the second partition sheet 93 of the insulating support 9 are obliquely disposed relative to the thickness direction of the mounting wall 111. Referring to FIGs. 14 and 15, FIG. 14 is a schematic structural diagram of an electrode component 3 of a battery cell 102 being mounted into a housing component 1 with an insulating support 9 in an undeformed state according to some embodiments of the present application; FIG. 15 is a schematic structural diagram of an electrode component 3 of a battery cell 102 being mounted into a housing component 1 with an insulating support 9 in a deformed state according to some embodiments of the present application. During the process in which the electrode assembly 31 coated with the insulating film 7 is mounted into the housing component 1, the conductive part 33 may pass through the perforation 902 between the first partition sheet 92 and the second partition sheet 93. When the active substance-coated part 32 abuts against the support body 91, the first partition sheet 92 and the second partition sheet 93 may also be pushed to deform toward one side distal to the active substance-coated part 32, thereby forming the structure as shown in FIG. 24. Referring to FIGs. 16 and 17, FIG. 16 is a partial schematic structural diagram of connection between a conductive part 33 and a post terminal component 2 of the battery cell 102 shown in FIG. 15; FIG. 17 is a partial schematic structural diagram of connection between a post terminal component 2 and a housing component 1 of the battery cell 102 shown in FIG. 15. After the active substance-coated part 32 is mounted in the housing component 1, the conductive part 33 extends out of the perforation 902, then the conductive part 33 is connected to the post terminal component 2, the post terminal component 2 is flipped over to cover a mounting hole 112 in the mounting wall 111, and finally the post terminal component 2 is connected to the mounting wall 111, thereby achieving the assembly of the battery cell 102.

Referring to FIGs. 18 and 19, FIG. 18 is a schematic structural diagram of an electrode component 3 and an insulating film 7 of a battery cell 102 according to some embodiments of the present application; FIG. 19 is a schematic structural diagram of an electrode component 3 and an insulating film 7 of a battery cell 102 according to some other embodiments of the present application. In the embodiments of the present application, the insulating member includes an insulating film 7, the insulating film 7 completely wraps the active substance-coated part 32, and the insulating film 7 may be configured to isolate the active substance-coated part 32 from the housing component 1, which reduces the probability that the active substance-coated part 32 is in contact with the housing component 1, thereby reducing the risk of corrosion of the housing component 1 due to exposure of the active substance-coated part 32, reducing the risk of failure of the active substance-coated part 32, and reducing the risk of liquid leakage, thus improving the reliability and stability of the battery cell 102.

The clearance hole includes a second clearance hole 701. The second clearance hole 701 is formed in the insulating film 7 at a position opposite to the mounting wall 111, and the second clearance hole 701 is adapted to the thickness of the conductive part 33. A peripheral wall of the insulating film 7 where the second clearance hole 701 is formed is interposed between the insulating support 9 and the active substance-coated part 32, and the conductive part 33 sequentially passes through the second clearance hole 701 and the first clearance hole 901 to be connected to the post terminal body 21.

"The dimension of the second clearance hole 701 adapted to the thickness of the conductive part 33" herein means that the dimension of the second clearance hole 701 in the thickness direction of the conductive part 33 is adapted to the thickness of a part of the conductive part 33 located at the second clearance hole 701.

The dimension of the second clearance hole 701 itself cannot be too small, or the second clearance hole 701 in the use state (the opening dimension of the second clearance hole 701 under the compressive effect of the conductive part 33) cannot be too small, otherwise the conductive part 33 cannot smoothly and quickly pass through. The dimension of the second clearance hole 701 itself cannot be too large, or the second clearance hole 701 in the use state (the opening dimension of the second clearance hole 701 under the compressive effect of the conductive part 33) cannot be too large, otherwise the risk of exposure of the active substance-coated part 32 is increased.

In the above technical solutions, by adjusting the dimension of the second clearance hole 701 to be adapted to the thickness of the conductive part 33, in one aspect, the second clearance hole 701 allows the conductive part 33 to pass through the insulating film 7, such that the conductive part 33 can be electrically connected to the post terminal body 21 of the post terminal component 2; in another aspect, in the case where the conductive part 33 passes through the second clearance hole 701, the insulating film 7 can also cover the position of the root parts of the plurality of tab plates 311 of the conductive part 33 adjacent to the active substance-coated part 32, thereby further achieving insulating protection on the active substance-coated part 32, reducing the risk of exposure of the active substance-coated part 32, and also achieving insulating protection on the root parts of the plurality of tab plates 311 of the conductive part 33 adjacent to the active substance-coated part 32. In this way, part of the conductive part 33 passing through the second clearance hole 701 is separated from the active substance-coated part 32 and the root parts of the plurality of tab plates 311 of the conductive part 33 adjacent to the active substance-coated part 32, which reduces the probability that the conductive part 33 is inserted in a reverse manner into the interior of the active substance-coated part 32 and the root parts of the plurality of tab plates 311 of the conductive part 33 adjacent to the active substance-coated part 32 due to redundancy, thereby reducing the risk of short circuits of the battery cell 102.

In addition, the insulating film 7 can also isolate the active substance-coated part 32 from the mounting wall 111 of the housing component 1, which reduces the probability that the active substance-coated part 32 is in contact with the mounting wall 111 of the housing component 1, thereby reducing the risk of corrosion of the mounting wall 111 of the housing component 1 due to exposure of the active substance-coated part 32, reducing the risk of failure of the active substance-coated part 32, and reducing the risk of liquid leakage, thus improving the reliability and stability of the battery cell 102.

Referring to FIG. 18 again, in some optional embodiments of the present application, the second clearance hole 701 itself is a normally open hole adapted to the thickness of the conductive part 33; that is, when the insulating film 7 is in a natural state (a state where the insulating film 7 is not compressed by the conductive part 33), the dimension of the second clearance hole 701 is greater than zero.

In the above technical solutions, by configuring the second clearance hole 701 as a normally open hole, the conductive part 33 can quickly pass through the insulating film 7, which is conducive to improving the efficiency of the insulating film 7 wrapping the active substance-coated part 32, thereby improving the assembly efficiency of the battery cell 102. In addition, during the process of the conductive part 33 passing through the insulating film 7, the conductive part can avoid the insulating film 7, thereby reducing the probability of deformation of the conductive part 33, reducing the operation steps of shaping the conductive part 33, and thus improving the assembly efficiency of the battery cell 102.

Referring to FIG. 19 again and further referring to FIG. 20, FIG. 20 is a schematic structural diagram of an insulating film 7 of the battery cell 102 shown in FIG. 19. In some other optional embodiments of the present application, a tear structure 702 is disposed on the insulating film 7 at a position opposite to the mounting wall 111, and the tear structure 702 is adapted to be torn under the action of the conductive part 33 to form a second clearance hole 701 adapted to the thickness of the conductive part 33.

Specifically, in the process of coating the outer side of the active substance-coated part 32 with the insulating film 7, when the conductive part 33 pushes open the tear structure 702 on the insulating film 7, the second clearance hole 701 that can be opened and closed can be formed in the insulating film 7, such that the conductive part 33 can smoothly pass through the second clearance hole 701. However, since the second clearance hole 701 features a self-closing characteristic, after the penetration of the conductive part 33 is completed, the second clearance hole 701 may gradually tend to close, such that the insulating film 7 can cover at least part of the root parts of the plurality of tab plates 311 of the conductive part 33 adjacent to the active substance-coated part 32.

Therefore, in the above technical solutions, by providing the tear structure 702 on the insulating film 7 in advance, in the process of coating the outer side of the active substance-coated part 32 with the insulating film 7, the second clearance hole 701 that can be opened and closed can be formed. After the penetration of the conductive part 33 is completed, the second clearance hole 701 can gradually tend to close, such that the insulating film 7 can cover at least the part of the root parts of the plurality of tab plates 311 of the conductive part 33 adjacent to the active substance-coated part 32, thereby forming insulating protection on the root parts of the plurality of tab plates 311 of the conductive part 33 adjacent to the active substance-coated part 32. In this way, the part of the conductive part 33 passing through the second clearance hole 701 is separated from the root parts of the plurality of tab plates 311 of the conductive part 33 adjacent to the active substance-coated part 32, which reduces the probability that the conductive part 33 is inserted in a reverse manner into the interior of the active substance-coated part 32 and the root parts of the plurality of tab plates 311 of the conductive part 33 adjacent to the active substance-coated part 32 due to redundancy, thereby reducing the risk of short circuits of the battery cell 102.

Referring to FIG. 20 again, in the embodiments of the present application, the tear structure 702 includes a first tear part 7021 and a second tear part 7022. The first tear part 7021 extends in the length direction of the post terminal body 21 (the third direction F3 as shown in the figure, i.e., the width direction of the active substance-coated part 32), the second tear part 7022 extends in a direction at an included angle with the length direction of the post terminal body 21, and the end part of the first tear part 7021 is connected to the second tear part 7022.

For example, the second tear part 7022 may extend in the width direction of the post terminal body 21 (the thickness direction of the active substance-coated part 32 as shown in the figure), such that the extension direction of the first tear part 7021 is perpendicular to the extension direction of the second tear part 7022. For another example, the second tear part 7022 may be obliquely disposed relative to the length direction of the post terminal body 21, such that the extension direction of the first tear part 7021 and the extension direction of the second tear part 7022 are arranged at an acute angle or an obtuse angle.

Both the first tear part 7021 and the second tear part 7022 may be of a perforated structure. Specifically, the first tear part 7021 and the second tear part 7022 each include a plurality of connecting parts and a plurality of disconnected parts. The plurality of connecting parts and the plurality of disconnected parts may be arranged in the respective extension directions of the first tear part 7021 and the second tear part 7022. When the conductive part 33 pushes open the tear structure 702 on the insulating film 7, the plurality of connecting parts of the first tear part 7021 and the plurality of connecting parts of the second tear part 7022 are disconnected, thereby forming the second clearance hole 701 that can be opened and closed at the tear structure 702 of the insulating film 7.

Certainly, both the first tear part 7021 and the second tear part 7022 may be of a thickness-reduced structure, and the thickness-reduced structure may be torn under the compressive effect of the conductive part 33, thereby forming the second clearance hole 701 that can be opened and closed. Alternatively, one of the first tear part 7021 and the second tear part 7022 is of a perforated structure, and the other is of a thickness-reduced structure.

In the above technical solutions, by configuring the tear structure 702 to include the first tear part 7021 and the second tear part 7022 disposed at an included angle, the formed second clearance hole 701 can be opened and closed, and the opening degree of the second clearance hole 701 can be adjusted by the insulating film 7 based on the shape of the root part of the conductive part 33 adjacent to the active substance-coated part 32, such that the conductive part 33 can smoothly pass through the second clearance hole 701. This can also reduce the risk of severe tearing of the insulating film 7, further improve the insulating protection performance of the insulating film 7 on the active substance-coated part 32, and further reduce the probability that the conductive part 33 is inserted in a reverse manner into the interior of the active substance-coated part 32 due to redundancy, thereby further reducing the risk of short circuits of the battery cell 102.

Referring to FIG. 20 again, in the embodiments of the present application, the end part of the first tear part 7021 is connected to the middle of the second tear part 7022; that is, the end part of the first tear part 7021 in the extension direction is connected to the middle of the second tear part 7022 in the extension direction thereof. In this way, the insulating film 7 can form at least two insulating sheets that can be opened and closed at the tear structure 702, such that during the process of the conductive part 33 passing through the second clearance hole 701, the two insulating sheets may be located on at least two opposite sides of the conductive part 33 to cover at least two opposite sides of the root parts of the plurality of tab plates 311 of the conductive part 33 adjacent to the active substance-coated part 32, and the part of the conductive part 33 passing through the second clearance hole 701 is separated from the at least two opposite sides of the root parts of the plurality of tab plates 311 of the conductive part 33 adjacent to the active substance-coated part 32, which reduces the probability that the conductive part 33 is inserted in a reverse manner into the interior of the active substance-coated part 32 and the root parts of the plurality of tab plates 311 of the conductive part 33 adjacent to the active substance-coated part 32 due to redundancy, thereby reducing the risk of short circuits of the battery cell 102.

Referring to FIGs. 21 to 23, FIG. 21 is a schematic structural diagram of an electrode component 3 and an insulating film 7 of a battery cell 102 according to yet some other embodiments of the present application; FIG. 22 is a top view of the structure shown in FIG. 21; FIG. 23 is a structural cross-sectional view of the electrode component 3 and the insulating film 7 shown in FIG. 21. In the embodiments of the present application, two second tear parts 7022 are provided, and the two second tear parts 7022 are spaced apart from each other to be connected to two ends of the first tear part 7021, respectively. In this way, the adjustable opening degree of the second clearance hole 701 can be increased, such that the conductive part 33 can more smoothly pass through the second clearance hole 701, and the risk of severe tearing of the insulating film 7 can be further reduced, thereby further reducing the risk of short circuits of the battery cell 102.

In the embodiments of the present application, the second tear part 7022 extends in the width direction of the post terminal body 21, and the extension direction of the second tear part 7022 is perpendicular to the extension direction of the first tear part 7021. In this way, the insulating film 7 can form two insulating sheets that can be opened and closed at the tear structure 702, which can improve the structural integrity of the insulating film 7 at the second clearance hole 701 without affecting the effect of the conductive part 33 passing through the insulating film 7, thereby improving the insulating protection performance of the insulating film 7, further reducing the probability that the conductive part 33 is inserted in a reverse manner into the interior of the active substance-coated part 32 due to redundancy, and thus reducing the risk of short circuits of the battery cell 102.

In some specific embodiments, the tear structure 702 includes a first tear part 7021 and two second tear parts 7022. The first tear part 7021 extends in the length direction of the post terminal body 21, the two second tear parts 7022 are spaced apart from each other in the length direction of the post terminal body 21, each second tear part 7022 extends in the width direction of the post terminal body 21, and two ends of the first tear part 7021 in the extension direction are connected to the middles of the two second tear parts 7022 in the extension direction, respectively.

Therefore, in the above technical solutions, by connecting the end part of the first tear part 7021 to the middle of the second tear part 7022, the insulating film 7 can form at least two insulating sheets that can be opened and closed at the tear structure 702, and the two insulating sheets can cover at least two opposite sides of the root parts of the plurality of tab plates 311 of the conductive part 33 adjacent to the active substance-coated part 32, which reduces the probability that the conductive part 33 is inserted in a reverse manner into the interior of the active substance-coated part 32 and the root parts of the plurality of tab plates 311 of the conductive part 33 adjacent to the active substance-coated part 32 due to redundancy, thereby reducing the risk of short circuits of the battery cell 102. By providing two second tear parts 7022, the adjustable opening degree of the second clearance hole 701 can be increased, which can further reduce the risk of severe tearing of the insulating film 7, thereby further reducing the risk of short circuits of the battery cell 102. By extending the second tear part 7022 in the width direction of the post terminal body 21, the structural integrity of the insulating film 7 at the second clearance hole 701 can be improved without affecting the effect of the conductive part 33 passing through the insulating film 7, thereby improving the insulating protection performance of the insulating film 7, further reducing the probability that the conductive part 33 is inserted in a reverse manner into the interior of the active substance-coated part 32 due to redundancy, and thus reducing the risk of short circuits of the battery cell 102.

Referring to FIG. 20 again, in some specific embodiments, the insulating film 7 includes a main insulating part 71, a first insulating part 72, and a second insulating part 73. The main insulating part 71 is wrapped around the peripheral side of the active substance-coated part 32, and the first insulating part 72 and the second insulating part 73 are disposed at two ends of the main insulating part 71, respectively. The first insulating part 72 is located on one side of the main insulating part 71 proximal to the mounting wall 111, and the first insulating part 72 is wrapped around an end part of the active substance-coated part 32 proximal to the mounting wall 111. The second insulating part 73 is located on one side of the main insulating part 71 distal to the mounting wall 111, and the second insulating part 73 is wrapped around an end part of the active substance-coated part 32 distal to the mounting wall 111. The second clearance hole 701 is formed in the first insulating part 72.

The cross-section of the active substance-coated part 32 may be circular, rectangular, polygonal, or the like. When the cross-section of the active substance-coated part 32 is circular, the main insulating part 71 may be wound into a shape adapted to the shape of the peripheral side (cylindrical surface) of the active substance-coated part 32 to wrap the peripheral side of the active substance-coated part 32. That is, the cross-sectional shape of the main insulating part 71 is a circular ring shape. When the cross-section of the active substance-coated part 32 is rectangular, the main insulating part 71 may be folded into a shape adapted to the shape of the peripheral side (four side wall surfaces) of the active substance-coated part 32 to wrap the peripheral side of the active substance-coated part 32. That is, the cross-sectional shape of the main insulating part 71 is a rectangular ring shape. When the cross-section of the active substance-coated part 32 is polygonal, the main insulating part 71 may be folded into a shape adapted to the shape of the peripheral side (a plurality of side wall surfaces) of the active substance-coated part 32 to wrap the peripheral side of the active substance-coated part 32. That is, the cross-sectional shape of the main insulating part 71 is a polygonal ring shape.

In the case that the battery cell 102 is vertically placed, the first insulating part 72 wraps one end of the active substance-coated part 32, the conductive part 33 passes through the first insulating part 72, the main insulating part 71 wraps the peripheral side of the active substance-coated part 32, and the second insulating part 73 wraps the other end of the active substance-coated part 32.

Referring to FIG. 20 again, the main insulating part 71 includes a plurality of main body parts 711. The plurality of main body parts 711 are connected end-to-end in sequence in a ring shape, the plurality of main body parts 711 jointly wrap the peripheral side of the active substance-coated part 32, and the first insulating part 72 and the second insulating part 73 are located at two axial ends of the annular structure formed by the plurality of main body parts 711, respectively.

Specifically, the number of the main body parts 711 may be two, three, or more, and may be specifically selected based on the shape of the active substance-coated part 32. For example, the number of the main body parts 711 and the number of the peripheral side surfaces of the active substance-coated part 32 may be configured in a one-to-one correspondence. That is, the plurality of main body parts 711 cover the plurality of peripheral side surfaces of the active substance-coated part in a one-to-one correspondence. For another example, the number of the main body parts 711 may be less than the number of the peripheral side surfaces of the active substance-coated part 32. That is, when the insulating film 7 is in an unfolded state, the surface area of at least one main body part 711 is greater than the surface area of one peripheral side surface of the active substance-coated part 32, such that the main body part 711 can be used to cover two or more peripheral side surfaces of the active substance-coated part 32. For yet another example, the number of the main body parts 711 may be greater than the number of the peripheral side surfaces of the active substance-coated part 32, such that at least part of the plurality of main body parts 711 may overlap.

Therefore, in the above technical solutions, the insulating film 7 is composed of a plurality of parts, which can completely separate the active substance-coated part 32 from the housing component 1, so as to fully reduce exposure of the active substance-coated part 32, reduce the risk of failure and damage of the electrode component 3, reduce the risk of corrosion of the housing component 1, and improve the reliability and stability of the battery cell 102.

Referring to FIGs. 21 to 23 again, in the embodiments of the present application, the insulating film 7 is provided with a retaining piece 8 in a connected manner in at least a partial region in the circumferential direction of the second clearance hole 701, and the hardness of the retaining piece 8 is greater than the hardness of the insulating film 7.

For example, the retaining piece 8 and the insulating film 7 can be made of the same material, and the thickness of the retaining piece 8 is greater than the thickness of the insulating film 7. For another example, the retaining piece 8 and the insulating film 7 can be made of different insulating materials.

One retaining piece 8 may be provided and located on one side of the second clearance hole 701. Certainly, a plurality of retaining pieces 8 may also be provided and arranged in the circumferential direction of the second clearance hole 701.

Referring to FIG. 21, two retaining pieces 8 are provided, and each retaining piece 8 extends in the length direction of the active substance-coated part 32. The two retaining pieces 8 are arranged in the thickness direction of the active substance-coated part 32; that is, the two retaining pieces 8 are arranged in the width direction of the post terminal body 21. The position between two adjacent retaining pieces 8 is disposed opposite to the second clearance hole 701 of the insulating film 7 to allow the conductive part 33 to pass through.

In the above technical solutions, by disposing the retaining piece 8 on the insulating film 7 in a connected manner, the rigidity of the insulating film 7 can be increased, such that the root parts of the plurality of tab plates 311 of the conductive part 33 adjacent to the active substance-coated part 32 can maintain a gathered shape, which reduces the probability that the conductive part 33 is inserted in a reverse manner into the interior of the active substance-coated part 32 and the root parts of the plurality of tab plates 311 of the conductive part 33 adjacent to the active substance-coated part 32 due to redundancy, thereby reducing the risk of short circuits of the battery cell 102.

Referring to FIGs. 18 and 21 to 23 again, in an embodiment where the second clearance hole 701 itself is a normally open hole adapted to the thickness of the conductive part 33, the retaining piece 8 may cover at least part of the outer side of the insulating film 7 and be connected to the insulating film 7, or an edge on one side of the retaining piece 8 may be connected to the hole edge of the second clearance hole 701, while the other side extends toward a direction close to the center of the second clearance hole 701.

Referring to FIG. 19 again and further referring to FIGs. 24 to 26, FIG. 24 is a schematic structural diagram of an electrode component 3 and an insulating film 7 of a battery cell 102 according to yet some other embodiments of the present application; FIG. 25 is a top view of the structure shown in FIG. 24; FIG. 26 is a structural cross-sectional view of the electrode component 3 and the insulating film 7 shown in FIG. 24. In an embodiment where the second clearance hole 701 is formed by the tearing of the tear structure 702 under the action of the conductive part 33, the retaining piece 8 may cover the region of the insulating film 7 where the tear structure 702 is located and be connected to the insulating film 7.

In the embodiments of the present application, the mounting wall 111 is provided with a pressure relief device 6, and the insulating film 7 may be provided with a rupture structure 703 at a position opposite to the pressure relief device 6. The rupture structure 703 may be in the same form as the above tear structure 702. When the pressure relief device 6 is opened, the rupture structure 703 can be opened more smoothly, facilitating gas discharge.

One post terminal component 2 may be disposed on the mounting wall 111, and the pressure relief device 6 and the post terminal component 2 may be spaced apart from each other in the length direction of the mounting wall 111. Two post terminal components 2 may also be disposed on the mounting wall 111. The two post terminal components 2 and the pressure relief device 6 may be spaced apart from each other in the length direction of the mounting wall 111, and the pressure relief device 6 may be located between the two post terminal components 2.

Referring to FIG. 5 again, in the embodiments of the present application, the conductive part 33 includes a convergence segment 331, a first extension segment 332, and a second extension segment 333. The convergence segment 331, the first extension segment 332, and the second extension segment 333 are arranged in the extension direction of the conductive part 33. The convergence segment 331 is connected to the active substance-coated part 32; the second extension segment 333 is connected to the post terminal body 21; two ends of the first extension segment 332 are connected to the convergence segment 331 and the second extension segment 333, respectively.

The first extension segment 332 passes through the clearance hole. In an embodiment where the insulating member includes the insulating film 7, the insulating film 7 is provided with a second clearance hole 701, and the first extension segment 332 passes through the second clearance hole 701 and extends out of the second clearance hole 701. In an embodiment where the insulating member includes the insulating support 9, the insulating support 9 is provided with a first clearance hole 901, and the first extension segment 332 passes through the first clearance hole 901.

The convergence segment 331 and the second extension segment 333 are located on two sides of the insulating member, respectively. The insulating member can separate the convergence segment 331 from the second extension segment 333, thereby reducing the probability that the second extension segment 333 is inserted in a reverse manner into the convergence segment 331 due to redundancy. The insulating member can also separate the second extension segment 333 from the active substance-coated part 32, thereby reducing the probability that the second extension segment 333 is inserted in a reverse manner into the interior of the active substance-coated part 32 due to redundancy, and thus reducing the risk of short circuits of the battery cell 102 and improving the reliability and stability of the battery cell 102.

In the embodiments of the present application, the conductive part 33 includes a plurality of stacked tab plates 311, and the root parts of the plurality of tab plates 311 adjacent to the active substance-coated part 32 converge to form the convergence segment 331 in a triangular shape. The plurality of tab plates 311 converge at a position of the convergence segment 331 facing away from the active substance-coated part 32 and are connected to form the first extension segment 332 and the second extension segment 333.

For ease of understanding, taking a cross-section perpendicular to the length direction of the post terminal body 21 (the third direction F3 as shown in the figure), the cross-sectional shape of the conductive part 33 is triangular.

The triangle may be an isosceles triangle, that is, the vertex angle of the triangle is centered with the right middle position of the post terminal body 21 in the width direction of the post terminal body 21, such that the connection position between the convergence segment 331 and the first extension segment 332 is centered in the width direction of the post terminal body 21. In the width direction of the post terminal body 21, the vertex angle of the triangle may deviate from the right middle position of the post terminal body 21, such that the connection position between the convergence segment 331 and the first extension segment 332 can be offset relative to the middle of the post terminal body 21 in the width direction, thereby reserving the degree of deformation for the bending of the conductive part 33.

In the above technical solutions, the root parts of the plurality of tab plates 311 adjacent to the active substance-coated part 32 converge to form the convergence segment 331 in a triangular shape, such that the plurality of tab plates 311 can be stacked to form an overall structure that is not easily loosened, thereby facilitating the connection between the conductive part 33 and the post terminal body 21.

Referring to FIG. 5 again, in some optional embodiments of the present application, a first end of the first extension segment 332 is connected to the convergence segment 331 by a first bent part 3320 and a first open slot 3341 is defined therebetween, and a second end of the first extension segment 332 is connected to the second extension segment 333 by a second bent part 3330 and a second open slot 3342 is defined therebetween. The openings of the first open slot 3341 and the second open slot 3342 face different directions, and the two open slots are spaced apart from each other in the thickness direction of the mounting wall 111.

Specifically, the first extension segment 332 and the second extension segment 333 are disposed at an included angle in opposite directions. Two ends of the first bent part 3320 are connected to the convergence segment 331 and the start end of the first extension segment 332, respectively, such that the first open slot 3341 is defined by the convergence segment 331, the first bent part 3320, and the first extension segment 332. Two ends of the second bent part 3330 are connected to the tail end of the first extension segment 332 and the start end of the second extension segment 333, respectively, such that the second open slot 3342 is defined by the first extension segment 332, the second bent part 3330, and the second extension segment 333.

For example, the opening directions of the first open slot 3341 and the second open slot 3342 are arranged opposite to each other, that is, the opening directions of the first open slot 3341 and the second open slot 3342 are arranged at 180 degrees; for another example, the opening directions of the first open slot 3341 and the second open slot 3342 are arranged at an obtuse angle, such that the conductive part 33 is arranged substantially in an "S" shape.

Therefore, by arranging the conductive part 33 substantially in an "S" shape, in one aspect, the conductive part 33 can play a better buffering role, such that vibration can be absorbed when the battery cell 102 is used in a vibration environment, thereby protecting the electrode component 3, and improving the reliability of the battery cell 102; in another aspect, by providing the first open slot 3341 and the second open slot 3342, the conductive part 33 is bent regularly, and the bent part thereof is less likely to be inserted in a reverse manner into the interior of the active substance-coated part 32 due to redundancy, such that the risk of short circuits of the battery cell 102 can be reduced, the mutual interference and scraping between the tab plates 311 in the conductive part 33 can also be improved, and lithium plating is reduced, further improving the reliability of the battery cell 102.

At least part of the insulating member extends into the first open slot 3341 to be located between the first extension segment 332 and the active substance-coated part 32. The insulating member can isolate one side of the first extension segment 332 facing the active substance-coated part 32 from the active substance-coated part 32, which reduces the probability that the first extension segment 332 of the conductive part 33 is inserted in a reverse manner into the interior of the active substance-coated part 32 and the convergence segment 331 due to redundancy, thereby reducing the risk of short circuits of the battery cell 102, and helping to improve the use reliability of the battery cell 102.

In the embodiments of the present application, the insulating member at least partially extends in a direction close to the second open slot 3342 to be located between the second extension segment 333 and the active substance-coated part 32. The insulating member may be interposed between the second extension segment 333 and one side of the first extension segment 332 facing away from the active substance-coated part 32, or between the second extension segment 333 and one side of the convergence segment 331 facing away from the active substance-coated part 32, such that the insulating member can be interposed between the second extension segment 333 and the active substance-coated part 32, which further reduces the probability that the conductive part 33 is inserted in a reverse manner into the interior of the active substance-coated part 32, the first extension segment 332, or the convergence segment 331 due to redundancy, thereby reducing the risk of short circuits of the battery cell 102, and helping to improve the use reliability of the battery cell 102.

Referring to FIGs. 5 to 8 again, in the embodiments of the present application, the first bent part 3320 is centered in the width direction of the post terminal body 21; or the first bent part 3320 is disposed on one side of the center position in the width direction of the post terminal body 21, and the second bent part 3330 is located on the other side of the center position in the width direction of the post terminal body 21. In this way, the first bent part 3320 and the second bent part 3330 can be arranged in the width direction of the post terminal, such that the conductive part 33 can be substantially arranged in an "S" shape, thereby satisfying the design requirements.

For example, referring to FIGs. 5 and 6, the first bent part 3320 is centered in the width direction of the post terminal body 21, and the second bent part 3330 may be disposed slightly to the left relative to the middle of the post terminal body 21 in the width direction. In addition, the opening of the open slot 334 defined by the convergence segment 331, the first bent part 3320, and the first extension segment 332 faces the left, and the opening of the open slot 334 defined by the first extension segment 332, the second bent part 3330, and the second extension segment 333 faces the right, such that the conductive part 33 is substantially arranged in an "S" shape.

For another example, referring to FIG. 8, the first bent part 3320 may be disposed slightly to the right relative to the middle of the post terminal body 21 in the width direction, and the second bent part 3330 may be disposed slightly to the left relative to the middle of the post terminal body 21 in the width direction. In addition, the opening of the open slot 334 defined by the convergence segment 331, the first bent part 3320, and the first extension segment 332 faces the left, and the opening of the open slot 334 defined by the first extension segment 332, the second bent part 3330, and the second extension segment 333 faces the right, such that the conductive part 33 is substantially arranged in an "S" shape.

Referring to FIG. 5 again and further referring to FIGs. 27 to 29, FIG. 27 is a partial schematic structural diagram of a conductive part 33 of the battery cell 102 shown in FIG. 3 in a straightened state; FIG. 28 is a partial schematic structural diagram of connection between a conductive part 33 and a post terminal component 2 of the battery cell 102 shown in FIG. 3; FIG. 29 is a partial schematic structural diagram of connection between a post terminal component 2 and a housing component 1 of the battery cell 102 shown in FIG. 3. In the embodiments of the present application, the conductive part 33 includes a plurality of stacked tab plates 311, and the plurality of tab plates 311 are connected at one end of the first bent part 3320 distal to the convergence segment 331 to form a first connecting part 3331. The first bent part 3320 may be of an arc-shaped structure, and the position of the first connecting part 3331 may be a position where the first bent part 3320 is tangent to the first extension segment 332.

By connecting one end of the first bent part 3320 distal to the convergence segment 331 to form the first connecting part 3331, the plurality of tab plates 311, which are originally stacked and prone to loosening, can be connected together, and the plurality of tab plates 311 are less likely to become loose at the first connecting part 3331. This can reduce the possibility that after the plurality of tab plates 311 are bent, the tab plates 311 splay apart and are thus inserted in a reverse manner into the interior of the active substance-coated part 32, thereby reducing the risk of short circuits of the battery cell 102, and helping to improve the use reliability of the battery cell 102.

Referring to FIG. 27 again, in the embodiments of the present application, when the conductive part 33 is in a straightened state, a distance h1 between the first connecting part 3331 and one end of the active substance-coated part 32 proximal to the mounting wall 111 is less than or equal to 2.5 mm.

"The conductive part 33 being in a straightened state" herein refers to a state in which, before the conductive part 33 is bent, the conductive part 33 extends in the height direction of the active substance-coated part 32 (the first direction F1 as shown in the figure).

For example, the distance h1 between the first connecting part 3331 and the end of the active substance-coated part 32 proximal to the mounting wall 111 may be 0.5 mm, 1 mm, 1.5 mm, 2 mm, 2.5 mm, or the like.

If the distance h1 between the first connecting part 3331 and the end of the active substance-coated part 32 proximal to the mounting wall 111 is too large, the dimension of the convergence segment 331 in the thickness direction of the mounting wall 111 may be too large, such that the plurality of tab plates 311 are easily loosened at the convergence segment 331, and thus the possibility that the tab plates 311 splay apart and are thus inserted in a reverse manner into the interior of the active substance-coated part 32 is likely to occur. If the distance h1 between the first connecting part 3331 and the end of the active substance-coated part 32 proximal to the mounting wall 111 is too small, the plurality of tab plates 311 are easily loosened at the first extension segment 332, and thus the possibility that the tab plates 311 splay apart and are thus inserted in a reverse manner into the interior of the active substance-coated part 32 is likely to occur.

In the above technical solutions, by limiting the distance between the first connecting part 3331 and the end of the active substance-coated part 32 proximal to the mounting wall 111 to satisfy the above range, the problem of loosening of the plurality of tab plates 311 after the conductive part 33 is bent can be reduced, and the possibility that the tab plates 311 splay apart and are thus inserted in a reverse manner into the interior of the active substance-coated part 32 can be reduced, thereby reducing the risk of short circuits of the battery cell 102, and helping to improve the use reliability of the battery cell 102.

Referring to FIG. 27 again, in the embodiments of the present application, an insulating support 9 is disposed between the mounting wall 111 and an end part of the active substance-coated part 32 connected to the conductive part 33. The insulating support 9 is provided with a perforation 902, the conductive part 33 passes through the perforation 902, and the conductive part 33 is connected to the post terminal body 21.

The insulating support 9 can support the active substance-coated part 32 and can also isolate the active substance-coated part 32 from the mounting wall 111 of the housing component 1, which reduces the probability that the active substance-coated part 32 is in contact with the mounting wall 111, thereby reducing the risk of corrosion of the mounting wall 111 of the housing component 1 due to exposure of the active substance-coated part 32, and reducing the risk of liquid leakage, thus improving the reliability and stability of the battery cell 102.

One end of the perforation 902 proximal to the active substance-coated part 32 is provided with a first hole edge, and one end of the perforation 902 proximal to the post terminal body 21 is provided with a second hole edge. A distance m1 between the first connecting part 3331 and the active substance-coated part 32 is greater than a distance m2 between the first hole edge and the active substance-coated part 32.

That is, in the case that the battery cell 102 is vertically placed, the first hole edge is the lowest hole edge of the perforation 902, the second hole edge is the highest hole edge of the perforation 902, and the first connecting part 3331 is higher than the lowest edge of the perforation 902, such that the connection position of the plurality of tab plates 311 at one end of the first bent part 3320 distal to the convergence segment 331 is higher than the lowest edge of the perforation 902, further reducing the possibility of loosening of the conductive part 33, which is more conducive to improving the use reliability of the battery cell 102.

Referring to FIGs. 5 and 27 again, in the embodiments of the present application, the plurality of tab plates 311 are connected at one end of the second bent part 3330 proximal to the second extension segment 333 to form a second connecting part 3332. The second bent part 3330 may be of an arc-shaped structure, and the position of the second connecting part 3332 may be a position where the second bent part 3330 is tangent to the second extension segment 333.

By connecting one end of the second bent part 3330 proximal to the second extension segment 333 to form the second connecting part 3332, the plurality of tab plates 311, which are originally stacked and prone to loosening, can be connected together, and the plurality of tab plates 311 are less likely to become loose at the second connecting part 3332. In one aspect, this can reduce the possibility that after the plurality of tab plates 311 are bent, the tab plates 311 splay apart and are thus inserted in a reverse manner into the interior of the active substance-coated part 32; in another aspect, the connection between the second extension segment 333 and the post terminal body 21 is facilitated.

Referring to FIG. 27 again, in the embodiments of the present application, when the conductive part 33 is in a straightened state, a distance h2 between the first connecting part 3331 and the second connecting part 3332 is less than or equal to 16 mm, and a distance h3 between the second connecting part 3332 and one end of the second extension segment 333 distal to the active substance-coated part 32 is greater than or equal to 8 mm.

For example, the distance h2 between the first connecting part 3331 and the second connecting part 3332 may be 8 mm, 10 mm, 12 mm, 14 mm, 16 mm, or the like, and the distance h3 between the second connecting part 3332 and the end of the second extension segment 333 distal to the active substance-coated part 32 may be 8 mm, 10 mm, 12 mm, 14 mm, 16 mm, or the like.

In the above technical solutions, by limiting the distance between the first connecting part 3331 and the second connecting part 3332 to satisfy the above range, in one aspect, the problem of loosening of the plurality of tab plates 311 after the conductive part 33 is bent can be reduced, and the possibility that the tab plates 311 splay apart and are thus inserted in a reverse manner into the interior of the active substance-coated part 32 can be reduced; in another aspect, after the conductive part 33 is bent, the second connecting part 3332 can be located between the post terminal body 21 and the second edge of the perforation 902 in the thickness direction of the mounting wall 111, such that the assembly space between the post terminal body 21 and the active substance-coated part 32 can be reduced, and the structure of the battery cell 102 can be more compact.

In addition, by limiting the distance between the second connecting part 3332 and the end of the second extension segment 333 distal to the active substance-coated part 32 to satisfy the above range, the connection area between the second extension segment 333 and the post terminal body 21 can be ensured, thereby improving the connection reliability between the conductive part 33 and the post terminal body 21. As a result, the electrical conductivity between the electrode component 3 and the post terminal component 2 is more stable and reliable, thereby improving the use reliability of the battery cell 102.

Referring to FIG. 5 again, in the embodiments of the present application, the conductive part 33 includes a tab 335. The tab 335 includes a plurality of stacked tab plates 311, and the convergence segment 331, the first extension segment 332, and the second extension segment 333 are formed by different parts of the tab 335. That is, the tab 335 is directly connected to the post terminal body 21, so the conductive member 336 can be omitted, and the step of connecting the conductive member 336 to the tab 335 is omitted, which is conducive to improving the production efficiency of the battery cell 102.

In addition, by gathering the plurality of tab plates 311 of the tab 335 in advance, the second extension segment 333 of the conductive part 33 can take the form of a plate structure in which the plurality of layers of tab plates 311 are connected together and a certain rigidity is provided, rather than the form of a loose and scattered multi-layer foil structure. This facilitates the mating connection between the tab 335 and the post terminal body 21, making the welding between the tab 335 and the post terminal body 21 more reliable and making it less likely to form voids in the weld seam, thereby improving the connection reliability and the electrical conductivity at the welding joint, and enabling the electrical conductivity between the electrode component 3 and the post terminal component 2 to be more stable and reliable.

Referring to FIG. 5 and 27 to 29 again, in the embodiments of the present application, the plurality of tab plates 311 converge at a position of the convergence segment 331 facing away from the active substance-coated part 32 and are connected to form the first extension segment 332 and the second extension segment 333, the plurality of tab plates 311 are connected at the second extension segment 333 to form a third connecting part 3333, the third connecting part 3333 is an elongated strip extending in the length direction of the post terminal body 21, and the third connecting part 3333 is centered in the width direction of the post terminal body 21.

The plurality of tab plates 311 may be connected at the second extension segment 333 by ultrasonic welding to form the third connecting part 3333. By means of ultrasonic welding, the surfaces of any two adjacent tab plates 311 can be in close contact and connected, and the strength and stability of the welding spot are high, which is conducive to improving the structural integrity and reliability of the conductive part 33. In addition, the welding speed of the ultrasonic welding is fast, which is conducive to improving the welding efficiency. Certainly, the plurality of tab plates 311 may also be connected at the second extension segment 333 by laser welding. The second extension segment 333 may be connected to the post terminal body 21 by laser welding.

In the above technical solutions, by centering the third connecting part 3333 in the width direction of the post terminal body 21, in one aspect, the dimension requirement for the second extension segment 333 can be reduced, thereby reducing the difficulty in connecting the conductive part 33 to the post terminal body 21, and in another aspect, the conductive part 33 can, after being bent, converge toward the central position between the post terminal body 21 and the active substance-coated part 32, thereby enabling the shape of the conductive part 33 after being bent to be controllable.

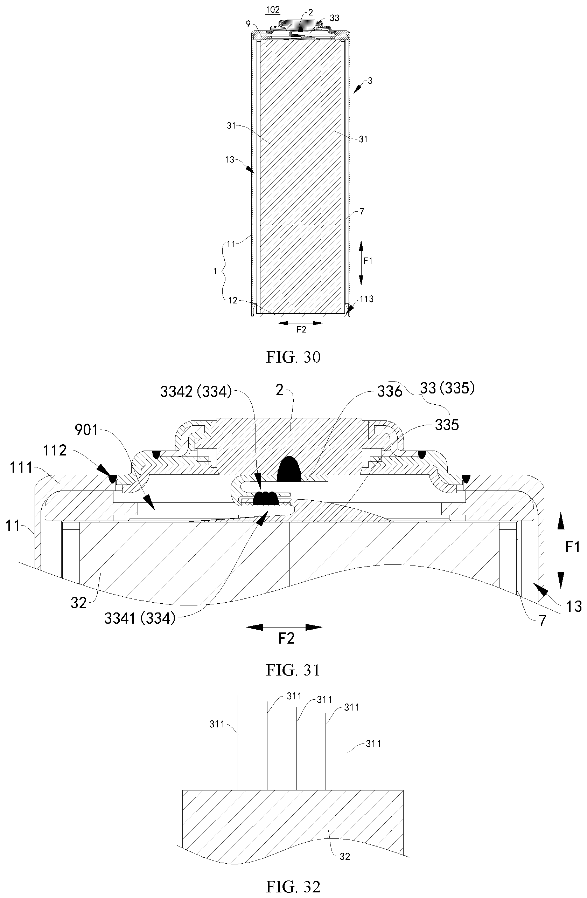

Referring to FIGs. 30 to 32, FIG. 30 is a structural cross-sectional view of a battery cell 102 according to some other embodiments of the present application; FIG. 31 is a partial enlarged view of the battery cell 102 shown in FIG. 30; FIG. 32 is a partial schematic structural diagram of a conductive part 33 of the battery cell 102 shown in FIG. 30 during shaping. In the embodiments of the present application, the conductive part 33 includes a tab 335 and a conductive member 336. The tab 335 is connected to one end of the active substance-coated part 32 proximal to the mounting wall 111, and the tab 335 includes a plurality of stacked tab plates 311. The conductive member 336 is connected between the tab 335 and the post terminal body 21; part of the conductive member 336 forms the second extension segment 333, and another part forms at least part of the first extension segment 332; at least part of the tab 335 forms the convergence segment 331.

Therefore, by indirectly connecting the tab 335 to the post terminal body 21 by the conductive member 336, the length of the tab 335 can be shortened, and problems such as wrinkling, bending, and fracture of the tab plate 311 can be alleviated. Moreover, by flexibly designing the shape and material of the conductive member 336, the difficulty in connecting to the post terminal body 21 can be reduced, thereby improving the ease of connection between the conductive member 336 and the post terminal body 21. In addition, the operation of passing the tab 335 through the perforation 902, the connection operation between the tab 335 and the post terminal component 2 (this operation may be omitted), and the connection operation between the post terminal component 2 and the housing component 1 are all less likely to cause cracking at the connection position between the active substance-coated part 32 and the conductive part 33, thereby improving the reliability of the battery cell 102.

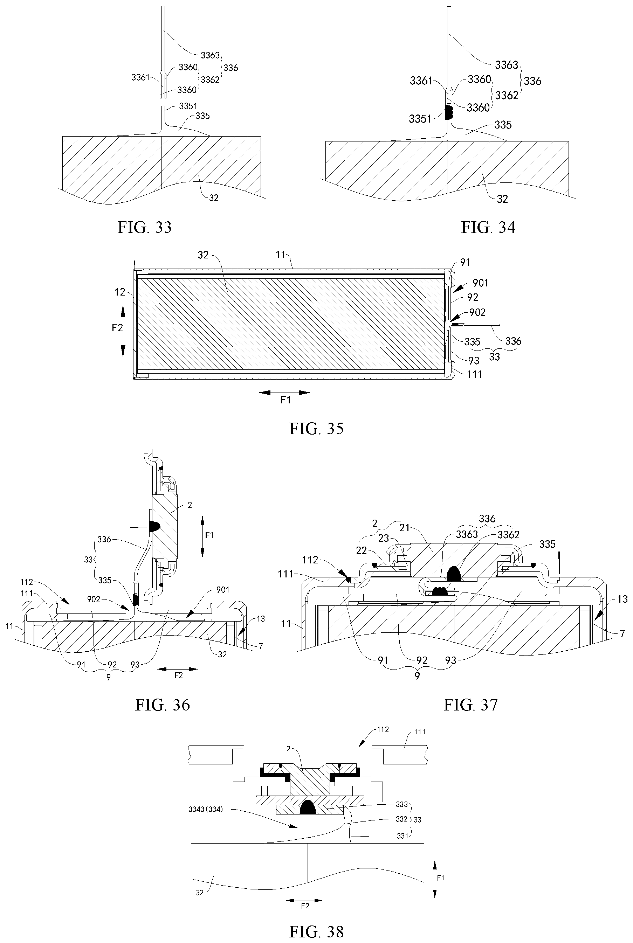

Further referring to FIGs. 33 and 34, FIG. 33 is an exploded view of a structure of a conductive part 33 of the battery cell 102 shown in FIG. 30; FIG. 34 is a partial schematic structural diagram of a conductive part 33 of the battery cell 102 shown in FIG. 30 in a straightened state. In the embodiments of the present application, the conductive member 336 is provided with a slot 3361, and the tab 335 is at least partially inserted into the slot 3361.

Specifically, the conductive member 336 may include a first connecting segment 3362, the first connecting segment 3362 includes two clamping parts 3360, the slot 3361 is defined between the two clamping parts 3360, and one end of the tab 335 distal to the active substance-coated part 32 is sandwiched between the two clamping parts 3360 and connected to the clamping parts 3360. Therefore, the end of the tab 335 distal to the active substance-coated part 32 (denoted as a tab end part 3351) can be limited by using the two clamping parts 3360, thereby improving the connection reliability between the tab 335 and the conductive member 336.

The tab end part 3351 located between the two clamping parts 3360 may be a structure in which the end parts of a plurality of stacked tab plates 311 are connected together in advance, thereby simplifying the manufacturing processes and improving the manufacturing efficiency. Certainly, the tab end part 3351 located between the two clamping parts 3360 may also be the end parts of the plurality of stacked tab plates 311. That is, before the tab 335 is connected to the conductive member 336, the end parts of the plurality of stacked tab plates 311 of the tab 335 are not connected together in advance by welding or other methods.

Further, the conductive member 336 may further include a second connecting segment 3363, and the second connecting segment 3363 is directly connected to the post terminal body 21.

In the embodiments of the present application, the conductive member 36 includes an adapter piece, and the adapter piece includes a plurality of stacked and connected adapter foils, such that the adapter piece is deformable. The material of the plurality of adapter foils may be the same as the material of the tab 335, and the plurality of adapter foils may be welded at several key positions by ultrasonic welding or the like to connect the plurality of adapter foils together.

Due to the small thickness of the plurality of adapter foils, the plurality of adapter foils are equivalent to multi-layer thin plates. Compared with an integrally formed adapter piece, an adapter piece formed by the plurality of adapter foils is easier to bend, such that the adapter piece and the tab 335 can be bent as required, thereby enabling the conductive part 33 to form a preset bent shape, and thus satisfying the design requirements.

Referring to FIGs. 32 to 34 again, and further referring to FIGs. 35 to 37, FIG. 35 is a schematic structural diagram of an electrode component 3 of the battery cell 102 shown in FIG. 30 being mounted into a housing component 1; FIG. 36 is a partial schematic structural diagram of connection between a conductive part 33 and a post terminal component 2 of the battery cell 102 shown in FIG. 30; FIG. 37 is a partial schematic structural diagram of connection between a post terminal component 2 and a housing component 1 of the battery cell 102 shown in FIG. 30. In an embodiment where the mounting wall 111 is a wall body of the housing body 11 opposite to the housing cover 12, during assembly, the plurality of tab plates 311 of the tab 335 may be shaped and gathered first, and the adapter piece and the tab 335 may be connected together to form the conductive part 33. Then, the active substance-coated part 32 with the conductive part 33 is mounted into the housing body 11, and after the housing cover 12 is connected to the housing body 11, the adapter piece extending out of the housing body 11 is connected to the post terminal body 21. Finally, the post terminal component 2 is rotated, and the post terminal component 2 is fixed onto the mounting wall 111 of the housing component 1. After assembly, the conductive part 33 formed by connecting the tab 335 to the adapter piece may be substantially arranged in an "S" shape.

Referring to FIG. 38, FIG. 38 is a schematic structural diagram of a battery cell 102 according to some other embodiments of the present application. In some other optional embodiments of the present application, the convergence segment 331, the first extension segment 332, and the second extension segment 333 define a third open slot 3343, and the insulating member at least partially extends into the third open slot 3343 to be interposed between the second extension segment 333 and the active substance-coated part 32.

Specifically, the second extension segment 333 may be connected to one side of the post terminal body 21 proximal to the active substance-coated part 32, such that the second extension segment 333 is disposed opposite to the convergence segment 331. The insulating member is interposed between the second extension segment 333 and the active substance-coated part 32, which can reduce the probability that the second extension segment 333 is inserted in a reverse manner into the interior of the active substance-coated part 32 and the convergence segment 331 due to redundancy, thereby reducing the risk of short circuits of the battery cell 102, and helping to improve the use reliability of the battery cell 102.

Certainly, the second extension segment 333 may pass through the post terminal body 21 and be connected to one side of the post terminal body 21 facing away from the active substance-coated part 32, such that the post terminal body 21 is disposed opposite to the convergence segment 331. With such an arrangement, the post terminal body 21 is interposed between the second extension segment 333 and the active substance-coated part 32, and the insulating member is interposed between the post terminal body 21 and the active substance-coated part 32, such that the insulating member is interposed between the second extension segment 333 and the active substance-coated part 32, which can further reduce the risk of short circuits of the battery cell 102 and helps to improve the use reliability of the battery cell 102.

In yet some optional embodiments of the present application, the post terminal body 21 is provided with a through hole 210, the second extension segment 333 passes through the through hole 210 and is connected to the hole wall of the through hole 210, and the insulating member can be interposed between the post terminal body 21 and the active substance-coated part 32, thereby reducing the risk of short circuits of the battery cell 102, and helping to improve the use reliability of the battery cell 102.

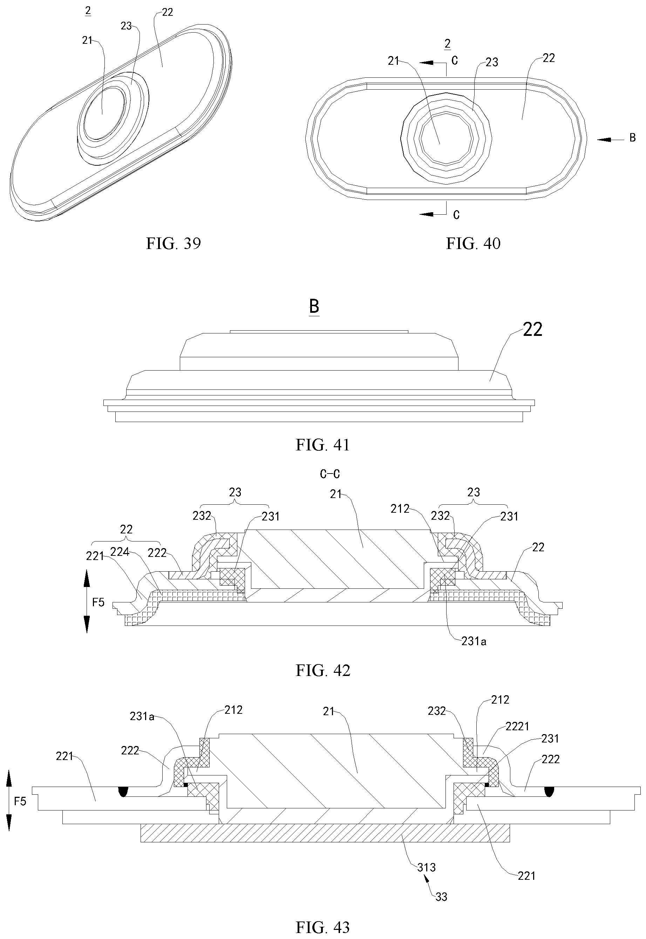

Referring to FIGs. 39 to 42, FIG. 39 is a schematic diagram of a post terminal component according to some embodiments of the present application; FIG. 40 is a top view of the post terminal component shown in FIG. 39; FIG. 41 is a view in a B direction shown in FIG. 40; FIG. 42 is a cross-sectional view along line C-C in FIG. 40. In some embodiments of the present application, the post terminal component 2 includes a post terminal body 21, an adapter structure 22, and an insulating structure 23. The adapter structure 22 surrounds the post terminal body 21, the adapter structure 22 is connected to the mounting wall 111, the insulating structure 23 is in insulating fit between the adapter structure 22 and the post terminal body 21, and the electrode component 3 is connected to the post terminal body 21.

The adapter structure 22 surrounds the entire periphery of the post terminal body 21 in the circumferential direction of the mounting hole 112, such that the adapter structure 22 can serve to connect the post terminal body 21 and the mounting wall 111 in the outer peripheral region of the post terminal body 21. The insulating structure 23 insulates the mating position between the adapter structure 22 and the post terminal body 21, thereby preventing a conductive short circuit between the post terminal body 21 and the adapter structure 22. The connection manner between the adapter structure 22 and the mounting wall 111 is not limited, and may be, for example, welding, riveting, drilling, bonding, or the like. In addition, the connection manner between the post terminal body 21 and the electrode component 3 may be that the electrode component 3 is connected to the post terminal body 21 by the conductive part 33. The connection method between the conductive part 33 and the post terminal body 21 is not limited, and may be, for example, welding, riveting, drilling, bonding, or the like.

In the above technical solutions, the post terminal component 2 features a simple structure and is easy to manufacture. In addition, since two parts, i.e., the post terminal body 21 and the adapter structure 22, are included, the shape and dimension of the post terminal body 21 and the shape and dimension of the adapter structure 22 can be separately designed based on different factors to flexibly adapt to the connection requirements with the housing component 1 and the electrode component 3 in different forms, thereby expanding the application range of the post terminal component 2.

Illustratively, the adapter structure 22 may be configured to match the shape of the mounting hole 112, and the shape of the mounting hole 112 may be designed as an elongated strip that facilitates the passage of the post terminal component 2 and enables the flipping angle of the post terminal component 2 to be small. Meanwhile, the post terminal body 21 may be designed in an elongated strip shape that matches the shape of the adapter structure 22, such that the post terminal body 21 has a larger area to be connected to the conductive part 33, or the post terminal body 21 may be designed in a circular strip that does not match the shape of the adapter structure 22, which is conducive to reducing the connection area between the post terminal body 21 and the adapter structure 22 and improving the force uniformity at the joint between the post terminal body 21 and the adapter structure 22, thereby improving the connection reliability between the post terminal body 21 and the adapter structure 22.

In some embodiments of the present application, the adapter structure 22 is formed as an elongated strip (e.g., a rectangle or a racetrack) extending in the length direction of the mounting wall 111, and the contour shape of the post terminal body 21 matches the contour shape of the adapter structure 22 (e.g., a rectangle or a racetrack). As described above, the electrode component 3 is connected to the post terminal component 2 by the conductive part 33. When the contour shape of the post terminal body 21 is formed into an elongated strip matching the contour shape of the adapter structure 22, the post terminal body 21 has a large area, which is conducive to increasing the connection area between the conductive part 33 and the post terminal body 21, thereby improving the conductive performance.

Referring to FIG. 39, in some other embodiments of the present application, the adapter structure 22 is formed as an elongated strip (e.g., a rectangle or a racetrack) extending in the length direction of the mounting wall 111, and the post terminal body 21 is disposed at the central position of the adapter structure 22 in the length direction and is circular. Therefore, when the post terminal body 21 is disposed at the central position of the elongated strip-shaped adapter structure 22 in the length direction and is circular, it is conducive to reducing the connection area between the post terminal body 21 and the adapter structure 22 and improving the force uniformity at the joint between the post terminal body 21 and the adapter structure 22, thereby improving the connection reliability between the post terminal body 21 and the adapter structure 22.

Referring to FIGs. 39 to 42, in some embodiments of the present application, the insulating structure 23 is also in sealing fit between the adapter structure 22 and the post terminal body 21. Therefore, the insulating structure 23 can not only insulate the adapter structure 22 from the post terminal body 21, but also render the mating position between the adapter structure 22 and the post terminal body 21 in a sealed state, so as to isolate the interior and exterior of the housing component 1 after the adapter structure 22 is connected to the mounting wall 111, thereby reducing the risk of the electrolytic solution in the housing component 1 leaking out of the housing component 1 from the mating position between the adapter structure 22 and the post terminal body 21, and reducing the risk of liquid, dust, or the like outside the housing component 1 entering the housing component 1 from the mating position between the adapter structure 22 and the post terminal body 21, thereby improving the reliability of the battery cell 102.

In the above technical solutions, since the insulating structure 23 is also in sealing fit between the adapter structure 22 and the post terminal body 21, when the post terminal component 2 is mounted on the mounting wall 111 and the adapter structure 22 is connected to the mounting wall 111, no sealing member or the like needs to be disposed between the adapter structure 22 and the mounting wall 111, and no large sealing pressure needs to be applied to meet the compression degree of the sealing member at this position. This can reduce the force received by the mounting wall 111 and protect the housing component 1, thereby helping to reduce the wall thickness of the housing component 1 and reducing material costs. In addition, since the mounting wall 111 is an end of the housing body 11 opposite to the opening 113, the force received by the joint between the mounting wall 111 and the peripheral wall 114 can be reduced, and the force received by the peripheral wall 114 can be reduced, thereby helping to ensure the reliability of the housing body 11 and reducing the wall thickness and cost of the housing body 11.

Referring to FIGs. 39 to 42 again, in some embodiments of the present application, the insulating structure 23 includes a sealing structural member 231. In the embodiments of the present application, the sealing structural member 231 is made of a material that exhibits both sealing performance and insulating property. For example, the material may be an elastic rubber member.

Referring to FIGs. 39 to 42 again, illustratively, at least part of the sealing structural member 231 is clamped between the adapter structure 22 and the post terminal body 21 in the inner-outer direction of the mounting wall 111 (e.g., the fifth direction F5).

In the embodiments of the present application, a direction from the inner side of the mounting wall 111 to the outer side of the mounting wall 111, and a direction from the outer side of the mounting wall 111 to the inner side of the mounting wall 111 are collectively referred to as an "inner-outer direction of the mounting wall 111 (e.g., the fifth direction F5)". The "inner side of the mounting wall 111" refers to one side of the mounting wall 111 facing the electrode component 3, and the "outer side of the mounting wall 111" refers to one side of the mounting wall 111 facing away from the electrode component 3.

The sealing structural member 231 includes at least an axial side part 231a. One side of the axial side part 231a facing the accommodating cavity 13 is the inner side of the axial side part 231a, and one side of the axial side part 231a facing away from the electrode component 3 is the outer side of the axial side part 231a. One of the adapter structure 22 and the post terminal body 21 is locally clamped on the outer side of the axial side part 231a, and the other is locally clamped on the inner side of the axial side part 231a, such that the axial side part 231a is clamped between the adapter structure 22 and the post terminal body 21 in the inner-outer direction of the mounting wall 111 (e.g., the fifth direction F5) to achieve axial sealing between the adapter structure 22 and the post terminal body 21.

Therefore, by clamping at least part of the sealing structural member 231 between the adapter structure 22 and the post terminal body 21 in the inner-outer direction of the mounting wall 111 (e.g., the fifth direction F5), axial sealing between the adapter structure 22 and the post terminal body 21 is achieved. By using the axial sealing, a relatively reliable sealing effect can be achieved, thereby alleviating the problem of leakage at the mating position between the adapter structure 22 and the post terminal body 21. In addition, in the embodiments of the present application, by integrating the axial sealing (such as the axial side part 231a) into the post terminal component, the acting force received by the mounting wall 111 in the axial direction can be reduced.

Referring to FIGs. 39 to 42 again, illustratively, the sealing structural member 231 is disposed around the peripheral side of the adapter structure 22 facing the post terminal body 21 (i.e., the inner ring of the adapter structure 22). In the embodiments of the present application, since the adapter structure 22 is disposed around the post terminal body 21 and connected to the mounting wall 111, the peripheral side of the adapter structure 22 facing the post terminal body 21 is an "inner ring 2211 of the adapter structure 22", and the peripheral side of the adapter structure 22 facing the mounting wall 111 is an "outer ring 2212 of the adapter structure 22". In the above technical solutions, by disposing the sealing structural member 231 around the inner ring of the adapter structure 22, the sealing structural member 231 can be proximal to the mating position between the adapter structure 22 and the post terminal body 21, which is conducive to sealing the mating position between the adapter structure 22 and the post terminal body 21 in a shorter path, thereby improving the sealing reliability. Moreover, it is conducive to reducing the dimension of the sealing structural member 231 and reducing the sealing area, facilitating compression and sealing, reducing sealing failure, and improving the sealing effect.

In addition, when the insulating structure 23 includes a sealing structural member 231, and the sealing structural member 231 is clamped between the adapter structure 22 and the post terminal body 21 to enable the sealing fit between the adapter structure 22 and the post terminal body 21, and when the adapter structure 22 is formed as an elongated strip extending in the length direction of the mounting wall 111, and the post terminal body 21 is disposed at the central position of the adapter structure 22 in the length direction and is circular, then, since the connection position between the adapter structure 22 and the post terminal body 21 is subjected to a uniform force, the compression amount of the sealing structural member 231 can be easily controlled to improve the reliability of the sealing fit between the adapter structure 22 and the post terminal body 21. In addition, the sealing area is relatively small, making it less prone to failure.

Referring to FIGs. 39 to 42 again, in some embodiments of the present application, the post terminal body 21 includes a peripheral edge part 212, the adapter structure 22 is clamped on both sides of the peripheral edge part 212 in the inner-outer direction of the mounting wall 111 via the insulating structure 23, and at least part of the sealing structural member 231 is clamped between one side of the peripheral edge part 212 facing the electrode component 3 and the adapter structure 22.

In this embodiment, the peripheral edge part 212 may be an outer peripheral structure of the post terminal body 21. Since the sealing structural member 231 is disposed around the peripheral side of the adapter structure 22 facing the post terminal body 21, the sealing structural member 231 may be clamped between the peripheral edge part 212 and the adapter structure 22.

In this embodiment, one side of the peripheral edge part 212 facing away from the electrode component 3 is the outer side of the peripheral edge part 212, and one side of the peripheral edge part 212 facing the accommodating cavity 13 is the inner side of the peripheral edge part 212. The adapter structure 22 is limited on the outer side of the peripheral edge part 212 by the insulating structure 23 to limit the movement of the post terminal body 21 relative to the adapter structure 22 in a direction facing away from the electrode component 3, and the adapter structure 22 is also limited on the inner side of the peripheral edge part 212 by the insulating structure 23 to limit the movement of the post terminal body 21 relative to the adapter structure 22 in a direction facing the accommodating cavity 13, such that the adapter structure 22 is clamped on both sides of the peripheral edge part 212 in the inner-outer direction of the mounting wall 111 (e.g., the fifth direction F5) by the insulating structure 23.

In the above technical solutions, the post terminal component 2 features a simple structure and is easy to manufacture, such that the relative fixation and insulating fit between the post terminal body 21 and the adapter structure 22 can be simply and effectively achieved. The sealing structural member 231 is clamped by using the peripheral edge part 212 of the post terminal body 21 and the adapter structure 22, such that the sealing structural member 231 can be located at the mating position between the adapter structure 22 and the post terminal body 21, which is conducive to sealing the mating position between the adapter structure 22 and the post terminal body 21 in a shorter path, thereby improving the sealing reliability. Moreover, it is conducive to reducing the dimension of the sealing structural member 231 and reducing the sealing area, facilitating compression and sealing, reducing sealing failure, and improving the sealing effect. Moreover, since the at least part of the sealing structural member 231 is clamped between the side of the peripheral edge part 212 facing the electrode component 3 and the adapter structure 22, the sealing structural member 231 can be sealed from the side of the peripheral edge part 212 facing the accommodating cavity 13, which can more effectively inhibit the leakage of the electrolytic solution from the mating position between the post terminal body 21 and the adapter structure 22, thereby improving the sealing effect.

Referring to FIG. 42 again, illustratively, the insulating structure 23 further includes a first insulating member 232, and the adapter structure 22 is clamped on both sides of the peripheral edge part 212 in the inner-outer direction of the mounting wall 111 (e.g., the fifth direction F5) by the first insulating member 232 and the sealing structural member 231 separately. In this embodiment, the configuration of the adapter structure 22 is not limited, and the adapter structure may be a single part or a combination of a plurality of parts (e.g., two or more parts).

Since at least part (e.g., the axial side part 231a) of the sealing structural member 231 is disposed on the side of the peripheral edge part 212 facing the electrode component 3, at least part of the first insulating member 232 is disposed on the side of the peripheral edge part 212 facing away from the electrode component 3, and the adapter structure 22 can be clamped on both sides of the peripheral edge part 212 in the inner-outer direction of the mounting wall 111 (e.g., the fifth direction F5) by the first insulating member 232 and the sealing structural member 231 separately.

In the above technical solutions, since the insulating structure 23 includes the first insulating member 232 and the sealing structural member 231 that are not integrated into an integrated member, the design and manufacturing of the insulating structure 23 can be simplified. In addition, according to the specific mating requirements with the post terminal body 21 and the adapter structure 22, the first insulating member 232 may be configured as an insulating member (e.g., a plastic member) that is substantially incompressible and does not have a sealing effect, or the first insulating member 232 may be configured as a sealing member (e.g., an elastic rubber member) that is compressible and has a sealing effect, so as to satisfy different actual requirements. In addition, when the first insulating member 232 is an insulating member (e.g., a plastic member) that is substantially incompressible and does not have a sealing effect, it is easy to control the compression amount of the sealing structural member 231, thereby improving the sealing effect.

Alternatively, in some other embodiments of the present application, the sealing structural member 231 may also be an integral structural member and encloses the peripheral edge part 212, so as to be separately located on one side, facing the electrode component 3, and one side, facing away from the electrode component 3, of the peripheral edge part 212. The adapter structure 22 may be clamped on both sides of the peripheral edge part 212 in the inner-outer direction of the mounting wall 111 (e.g., the fifth direction F5) by the sealing structural member 231. That is, the sealing structural member 231 is an integral annular structural member, i.e., featuring both insulating property and sealing performance. The sealing structural member 231 includes axial side parts 231a respectively located on the inner and outer sides of the peripheral edge part 212. In this way, the adapter structure 22 can be clamped on both sides of the peripheral edge part 212 in the inner-outer direction of the mounting wall 111 (e.g., the fifth direction F5) by the two axial side parts 231a of the sealing structural member 231. In the above technical solutions, since the sealing structural member 231 is an integral structural member and encloses the peripheral edge part 212, components and parts can be reduced, and assembly processes can be reduced.

Referring to FIGs. 39 to 42 again, in some embodiments of the present application, the adapter structure 22 includes a first adapter ring 221 and a second adapter ring 222. The second adapter ring 222 is disposed on one side of the first adapter ring 221 facing away from the electrode component 3, the second adapter ring 222 is connected to the first adapter ring 221, the first adapter ring 221 is connected to the mounting wall 111, the sealing structural member 231 is clamped between the first adapter ring 221 and the peripheral edge part 212, and the second adapter ring 222 is insulated from and fixedly fitted to the peripheral edge part 212 by the first insulating member 232.

For example, the first adapter ring 221 and the second adapter ring 222 may be connected by welding, riveting, drilling, or bonding. For example, the outer ring of one of the first adapter ring 221 and the second adapter ring 222 is connected to the mounting wall 111 by welding, riveting, drilling, or bonding. Illustratively, the first adapter ring 221 and the second adapter ring 222 are both made of aluminum and are connected by welding, and the first adapter ring 221 and the mounting wall 111 are both made of aluminum and are connected by welding, thereby helping to improve the welding pass rate.

Therefore, the adapter structure 22 includes the first adapter ring 221 and the second adapter ring 222 that are disposed inside and outside and are assembled and connected, thereby facilitating the assembly and connection of the adapter structure 22 with the insulating structure 23 and the post terminal body 21. As a result, the post terminal component 2 is easy to process and manufacture, and the compression amount of the sealing structural member 231 is easy to control, thereby improving the sealing reliability.

The manner in which the second adapter ring 222 is insulated from and fixedly fitted to the peripheral edge part 212 by the first insulating member 232 is not limited. For example, referring to FIGs. 39 to 42 again, the first insulating member 232 and the second adapter ring 222 may be connected by injection molding separately. For another example, referring to FIG. 43, FIG. 43 is a cross-sectional view of a post terminal component according to some embodiments of the present application. The second adapter ring 222 may include a stopper ring part 2221, and at least part of the first insulating member 232 is clamped between the stopper ring part 2221 and the peripheral edge part 212 in the inner-outer direction of the mounting wall 111 (e.g., the fifth direction F5). The first insulating member 232 is not limited in terms of material, and may be, for example, a plastic member or an elastic rubber member.

Referring to FIG. 42 again, illustratively, the adapter structure 22 further includes a first insulating frame 224, and the first insulating frame 224 is connected to one side of the first adapter ring 221 facing the electrode component 3. Therefore, the first insulating frame 224 can be used to provide insulation between the electrode component 3 and the first adapter ring 221, thereby reducing the difficulty in providing an insulating structure here. Illustratively, the first insulating frame 224 is provided with a pin, the first adapter ring 221 is provided with an insertion hole, and the pin is inserted into the insertion hole in an interference fit manner to achieve the connection between the first insulating frame 224 and the first adapter ring 221.

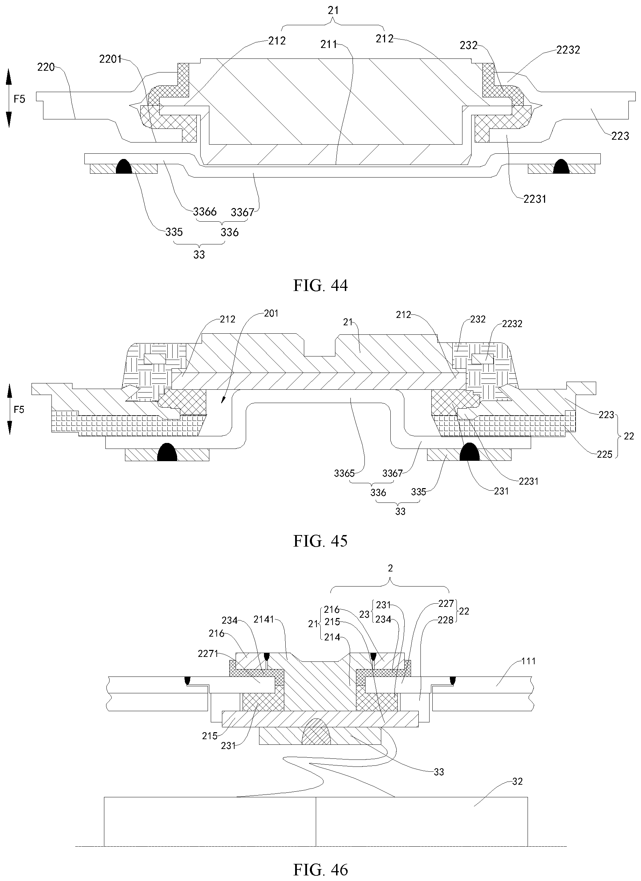

Referring to FIG. 44, FIG. 44 is a cross-sectional view of a post terminal component according to some embodiments of the present application. In some embodiments of the present application, the adapter structure 22 includes a third adapter ring 223, and the third adapter ring 223 includes an inner extending part 2231 and an outer extending part 2232 disposed integrally. That is, the inner extending part 2231 and the outer extending part 2232 are different parts of one integrated member, rather than two separate parts that are assembled and connected.

The end part of the inner extending part 2231 facing the post terminal body 21 (i.e., the inner ring of the inner extending part 2231) and the end part of the outer extending part 2232 facing the post terminal body 21 (i.e., the inner ring of the outer extending part 2232) are spaced apart in the inner-outer direction to be respectively clamped on both sides of the peripheral edge part 212 in the inner-outer direction of the mounting wall 111 (e.g., the fifth direction F5) by the insulating structure 23. The sealing structural member 231 is clamped between the inner extending part 2231 and the peripheral edge part 212, and the outer extending part 2232 is insulated from and fixedly fitted to the peripheral edge part 212 by the first insulating member 232.

The connection manner between the third adapter ring 223 and the mounting wall 111 is not limited, and may be, for example, welding, riveting, drilling, bonding, or the like. Illustratively, the third adapter ring 223 and the mounting wall 111 are both made of aluminum and are connected by welding, thereby helping to improve the welding pass rate.

The manner in which the outer extending part 2232 is insulated from and fixedly fitted to the peripheral edge part 212 by the first insulating member 232 is not limited. For example, referring to FIG. 44 again, the outer extending part 2232 presses the first insulating member 232 against the peripheral edge part 212 by riveting. For another example, referring to FIG. 45, FIG. 45 is a cross-sectional view of a post terminal component according to some embodiments of the present application. The first insulating member 232 is connected to the post terminal body 21 by injection molding, and the first insulating member 232 is connected to the outer extending part 2232 by injection molding. The inner extending part 2231 presses the sealing structural member 231 against the peripheral edge part 212 by riveting.

Illustratively, referring to FIG. 45 again, the adapter structure 22 further includes a second insulating frame 225, and the second insulating frame 225 is connected to one side of the third adapter ring 223 facing the electrode component 3. Therefore, the second insulating frame 225 can be used to provide insulation between the electrode component 3 and the third adapter ring 223, thereby eliminating the need for an insulating structure here. Illustratively, the second insulating frame 225 is provided with a pin, the third adapter ring 223 is provided with an insertion hole, and the pin is inserted into the insertion hole in an interference fit manner to achieve the connection between the second insulating frame 225 and the third adapter ring 223.

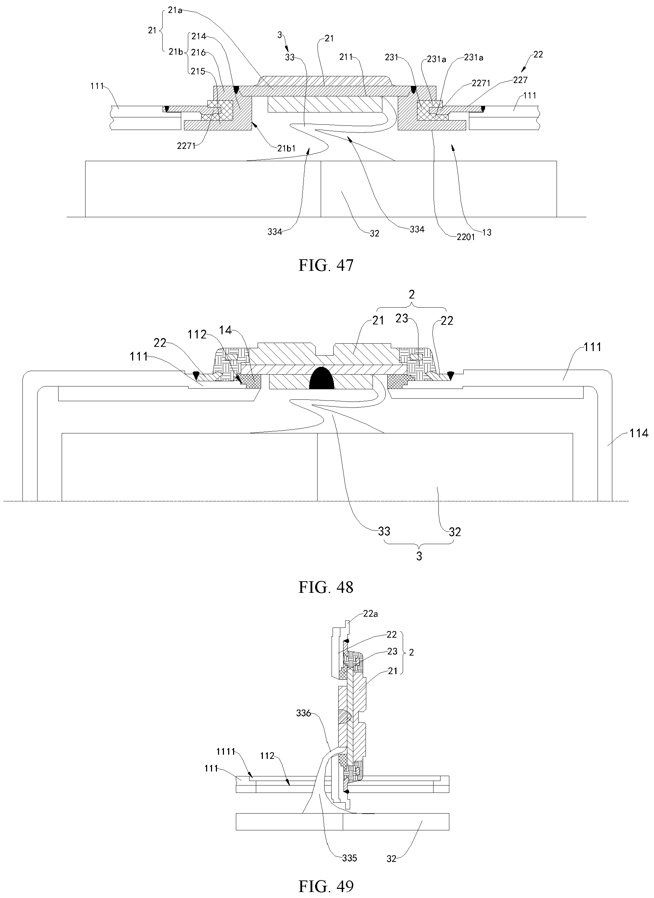

Referring to FIGs. 46 and 47, FIG. 46 is a cross-sectional view of a battery cell 102 according to some embodiments of the present application; FIG. 47 is a cross-sectional view of a battery cell 102 according to some embodiments of the present application. In some embodiments of the present application, the adapter structure 22 includes a mating ring part 2271, and the post terminal body 21 includes a penetration part 214 passing through the mating ring part 2271, and an inner limiting part 215 and an outer limiting part 216 connected to the penetration part 214 and clamped on the inner and outer sides of the mating ring part 2271. At least part of the sealing structural member 231 is clamped between the mating ring part 2271 and the inner limiting part 215.

Illustratively, the adapter structure 22 includes a fourth adapter ring 227, the fourth adapter ring 227 includes a mating ring part 2271, and the fourth adapter ring 227 is connected to the mounting wall 111. For example, the outer ring of the fourth adapter ring 227 is connected to the mounting wall 111. The connection manner between the fourth adapter ring 227 and the mounting wall 111 is not limited, and may be, for example, welding, riveting, drilling, bonding, or the like. Illustratively, the fourth adapter ring 227 and the mounting wall 111 are both made of aluminum and are connected by welding, thereby helping to improve the welding pass rate.

In the above technical solutions, the post terminal component 2 features a simple structure and is easy to manufacture, such that the relative fixation and insulating fit between the post terminal body 21 and the adapter structure 22 can be simply and effectively achieved. The sealing structural member 231 is clamped by using the mating position between the post terminal body 21 and the mating ring part 2271, such that the sealing structural member 231 can be located at the mating position between the adapter structure 22 and the post terminal body 21, which is conducive to sealing the mating position between the adapter structure 22 and the post terminal body 21 in a shorter path, thereby improving the sealing reliability. Moreover, it is conducive to reducing the dimension of the sealing structural member 231 and reducing the sealing area, facilitating compression and sealing, reducing sealing failure, and improving the sealing effect. Moreover, since the at least part of the sealing structural member 231 is clamped between the mating ring part 2271 and the inner limiting part 215, the sealing structural member 231 can be sealed from the side of the mating ring part 2271 facing the accommodating cavity 13, which can more effectively inhibit the leakage of the electrolytic solution from the mating position between the post terminal body 21 and the adapter structure 22, thereby improving the sealing effect.

Referring to FIG. 46 again, the insulating structure 23 may further include a second insulating member 234. At least part of the sealing structural member 231 is clamped between the inner limiting part 215 and the mating ring part 2271, and at least part of the second insulating member 234 is clamped between the outer limiting part 216 and the mating ring part 2271.

In the above technical solutions, since the insulating structure 23 includes the second insulating member 234 and the sealing structural member 231 that are not integrated into an integrated member, the design and manufacturing of the insulating structure 23 can be simplified. In addition, according to the specific mating requirements with the post terminal body 21 and the adapter structure 22, the second insulating member 234 may be configured as an insulating member (e.g., a plastic member) that is substantially incompressible and does not have a sealing effect, or the second insulating member 234 may be configured as a sealing member (e.g., an elastic rubber member) that is compressible and has a sealing effect, so as to satisfy different actual requirements. In addition, when the second insulating member 234 is an insulating member (e.g., a plastic member) that is substantially incompressible and does not have a sealing effect, it is easy to control the compression amount of the sealing structural member 231, thereby improving the sealing effect.

Alternatively, referring to FIG. 47, in some other embodiments of the present application, the sealing structural member 231 may also be an integral structural member and encloses the mating ring part 2271, so as to be separately located on one side, facing the electrode component 3, and one side, facing away from the electrode component 3, of the mating ring part 2271. The post terminal body 21 is clamped on both sides of the mating ring part 2271 in the inner-outer direction of the mounting wall 111 (e.g., the fifth direction F5) by the sealing structural member 231. That is, the sealing structural member 231 is an integral annular structural member, i.e., featuring both insulating property and sealing performance. The sealing structural member 231 includes axial side parts 231a respectively located on the inner and outer sides of the mating ring part 2271. In this way, the adapter structure 22 can be clamped on both sides of the mating ring part 2271 in the inner-outer direction of the mounting wall 111 (e.g., the fifth direction F5) by the two axial side parts 231a of the sealing structural member 231. In the above technical solutions, since the sealing structural member 231 is an integral structural member and encloses the mating ring part 2271, components and parts can be reduced, and assembly processes can be reduced.

In the embodiments of the present application, when the post terminal body 21 includes a penetration part 214, and an inner limiting part 215 and an outer limiting part 216 connected to the penetration part 214 and clamped on both sides of the mating ring part 2271, the configuration of the post terminal body 21 is not limited, and the post terminal body may be a single part or a combination of a plurality of parts (e.g., two or more parts).

Illustratively, referring to FIG. 46 again, the outer limiting part 216 and the penetration part 214 are assembled and connected on one side of the mating ring part 2271 facing away from the inner limiting part 215. The manner of assembly and connection between the outer limiting part 216 and the penetration part 214 is not limited, for example, welding, drilling, bonding connection, and the like. The assembly and connection means that two members are connected together by means of a connection process. Therefore, by configuring the outer limiting part 216 and the penetration part 214 as separate members, and assembling and connecting the outer limiting part and the penetration part, the post terminal body 21 features a simple structure for easy assembly and connection with the adapter structure 22. In addition, when the outer limiting part 216 is welded to the penetration part 214, the thermal impact on the sealing structural member 231 clamped between the inner limiting part 215 and the mating ring part 227 can be reduced, and the sealing reliability of the sealing structural member 231 can be improved.

In the above embodiments, the connection manner between the penetration part 214 and the inner limiting part 215 is not limited, and the penetration part and the inner limiting part may be an integrated member, or may be separate members and connected together in advance. Illustratively, one end of the penetration part 214 facing away from the inner limiting part 215 may include a riveted part 2141. During assembly, the penetration part 214 may pass through the mating ring part 2271 fitted with the insulating structure 23 in a direction from the inner limiting part 215 to the outer limiting part 216, and then the riveted part 2141 is riveted to limit the penetration part 214 from falling off in a direction from the outer limiting part 216 to the inner limiting part 215. Then, the riveted part 2141 may be connected to the outer limiting part 216, thereby facilitating the connection, such as welding, between the penetration part 214 and the outer limiting part 216. Alternatively, the riveted part 2141 may be omitted, and the riveting process after the penetration of the penetration part 214 may be omitted.

Illustratively, referring to FIG. 47 again, in some other embodiments of the present application, the outer limiting part 216 and the penetration part 214 are an integrated member, and the outer limiting part 216 presses the second insulating member 234 against the mating ring part 2271 by riveting. In the above technical solutions, the assembly and connection of the outer limiting part 216 with the insulating structure 23 and the adapter structure 22 are achieved by riveting, such that the thermal impact on the sealing structural member 231 caused by the heat generated when the outer limiting part 216 is connected to the insulating structure 23 and the adapter structure 22 is reduced, and the sealing reliability of the sealing structural member 231 is improved. In addition, by pressing the second insulating member 234 against the mating ring part 2271 by the riveting of the outer limiting part 216, the compression amount of the sealing structural member 231 can be easily controlled, thereby achieving a relatively good compression effect.

In the above embodiments, the connection manner between the penetration part 214 and the inner limiting part 215 is not limited, and the penetration part and the inner limiting part may be an integrated member, or may be separate members and connected together in advance. Illustratively, during assembly, the penetration part 214 may pass through the mating ring part 2271 fitted with the insulating structure 23 in a direction from the inner limiting part 215 to the outer limiting part 216, and then the outer limiting part 216 is riveted to limit the relative movement between the post terminal component 21 and the adapter structure 22.

The post terminal body 21 is of a solid structure, or may be of a hollow structure. Illustratively, when the post terminal body 21 is of a hollow structure, referring to FIG. 47, the post terminal body 21 includes a first post terminal member 21a and a second post terminal member 21b. The second post terminal member 21b consists of the penetration part 214, the inner limiting part 215, and the outer limiting part 216 and is mounted on the mounting wall 111. The penetration part 214 surrounds a mating hole 21b1 penetrating in the inner-outer direction of the mounting wall 111. The first post terminal member 21a is assembled on one side of the second post terminal member 21b facing away from the electrode component 3 and covers the mating hole 21b1 to form an accommodating space between the first post terminal member 21a and the second post terminal member 21b that is open in a direction facing the electrode component 3. Part of the conductive part 33 may extend into the accommodating space and be connected to the first post terminal member 21a, such that the post terminal body 21 can receive the conductive part 33 to reduce the space of the accommodating cavity 13 occupied by the conductive part 33, which is conducive to improving the energy density of the battery cell 102.

Referring to FIG. 46 again, in some embodiments of the present application, the adapter structure 22 further includes a third insulating frame 228, and the third insulating frame 228 is connected to one side of the fourth adapter ring 227 facing the electrode component 3. Therefore, the third insulating frame 228 can be used to provide insulation between the electrode component 3 and the fourth adapter ring 227, thereby eliminating the need for an insulating structure here. Illustratively, the third insulating frame 228 is provided with a pin, the fourth adapter ring 227 is provided with an insertion hole, and the pin is inserted into the insertion hole in an interference fit manner to achieve the connection between the third insulating frame 228 and the fourth adapter ring 227.

Referring to FIG. 48, FIG. 48 is a cross-sectional view of a battery cell 102 according to some embodiments of the present application. In some embodiments of the present application, the mounting wall 111 is provided with a mounting hole 112, a seal ring 14 is disposed around the mounting hole 112, and the seal ring 14 is clamped between the post terminal component 2 and the mounting wall 111. Therefore, the post terminal component 2 features a simple structure for easy manufacturing and for easy assembly and connection with the mounting wall 111.

In some embodiments of the present application, the mounting wall 111 is provided with a mounting hole 112, the post terminal component 2 covers the mounting hole 112, and an edge of the adapter structure 22 overlaps one side of the mounting wall 111 in the wall thickness direction. In this way, the adapter structure 22 covers one side of the mounting wall 111 in the wall thickness direction, that is, the adapter structure 22 covers the outer side of the mounting wall 111 or the inner side of the mounting wall 111, thereby facilitating the assembly of the adapter structure 22 with the mounting wall 111.

Illustratively, the adapter structure 22 is connected to the mounting wall 111 by welding. For example, after the adapter structure 22 covers the mounting wall 111, the adapter structure 22 and the mounting wall 111 may be connected by welding, thereby facilitating manufacturing and better ensuring the connection reliability between the adapter structure 22 and the mounting wall 111. For example, welding may be performed from the outer side of the mounting wall 111, such that the weld seam formed by the connection between the two is exposed on one side of the mounting wall 111 facing away from the electrode component 3 (i.e., one side facing away from the active substance-coated part 32), thereby facilitating the welding operation and expanding the welding space. The present application is not limited thereto. For example, in some other embodiments of the present application, the adapter structure 22 may also be configured to pass through the mounting hole 112 and be connected to the mounting wall 111 by riveting.

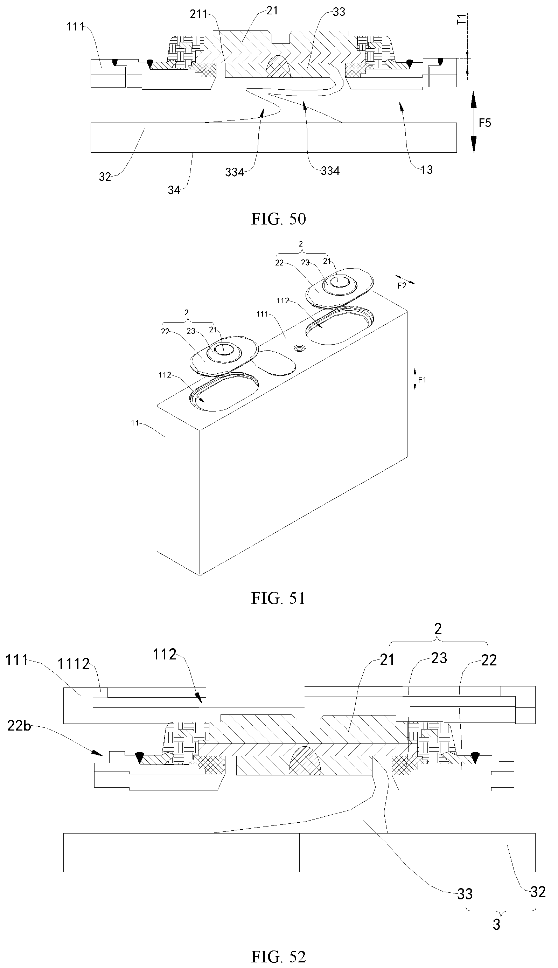

Referring to FIGs. 49 and 50, FIG. 49 is a partial cross-sectional view of a battery cell 102 according to some embodiments of the present application, where a post terminal component 2 is in a state before covering a mounting wall 111; FIG. 50 is a state diagram of the post terminal component 2 shown in FIG. 49 after covering a mounting wall 111.

Referring to FIGs. 49 and 50, in some embodiments, when the electrode component 3 and the post terminal component 2 are connected first, and then the post terminal component 2 is assembled and connected to the mounting wall 111, after the electrode component 3 is connected to the post terminal component 2 (for example, the post terminal component 2 and the electrode component 3 may be first connected and then mounted into the housing body 11 together, and then the post terminal component 2 extends out of the mounting wall 111 from the mounting hole 112; or, for another example, the electrode component 3 is mounted into the housing body 11, and the conductive part 33 passes through the mounting hole 112 and is connected to the post terminal component 2 disposed on the outer side of the mounting wall 111 in advance), the post terminal component 2 may cover the mounting hole 112 of the mounting wall 111 from the outer side of the mounting wall 111 (i.e., the side facing away from the active substance-coated part 32). In this case, an edge of the adapter structure 22 overlaps one side of the mounting wall 111 facing away from the electrode component 3. Therefore, since the post terminal component 2 covers the mounting wall 111 from the outer side, the assembly and connection between the post terminal component 2 and the mounting wall 111 are facilitated, which is conducive to improving the connection reliability between the post terminal component 2 and the mounting wall 111.

Referring to FIGs. 49 and 50, in some embodiments of the present application, when the edge of the adapter structure 22 overlaps the side of the mounting wall 111 facing away from the electrode component 3, the mounting wall 111 may be provided with a first recess 1111 disposed around the mounting hole 112, the first recess 1111 is open in a direction facing away from the electrode component 3 (that is, the first recess 1111 is open in a direction facing away from the active substance-coated part 32), and the edge of the adapter structure 22 is embedded in the first recess 1111. The edge of the adapter structure 22 is provided with a flange part 22a surrounding the adapter structure 22, and the flange part 22a is embedded in the first recess 1111. Therefore, it is convenient to support and position the connection between the adapter structure 22 and the mounting wall 111, which is conducive to the welding connection between the two from the outer side of the mounting wall 111 (i.e., the side facing away from the active substance-coated part 32).

Referring to FIGs. 49 and 50 again, illustratively, the thickness of the flange part 22a matches the recess depth T1 of the first recess 1111. "Matching" means that the thickness of the flange part 22a is substantially the same as the recess depth of the first recess 1111. Therefore, the welding of the flange part 22a and the mounting wall 111 is facilitated. The thickness of the flange part 22a is not excessively large relative to the recess depth of the first recess 1111, which can reduce unnecessary occupation of space. The thickness of the flange part 22a is not excessively small relative to the recess depth of the first recess 1111, such that the welding strength requirements can be satisfied.

Referring to FIGs. 49 to 51, FIG. 51 is an exploded view of a partial configuration of a battery cell 102 according to some embodiments of the present application. In some embodiments of the present application, the mounting hole 112 is an elongated strip-shaped hole (e.g., a rectangular, elliptical, or track-shaped hole), and the post terminal component 2 is formed as an elongated strip-shaped structure (e.g., a rectangular, elliptical, or track-shaped structure) matching the shape of the mounting hole 112. When the electrode component 3 and the post terminal component 2 are connected first, then the post terminal component 2 and the electrode component 3 are mounted into the housing body 11 together, then the post terminal component 2 extends from the mounting hole 112 to the outer side of the mounting wall 111, then the post terminal component 2 is flipped from the outer side of the mounting wall 111 to cover the mounting hole 112 with the post terminal component 2, and then the post terminal component 2 is connected to the mounting wall 111, if the post terminal component 2 is configured as an elongated strip-shaped structure matching the shape of the mounting hole 112, the post terminal component 2 can be adjusted to pass through the mounting hole 112 at an angle at which the thickness direction thereof is close to the width direction of the mounting hole 112 (e.g., the second direction F2 shown in FIG. 51). After the post terminal component 2 passes through the mounting hole 112, the thickness direction of the post terminal component 2 is rotated to be close to the thickness direction of the mounting wall 111 (e.g., the first direction F1 shown in FIG. 51). In this way, the space required for the flipping motion of the post terminal component 2 is small, which can reduce the space required for the flipping of the post terminal component 2, thereby helping to shorten the length of the conductive part 33, save materials, and reduce costs. In addition, the redundancy of the conductive part 33 can be reduced, and the space of the accommodating cavity 13 occupied by the conductive part 33 can be reduced, which is conducive to improving the energy density of the battery cell 102.

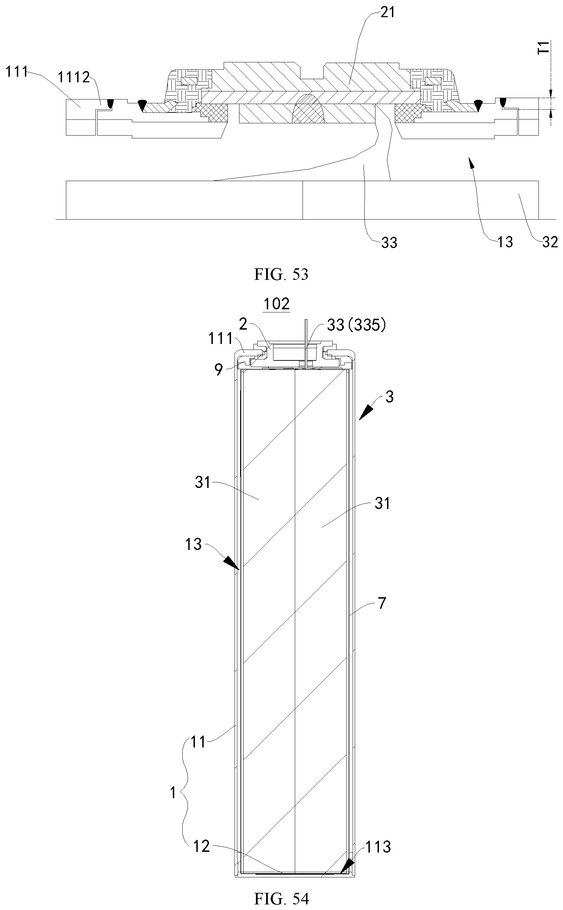

Referring to FIGs. 52 and 53, FIG. 52 is a partial cross-sectional view of a battery cell 102 according to some embodiments of the present application, where a post terminal component 2 is in a state before covering a mounting wall 111; FIG. 53 is a state diagram of the post terminal component 2 shown in FIG. 52 after covering a mounting wall 111.

Referring to FIGs. 52 and 53, in some embodiments, when the electrode component 3 and the post terminal component 2 are connected first, and then the post terminal component 2 is assembled and connected to the mounting wall 111, after the electrode component 3 is connected to the post terminal component 2, the electrode component 3 and the post terminal component 2 may be mounted into the housing body 11 together, such that the post terminal component 2 can cover the mounting hole 112 of the mounting wall 111 from the inner side of the mounting wall 111 (i.e., one side facing the active substance-coated part 32). In this case, an edge of the adapter structure 22 overlaps one side of the mounting wall 111 facing the electrode component 3. Therefore, since the post terminal component 2 is disposed in the mounting hole 112 from the inner side of the mounting wall 111, the electrode component 3 and the post terminal component 2 can be mounted into the housing body 11 together, and the post terminal component 2 does not need to pass through the mounting hole 112, thereby reducing the operation steps and reducing the operation difficulty.

Referring to FIGs. 52 and 53, in some embodiments of the present application, when the edge of the adapter structure 22 overlaps the side of the mounting wall 111 facing the electrode component 3, the edge of the adapter structure 22 is provided with a second recess 22b that is open in a direction facing away from the electrode component 3 (i.e., the second recess 22b is open in a direction facing away from the active substance-coated part 32). The mounting wall 111 includes a lap joint part 1112 protruding into the mounting hole 112, and the lap joint part 1112 is embedded in the second recess 22b. Therefore, it is convenient to support and position the connection between the post terminal component 2 and the mounting wall 111, which is conducive to the welding connection between the two from the outer side of the mounting wall 111 (i.e., the side facing away from the active substance-coated part 32).

Referring to FIGs. 52 and 53 again, illustratively, the thickness of the lap joint part 1112 matches the recess depth T2 of the second recess 22b. "Matching" means that the thickness of the lap joint part 1112 is substantially the same as the recess depth of the second recess 22b. Therefore, the welding of the lap joint part 1112 and the mounting wall 111 is facilitated. The thickness of the lap joint part 1112 is not excessively large relative to the recess depth of the second recess 22b, which can reduce unnecessary occupation of space. The thickness of the lap joint part 1112 is not excessively small relative to the recess depth of the second recess 22b, such that the welding strength requirements can be satisfied.

In some embodiments of the present application, referring to FIG. 5 again, the post terminal component 2 defines, in an enclosing manner, a first accommodating groove 201 that is, relative to the mounting wall 111, recessed in a direction facing away from the electrode component 3 and open in a direction facing the electrode component 3. The electrode component 3 is connected to the post terminal component 2 by the conductive part 33, and at least part of the conductive part 33 is accommodated in the first accommodating groove 201 and connected to the post terminal body 21. That is, the post terminal component 2 defines, in an enclosing manner, the first accommodating groove 201, the groove wall of the first accommodating groove 201 is composed of the post terminal component 2, the first accommodating groove 201 is recessed in a direction facing away from the active substance-coated part 32, and the first accommodating groove 201 is open in a direction facing the active substance-coated part 32, such that the first accommodating groove 201 is in communication with the accommodating cavity 13.

Therefore, by providing the first accommodating groove 201 to accommodate the conductive part 33, the space of the accommodating cavity 13 occupied by the conductive part 33 can be reduced, such that the accommodating cavity 13 has a larger space to accommodate the active substance-coated part 32, which is conducive to increasing the volume of the active substance-coated part 32, thereby increasing the energy density of the battery cell 102. In addition, since the first accommodating groove 201 is open in the direction facing the electrode component 13, the conductive part 33 can easily extend into the first accommodating groove 201, thereby reducing the operation difficulty.

Illustratively, referring to FIG. 5 again, the first accommodating groove 201 is formed in one side of the post terminal body 21 and the adapter structure 22 facing the electrode component 3 (i.e., one side facing the active substance-coated part 32), and the adapter structure 22 protrudes in a direction facing away from the electrode component 3 (i.e., a direction facing away from the active substance-coated part 32) relative to the mounting wall 111, such that the first accommodating groove 201 is recessed in a direction facing away from the electrode component 3 relative to the mounting wall 111.

Therefore, the adapter structure 22 is manufactured into an outwardly protruding form, such that a part of the first accommodating groove 201 is formed in one side of the post terminal body 21 facing the electrode component 3, another part of the first accommodating groove 201 is formed in one side of the adapter structure 22 facing the electrode component 3, and the first accommodating groove 201 is in a shape of being recessed in a direction facing away from the electrode component 3 relative to the mounting wall 111. As a result, the side of the post terminal body 21 facing the electrode component 3 and the side of the adapter structure 22 facing the electrode component 3 are each provided with the first accommodating groove to accommodate the conductive part 33, which not only facilitates the receiving of the conductive part 33 to a greater extent, but also facilitates the diverse design in the form of the conductive part 33.

In other embodiments of the present application, referring to FIG. 45, when the adapter structure 22 does not protrude in the direction facing away from the electrode component 3 (i.e., the direction facing away from the active substance-coated part 32) relative to the mounting wall 111, the first accommodating groove 201 recessed in the direction facing away from the electrode component 3 relative to the mounting wall 111 may also be defined by the height difference between the adapter structure 22 and the post terminal body 21.

In some embodiments of the present application, referring to FIG. 5 again, a surface of the post terminal body 21 on one end facing the electrode component 3 is an inner end surface 211 of the post terminal body 21. The inner end surface 211 of the post terminal body 21 participates in defining the first accommodating groove 201 in an enclosing manner, and the conductive part 33 is connected to the inner end surface 211 of the post terminal body 21. That is, at least part of the inner end surface 211 of the post terminal body 21 participates in defining the groove wall of the first accommodating groove 201, and the conductive part 33 is connected to the part of the inner end surface 211 of the post terminal body 21 serving as the groove wall of the first accommodating groove 201. In the above technical solutions, at least part of the first accommodating groove 201 is enclosed by a surface of the post terminal body 21 on one side facing the electrode component 3, and the conductive part 33 received in the first accommodating groove 201 can easily come into contact with and be connected to the post terminal body 21, thereby improving the convenience of the connection and simplifying the structure.

Illustratively, when at least part of the conductive part 33 is accommodated in the first accommodating groove 201, a post terminal connecting part (e.g., a gathering part 313 of the tab 335, or the second connecting segment 3363 or the first conductive segment 3365 of the conductive member 336 described herein) of the conductive part 33 (e.g., the tab 335 or the conductive member 336) may be laid on the inner end surface 211 of the post terminal body 21 and connected to the inner end surface 211 of the post terminal body 21. During processing, the post terminal connecting part of the conductive part 33 may be first mounted in the first accommodating groove 201, and then the post terminal connecting part is laid on the inner end surface 211 of the post terminal body 21 and connected to the inner end surface 211 of the post terminal body 21.

Illustratively, the conductive part 33 may include a post terminal connecting part. The post terminal connecting part may be in the shape of a relatively hard plate that will not bend or deform downward under the action of gravity, for example, a gathering part 313 (such as an ultrasonic weld mark) of the tab 335, or the second connecting segment 3363 (such as a metal sheet) or the first conductive segment 3365 (such as a metal sheet) of the conductive member 336 described herein.

Illustratively, referring to FIG. 5, regardless of whether the adapter structure 22 protrudes in the direction facing away from the electrode component 3 relative to the mounting wall 111, the position of the inner end surface 220 of the adapter structure 22 adjacent to the post terminal body 21 is a surrounding region 2201 surrounding the post terminal body 21, and the surrounding region 2201 is flush with the inner end surface 211 of the post terminal body 21. The inner end surface 220 of the adapter structure 22 may be of a planar structure or a non-planar structure, such as in a protruding shape, and the circumferential part of the inner end surface 220 of the adapter structure 22 most facing the post terminal body 21 is the surrounding region 2201.

Illustratively, when the inner end surface 211 of the post terminal body 21 is configured to be large (for example, the adapter structure 22 is formed as an elongated strip extending in the length direction of the mounting wall 111, and the contour shape of the post terminal body 21 matches the contour shape of the adapter structure 22), and when the surrounding region 2201 is flush with the inner end surface 211 of the post terminal body 21, the post terminal connecting part of the conductive part 33 (e.g., the gathering part 313 of the tab 335, or the second connecting segment 3363 of the conductive member 336 described herein) may be completely laid flat on the inner end surface 211 of the post terminal body 21.

Illustratively, referring to FIGs. 39 and 43, when the inner end surface 211 of the post terminal body 21 is small (for example, the adapter structure 22 is configured as an elongated strip extending in the length direction of the mounting wall 111, and the post terminal body 21 is disposed at the center of the adapter structure 22 and the contour thereof is circular), and when the surrounding region 2201 is flush with the inner end surface 211 of the post terminal body 21, a part of the post terminal connecting part of the conductive part 33 (e.g., the gathering part 313 of the tab 335, or the second connecting segment 3363 of the conductive member 336 described herein) may be laid flat on the inner end surface 211 of the post terminal body 21, and the remaining part may be laid flat on the surrounding region 2201, such that the post terminal connecting part of the conductive part 33 (for example, in the case where the post terminal connecting part is also in an elongated strip shape) can be supported as a whole, which facilitates the pressing by a welding press nozzle and enables the conductive part 33 to be reliably connected to the post terminal body 21.

Illustratively, the conductive part 33 may include a post terminal connecting part. The post terminal connecting part may be in the shape of a relatively hard plate that will not bend or deform downward under the action of gravity, for example, a gathering part 313 (such as an ultrasonic weld mark) of the tab 335, or the second connecting segment 3363 (such as a metal sheet) or the first conductive segment 3365 (such as a metal sheet) of the conductive member 336 described herein.

Illustratively, referring to FIG. 44, regardless of whether the adapter structure 22 protrudes in the direction facing away from the electrode component 3 relative to the mounting wall 111, the position of the inner end surface 220 of the adapter structure 22 adjacent to the post terminal body 21 is a surrounding region 2201 surrounding the post terminal body 21, and the inner end surface 211 of the post terminal body 21 protrudes from the surrounding region 2201 in a direction facing the electrode component 3. The inner end surface 220 of the adapter structure 22 may be of a planar structure or a non-planar structure, such as in a protruding shape, and the circumferential part of the inner end surface 220 of the adapter structure 22 most facing the post terminal body 21 is the surrounding region 2201.

Therefore, by allowing the inner end surface 211 of the post terminal body 21 to protrude from the surrounding region 2201 in the direction facing the electrode component 3, the post terminal body 21 can be effectively retracted in the direction of the accommodating cavity 13 when the height of the post terminal body 21 is fixed, thereby reducing the space occupied by the post terminal component 2 outside the housing component 1, and reducing the dimension of the battery cell 102 in a direction in which the post terminal component 2 is disposed (for example, the first direction F1 shown in FIG. 3).

Illustratively, when the inner end surface 211 of the post terminal body 21 is configured to be large (for example, the adapter structure 22 is formed as an elongated strip extending in the length direction of the mounting wall 111, and the contour shape of the post terminal body 21 matches the contour shape of the adapter structure 22), and when the inner end surface 211 of the post terminal body 21 protrudes from the surrounding region 2201 in the direction facing the electrode component 3, the post terminal connecting part of the conductive part 33 (e.g., the gathering part 313 of the tab 335, or the second connecting segment 3363 of the conductive member 336 described herein) may be completely laid flat on the inner end surface 211 of the post terminal body 21.

Illustratively, referring to FIG. 44, when the inner end surface 211 of the post terminal body 21 is small (for example, the adapter structure 22 is configured as an elongated strip extending in the length direction of the mounting wall 111, and the post terminal body 21 is disposed at the center of the adapter structure 22 and the contour thereof is circular), and when the inner end surface 211 of the post terminal body 21 protrudes from the surrounding region 2201 in the direction facing the electrode component 3, the conductive part 33 may be configured to include the tab 335 and the conductive member 336 connected to the tab 335. The conductive member 336 includes a first conductive segment 3365 laid on the inner end surface 211 of the post terminal body 21 and a second conductive segment 3366 staggered from the inner end surface 211 of the post terminal body 21. The second conductive segment 3366 protrudes in a direction facing away from the electrode component 3 (i.e., toward the outer side, or in a direction facing away from the active substance-coated part 32) relative to the first conductive segment 3365, and the tab 335 is connected to the second conductive segment 3366. Therefore, the second conductive segment 3366 of the conductive member 336 and the tab 335 can be accommodated by using the height difference of the inner end surface 211 of the post terminal body 21 relative to the surrounding region 2201, thereby making full use of the space, reducing the space of the accommodating cavity 13 occupied by the conductive part 33, and improving the energy density of the battery cell 102. Illustratively, if the part (such as the gathering part 313 described herein) of the tab 335 connected to the second conductive segment 3366 is in an elongated strip shape, the second conductive segment 3366 may also be configured in an elongated strip shape, and meanwhile, the first conductive segment 3365 is configured in a circular shape matching the shape of the post terminal body 21, which can satisfy the connection requirements. In addition, when the conductive member 336 includes the first conductive segment 3365 and the second conductive segment 3366, in order to ensure that the second conductive segment 3366 protrudes in the direction facing away from the electrode component 3 relative to the first conductive segment 3365, the conductive member 336 can be manufactured from a material having a certain hardness and thickness. For example, the conductive member 336 may be a metal sheet.

Illustratively, referring to FIG. 45, regardless of whether the adapter structure 22 protrudes in the direction facing away from the electrode component 3 relative to the mounting wall 111, the position of the inner end surface 220 of the adapter structure 22 adjacent to the post terminal body 21 is a surrounding region 2201 surrounding the post terminal body 21, and the surrounding region 2201 protrudes from the inner end surface 211 of the post terminal body 21 in a direction facing the electrode component 3. The inner end surface 220 of the adapter structure 22 may be of a planar structure or a non-planar structure, such as in a protruding shape, and the circumferential part of the inner end surface 220 of the adapter structure 22 most facing the post terminal body 21 is the surrounding region 2201.

Illustratively, referring to FIG. 47, when the inner end surface 211 of the post terminal body 21 is configured to be large (for example, the adapter structure 22 is formed as an elongated strip extending in the length direction of the mounting wall 111, and the contour shape of the post terminal body 21 matches the contour shape of the adapter structure 22), and when the surrounding region 2201 protrudes from the inner end surface 211 of the post terminal body 21 in the direction facing the electrode component 3, the post terminal connecting part of the conductive part 33 (e.g., the gathering part 313 of the tab 335, or the second connecting segment 3363 of the conductive member 336 described herein) may be completely laid flat on the inner end surface 211 of the post terminal body 21.

Illustratively, referring to FIG. 45, when the inner end surface 211 of the post terminal body 21 is small (for example, the adapter structure 22 is configured as an elongated strip extending in the length direction of the mounting wall 111, and the post terminal body 21 is disposed at the center of the adapter structure 22 and the contour thereof is circular), and when the surrounding region 2201 protrudes from the inner end surface 211 of the post terminal body 21 in the direction facing the electrode component 3, the conductive member 336 may be configured to include a first conductive segment 3365 laid on the inner end surface 211 of the post terminal body 21 and a third conductive segment 3367 staggered from the inner end surface 211 of the post terminal body 21. The third conductive segment 3367 protrudes in a direction facing the electrode component 3 relative to the first conductive segment 3365, and the tab 335 is connected to the third conductive segment 3367. Therefore, the conductive member 336 can not only satisfy the connection requirements with the inner end surface 211 of the post terminal body 21, but also easily satisfy the connection requirements with the tab 335. In addition, when the conductive member 336 includes the first conductive segment 3365 and the third conductive segment 3367, in order to ensure that the third conductive segment 3367 protrudes in the direction facing the electrode component 3 relative to the first conductive segment 3365, the conductive member 336 can be manufactured by using a material having a certain hardness and thickness. For example, the conductive member 336 may be a metal sheet. Illustratively, if the part (such as the gathering part 313 described herein) of the tab 335 connected to the third conductive segment 3367 is in an elongated strip shape, the third conductive segment 3367 may also be configured in an elongated strip shape, and meanwhile, the first conductive segment 3365 is configured in a shape matching the shape of a mating region 211a (such as a circular shape), which can satisfy the connection requirements.

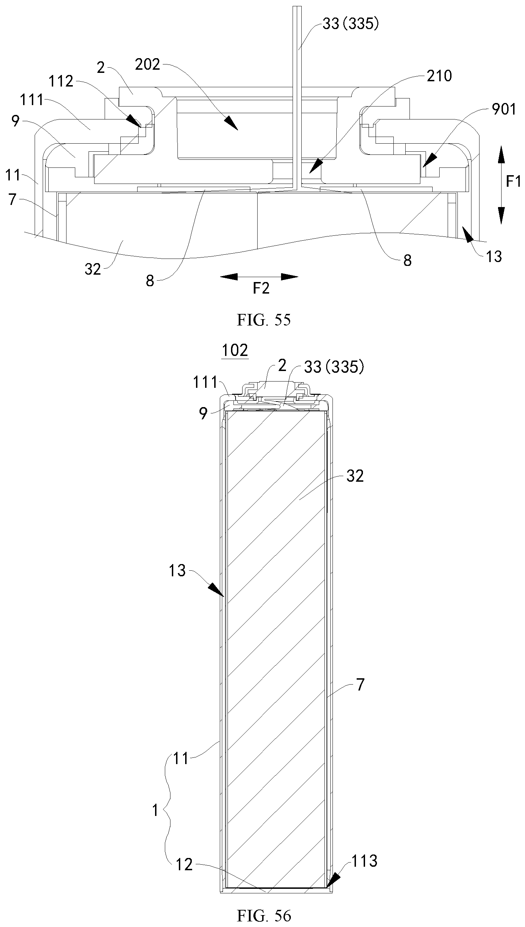

Referring to FIGs. 54 and 55, FIG. 54 is a structural cross-sectional view of a battery cell 102 according to yet some other embodiments of the present application; FIG. 55 is a partially enlarged view of the battery cell 102 shown in FIG. 54. In some embodiments, the post terminal body 21 is provided with a second accommodating groove 202, the second accommodating groove 202 is open facing away from the accommodating cavity, a groove bottom wall of the second accommodating groove 202 is provided with a through hole 210, and the conductive part 33 passes through the through hole 210 and is at least partially accommodated in the second accommodating groove 202.

In the above technical solutions, in one aspect, the arrangement of the second accommodating groove 202 in the post terminal body 21 can reduce the weight of the post terminal body 21 to a certain extent, so as to improve the gravimetric energy density of the battery cell 102 and the battery 100. In another aspect, since the groove opening of the second accommodating groove 202 is formed in the outer end surface 213 of the post terminal body 21, and the outer end surface 213 of the post terminal body 21 is the surface of the post terminal body 21 on the side distal to the active substance-coated part 32, the second accommodating groove 202 can be open in a direction facing away from the active substance-coated part 32. In this way, when at least part of the conductive part 33 is accommodated in the second accommodating groove 202, the receiving or sorting of the conductive part 33 and operations on the electrical connection between the conductive part 33 and the post terminal body 21 can be easily achieved by means of the groove opening of the second accommodating groove 202, thereby reducing difficulties in producing the battery cell 102 and improving the production efficiency of the battery cell 102.

In addition, since the second accommodating groove 202 is in communication with the accommodating cavity 13 by the through hole 210, the second accommodating groove 202 may also serve as a buffer and temporary storage structure for the electrolytic solution, such that a greater amount of electrolytic solution can be accommodated in the accommodating cavity 13; since the electrolytic solution will be consumed during the charging and discharging process of the battery cell 102, a greater amount of electrolytic solution can prolong the service life of the battery cell 102. Also, since the second accommodating groove 202 can be in communication with the accommodating cavity 13 by the through hole 210, the second accommodating groove 202 may also serve as an accommodating and buffer structure for gas generated inside the electrode assembly 31, so as to reduce the expansion of the battery cell 102, thereby improving the reliability and stability of the battery cell 102.

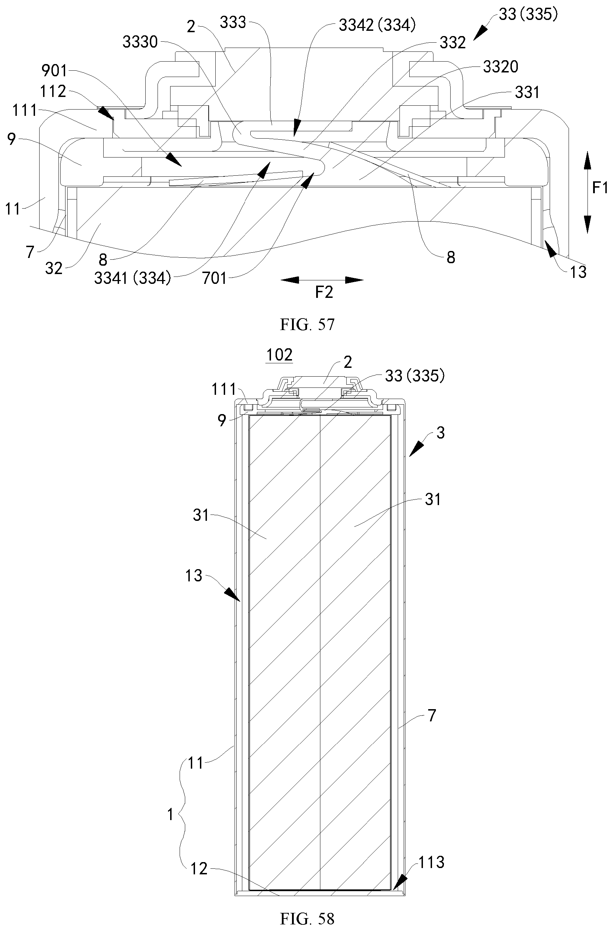

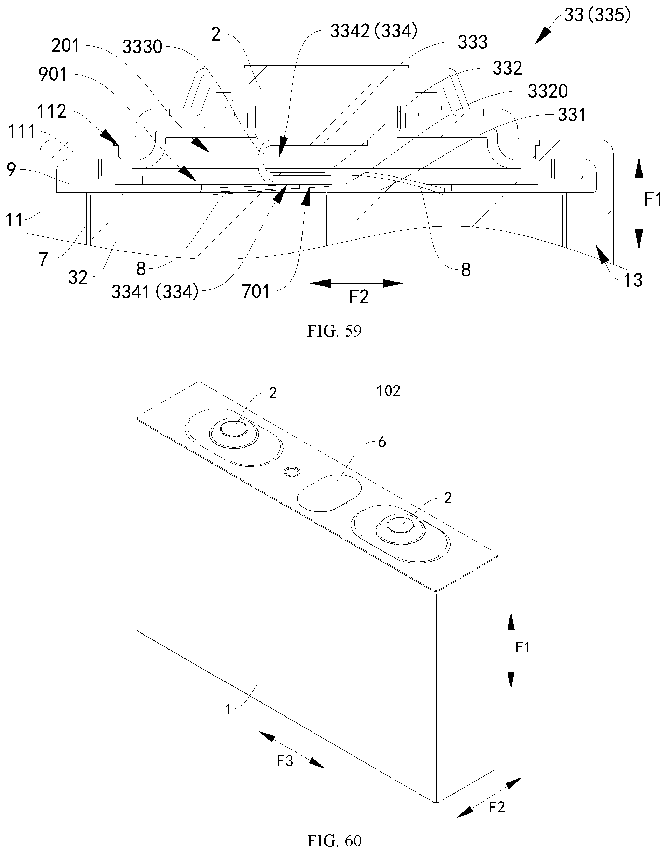

Referring to FIGs. 56 to 59, FIG. 56 is a structural cross-sectional view of a battery cell 102 according to some other embodiments of the present application; FIG. 57 is a partially enlarged view of the battery cell 102 shown in FIG. 56; FIG. 58 is a structural cross-sectional view of a battery cell 102 according to still some other embodiments of the present application; FIG. 59 is a partially enlarged view of the battery cell 102 shown in FIG. 58. The housing component 1 includes a housing body 11 provided with an opening 113 and a housing cover 12. The housing cover 12 covers the opening 113, and the mounting wall 111 includes a wall body of the housing body 11 disposed opposite to the opening 113. That is, the post terminal component 2 is mounted on a wall body of the housing body 11 opposite to the opening 113.

In this embodiment, the post terminal component 2 and the mounting wall 111 are located on the same side of the electrode component 3; that is, the post terminal component 2 is disposed on the side where the mounting wall 111 is located, such that the post terminal component 2 can be mounted at the mounting hole 112 of the mounting wall 111. For example, when the mounting wall 111 is located above the electrode component 3, the post terminal component 2 is also located above the electrode component 3; when the mounting wall 111 is located below the electrode component 3, the post terminal component 2 is also located below the electrode component 3; when the mounting wall 111 is located on a side surface of the electrode component 3, the post terminal component 2 is also located on the same side surface of the electrode component 3.

Illustratively, the housing component 1 may be enclosed by a plurality of wall surfaces facing different directions, and one of the wall surfaces is the mounting wall 111. Taking a plane perpendicular to the penetration direction of the mounting hole 112 as a projection plane, the orthographic projection of the mounting hole 112 on the projection plane completely falls within the range of the orthographic projection of the mounting wall 111 on the projection plane, and the area of the orthographic projection of the mounting hole 112 is less than the area of the orthographic projection of the mounting wall 111. One or more mounting holes 112 may be formed in the mounting wall 111 to satisfy the mounting requirements of one or more post terminal components 2.

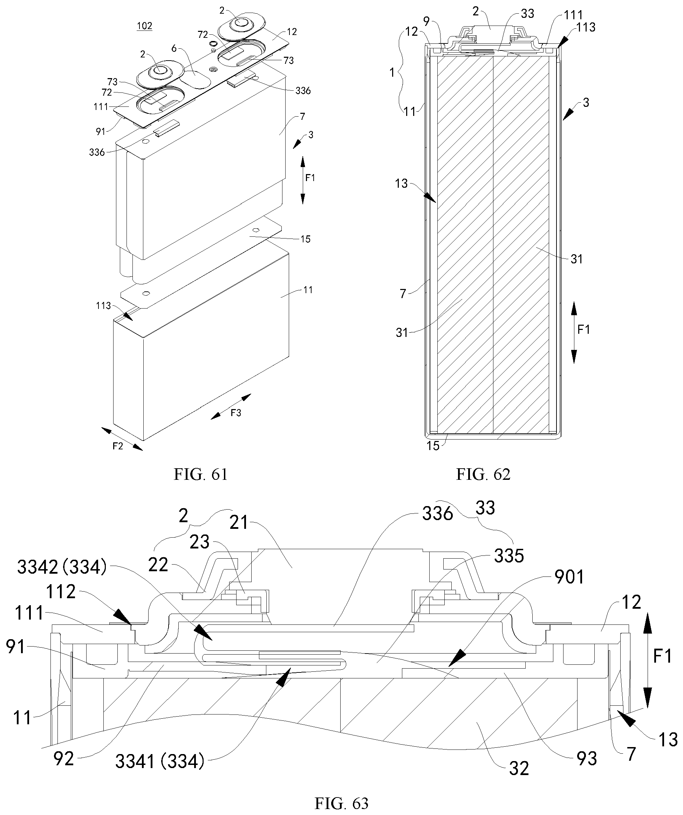

Referring to FIGs. 60 to 63, FIG. 60 is a schematic structural diagram of a battery cell 102 according to yet some other embodiments of the present application; FIG. 61 is an exploded view of a structure of the battery cell 102 shown in FIG. 60; FIG. 62 is a structural cross-sectional view of the battery cell 102 shown in FIG. 60; FIG. 63 is a partially enlarged view of the battery cell 102 shown in FIG. 62. The housing component 1 includes a housing body 11 provided with an opening 113 and a housing cover 12. The housing cover 12 covers the opening 113, and the mounting wall 111 includes the housing cover 12. That is, the post terminal component 2 is mounted on the housing cover 12.

A support plate 15 is further disposed in the housing body 11, and the support plate 15 is located between the electrode component 3 and a wall body of the housing body 11 opposite to the housing cover 12 to support and protect the electrode component 3.

In the above technical solutions, the post terminal component 2 may be disposed on a wall body of the housing body 11 opposite to the opening 113, or the post terminal component 2 may be disposed on the housing cover 12, which can achieve the flexible arrangement of the post terminal component 2.

Some specific embodiments according to the present application are described below.

### Embodiment 1

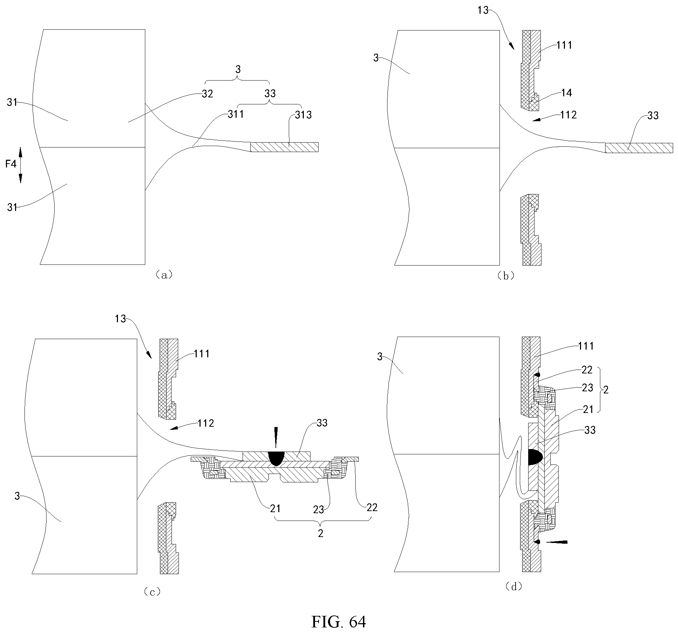

Referring to FIG. 64, a housing component 1 is provided with an accommodating cavity 13, and includes a housing body 11 participating in defining, in an enclosing manner, the accommodating cavity 13. One end of the housing body 11 is provided with an opening 113, one end of the housing body 11 opposite to the opening 113 is a mounting wall 111, and the mounting wall 111 is provided with a mounting hole 112. A post terminal component 2 is mounted on the mounting wall 111 and covers the mounting hole 112. An electrode component 3 includes a plurality of electrode assemblies 31 stacked to be provided with an active substance-coated part 32 accommodated in the accommodating cavity 13 and a tab 335 connected to the active substance-coated part 32. The tab 335 is connected to the post terminal component 2. The post terminal component 2 includes a post terminal body 21, an adapter structure 22, and an insulating structure 23. The adapter structure 22 surrounds the post terminal body 21, the insulating structure 23 is in insulating fit between the post terminal body 21 and the adapter structure 22, the adapter structure 22 is connected to the mounting wall 111, and the post terminal body 21 is connected to the tab 335.

Referring to FIG. 64, when the battery cell 102 is assembled, the plurality of electrode assemblies 31 are stacked in the thickness direction of the electrode assemblies 31 (e.g., the fourth direction F4 shown in the figure), and a plurality of layers of tab plates 311 of the same polarity of the plurality of electrode assemblies 31 are stacked and connected to form a gathering part 313. Then, the gathering part 313 is connected to the post terminal body 21. The electrode component 3 is mounted into the housing body 11 in a direction in which the tab 335 faces the mounting hole 112 relative to the active substance-coated part 32. With the movement of mounting the electrode component 3 into the housing body 11, the gathering part 313 is allowed to extend to the outer side of the mounting hole 112. The gathering part 313 is connected to the post terminal component 2 placed on the outer side of the mounting wall 111 on the outer side of the mounting wall 111. Then, the post terminal component 2 connected to the gathering part 313 covers the mounting hole 112 from the outer side of the mounting wall 111, and then the adapter structure 22 is welded and fixed to the mounting wall 111.

The welding position between the post terminal component 2 and the gathering part 313 is located outside the housing body 11, which can alleviate the problem of damage to the electrode component 3 caused by conductive debris formed during welding entering the housing body 11.

### Embodiment 2

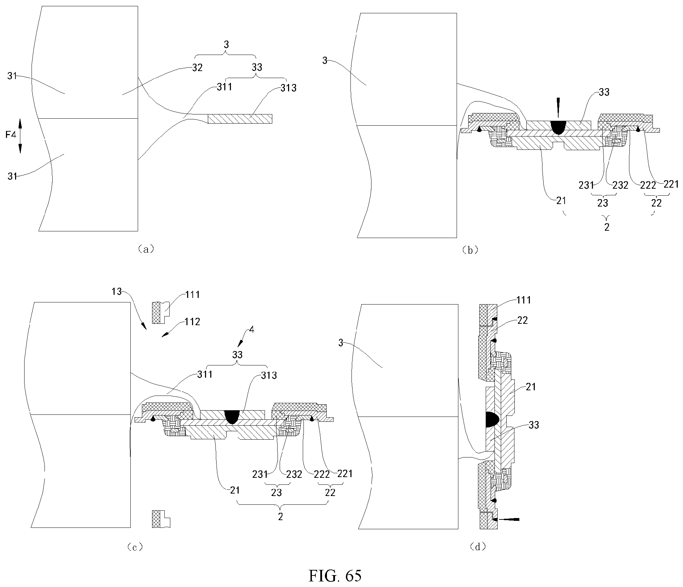

Referring to FIG. 65, a housing component 1 is provided with an accommodating cavity 13, and includes a housing body 11 participating in defining, in an enclosing manner, the accommodating cavity 13. One end of the housing body 11 is provided with an opening 113, one end of the housing body 11 opposite to the opening 113 is a mounting wall 111, and the mounting wall 111 is provided with a mounting hole 112. A post terminal component 2 is mounted on the mounting wall 111 and covers the mounting hole 112. An electrode component 3 includes a plurality of electrode assemblies 31 stacked to be provided with an active substance-coated part 32 accommodated in the accommodating cavity 13 and a tab 335 connected to the active substance-coated part 32. The tab 335 is connected to the post terminal component 2. The post terminal component 2 includes a post terminal body 21, an adapter structure 22, and an insulating structure 23. The adapter structure 22 surrounds the post terminal body 21, the insulating structure 23 is in insulating fit between the post terminal body 21 and the adapter structure 22, the adapter structure 22 is connected to the mounting wall 111, and the post terminal body 21 is connected to the tab 335.

Referring to FIG. 65, when the battery cell 102 is assembled, the plurality of electrode assemblies 31 are stacked in the thickness direction of the electrode assemblies 31 (e.g., the fourth direction F4 shown in the figure), and a plurality of layers of tab plates 311 of the same polarity of the plurality of electrode assemblies 31 are stacked and connected to form a gathering part 313. Then, the gathering part 313 is connected to the post terminal body 21. The electrode component 3 and the post terminal component 2 connected to the gathering part 313 are mounted into the housing body 11 in a direction in which the post terminal component 2 faces the mounting hole 112 relative to the active substance-coated part 32. With the movement of mounting the electrode component 3 into the housing body 11, the post terminal component 2 extends from the mounting hole 112 to the outer side of the mounting wall 111. Then, the post terminal component 2 connected to the gathering part 313 covers the mounting hole 112 from the outer side of the mounting wall 111, and then the adapter structure 22 is welded and fixed to the mounting wall 111.

The post terminal component 2 and the gathering part 313 are not mounted into the housing body 11 when being welded, which can alleviate the problem of damage to the electrode component 3 caused by conductive debris formed during welding entering the housing body 11.

### Embodiment 3

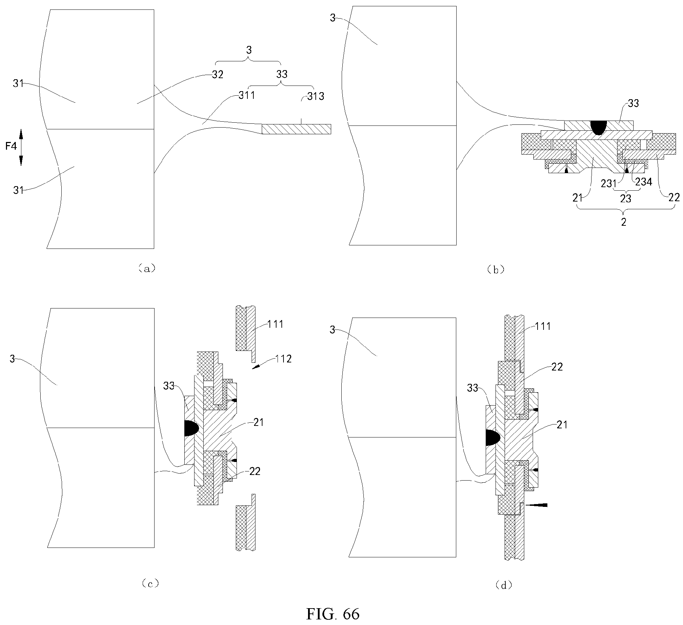

Referring to FIG. 66, a housing component 1 is provided with an accommodating cavity 13, and includes a housing body 11 participating in defining, in an enclosing manner, the accommodating cavity 13. One end of the housing body 11 is provided with an opening 113, one end of the housing body 11 opposite to the opening 113 is a mounting wall 111, and the mounting wall 111 is provided with a mounting hole 112. A post terminal component 2 is mounted on the mounting wall 111 and covers the mounting hole 112. An electrode component 3 includes a plurality of electrode assemblies 31 stacked to be provided with an active substance-coated part 32 accommodated in the accommodating cavity 13 and a tab 335 connected to the active substance-coated part 32. The tab 335 is connected to the post terminal component 2. The post terminal component 2 includes a post terminal body 21, an adapter structure 22, and an insulating structure 23. The adapter structure 22 surrounds the post terminal body 21, the insulating structure 23 is in insulating fit between the post terminal body 21 and the adapter structure 22, the adapter structure 22 is connected to the mounting wall 111, and the post terminal body 21 is connected to the tab 335.

Referring to FIG. 66, when the battery cell 102 is assembled, the plurality of electrode assemblies 31 are stacked in the thickness direction of the electrode assemblies 31 (e.g., the fourth direction F4 shown in the figure), and a plurality of layers of tab plates 311 of the same polarity of the plurality of electrode assemblies 31 are stacked and connected to form a gathering part 313. Then, the gathering part 313 is connected to the post terminal body 21. The electrode component 3 and the post terminal component 2 connected to the gathering part 313 are mounted into the housing body 11 in a direction in which the post terminal component 2 faces the mounting hole 112 relative to the active substance-coated part 32. Then, the post terminal component 2 covers the mounting hole 112 from the inner side of the mounting wall 111, and then the adapter structure 22 is welded and fixed to the mounting wall 111.

The post terminal component 2 and the gathering part 313 are not mounted into the housing body 11 when being welded, which can alleviate the problem of damage to the electrode component 3 caused by conductive debris formed during welding entering the housing body 11.

### Embodiment 4

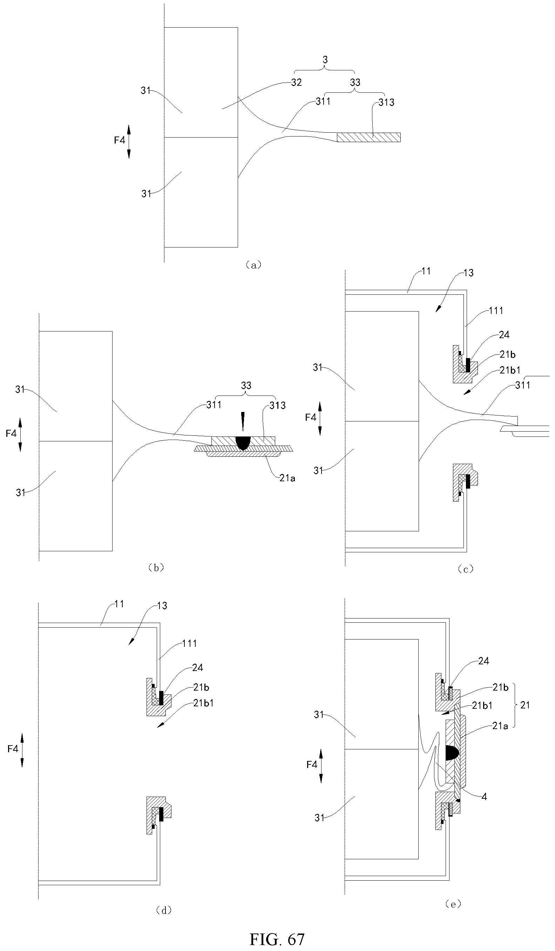

Referring to FIG. 67, a housing component 1 is provided with an accommodating cavity 13, and includes a housing body 11 participating in defining, in an enclosing manner, the accommodating cavity 13. One end of the housing body 11 is provided with an opening 113, one end of the housing body 11 opposite to the opening 113 is a mounting wall 111, and the mounting wall 111 is provided with a mounting hole 112. A post terminal component 2 is mounted on the mounting wall 111 and seals the mounting hole 112. An electrode component 3 includes a plurality of electrode assemblies 31 stacked to be provided with an active substance-coated part 32 accommodated in the accommodating cavity 13 and a tab 335 connected to the active substance-coated part 32. The tab 335 is connected to the post terminal component 2. The post terminal component 2 includes a post terminal body 21 and an insulating and sealing component 24. The post terminal body 21 includes a first post terminal member 21a and a second post terminal member 21b. The second post terminal member 21b defines a mating hole 21b1, the first post terminal member 21a is disposed on one side of the second post terminal member 21b distal to the electrode component 3 and covers the mating hole 21b1, the second post terminal member 21b is connected to the mounting wall 111, and the first post terminal member 21a is connected to the tab 335.

Referring to FIG. 67, when the battery cell 102 is assembled, the plurality of electrode assemblies 31 are stacked in the thickness direction of the electrode assemblies 31 (e.g., the fourth direction F4 shown in the figure), and a plurality of layers of tab plates 311 of the same polarity of the plurality of electrode assemblies 31 are stacked and connected to form a gathering part 313. Then, in one aspect, the gathering part 313 is connected to the first post terminal member 21a; in another aspect, the second post terminal member 21b is assembled to the mounting wall 111 by riveting, and the insulating and sealing component 24 is clamped between the second post terminal member 21b and the mounting wall 111. Thereafter, the electrode component 3 and the first post terminal member 21a connected to the gathering part 313 can be mounted into the housing body 11 in a direction in which the first post terminal member 21a faces the mounting hole 112 relative to the active substance-coated part 32. With the movement of mounting the electrode component 3 into the housing body 11, the first post terminal member 21a extends from the mating hole 21b1 to the outer side of the mounting wall 111. Then, the first post terminal member 21a connected to the gathering part 313 covers the mating hole 21b1 from the outer side of the mounting wall 111, and then the first post terminal member 21a is welded and fixed to the second post terminal member 21b.

The gathering part 313 and the first post terminal member 21a are not mounted into the housing body 11 when being welded, which can alleviate the problem of damage to the electrode component 3 caused by conductive debris formed during welding entering the housing body 11.

### Embodiment 5

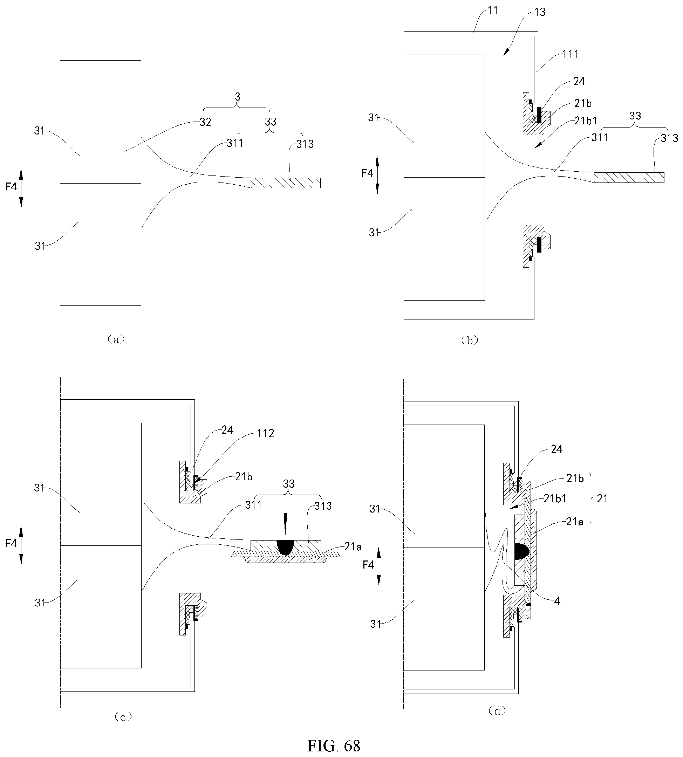

Referring to FIG. 68, Embodiment 5 differs from Embodiment 4 in that the gathering part 313 first passes through the mating hole 21b1, and then the gathering part 313 and the first post terminal member 21a are welded. Details are not described herein again.

It should be noted that the above Embodiments 1 to 5 are intended to illustrate the manufacturing sequence of the battery cell 102, but the specific configuration of the electrode unit 102 is not limited. For example, in the above Embodiments 1 to 5, the tab 335 and the post terminal component 2 may be directly connected, or may be connected by the conductive member 336 according to the embodiments of the present application. For another example, the forms of the adapter structure 22, the insulating structure 23, and the post terminal body 21 of the post terminal component 2 in the above Embodiments 1 to 3 are not limited, and reference can be made to any one of the above embodiments of the present application, which will not be repeated herein.

According to some embodiments of the present application, the present application further provides a battery 100. The battery includes the battery cell 102 according to any one of the above solutions.

In the technical solutions of the embodiments of the present application, by adopting the battery cell 102 described above, the risk of short circuits of the battery cell 102 can be reduced, which is conducive to improving the use reliability of the battery cell 102, thereby improving the use reliability of the battery 100.

Illustratively, the battery 100 may further include a busbar component. A plurality of battery cells 102 are provided and at least two of the battery cells are electrically connected by the busbar component. Therefore, this enables the plurality of battery cells 102 to be connected in series and/or in parallel. For example, when a plurality of battery cells 102 are connected in series, the post terminal component 2 of the anode of one battery cell 102 is connected to the post terminal component 2 of the cathode of the next battery cell 102 by one busbar component. Meanwhile, the post terminal component 2 of the cathode of the battery cell 102 is connected to the post terminal component 2 of the anode of the previous battery cell 102 by another busbar component.

Illustratively, referring to FIG. 2, the battery 100 includes a case 101. A plurality of battery cells 102 are provided and accommodated in the case 101, and the bottom of the case 101 is a case bottom plate 1013. The post terminal component 2 is disposed on one side of the housing component 1 facing the case bottom plate 1013, or on one side of the housing component 1 facing away from the case bottom plate 1013.

During the use of the battery 100, for example, when used in a vehicle, the case bottom plate 1013 is located at the bottom of the case 101 in the direction of gravity. In this way, when the post terminal component 2 is disposed on one side of the housing component 1 facing the case bottom plate 1013, it indicates that the post terminal component 2 is located at the bottom of the housing component 1 in the direction of gravity. In this case, the battery cell 102 is in an inverted state, and the products of pressure relief are ejected in a direction facing away from the passenger compartment, which is safer. Moreover, when the post terminal component 2 is disposed on one side of the housing component 1 facing away from the case bottom plate 1013, it indicates that the post terminal component 2 is located at the top of the housing component 1 in the direction of gravity. In this case, the battery cell 102 is in an upright state, and the electrolytic solution is not prone to leakage. Therefore, the flexible arrangement of orientations of the battery cell 102 and the case 101 can be achieved.

According to some embodiments of the present application, the present application further provides an electric device. The electric device includes the battery cell 102 described in the above solutions, or includes the battery 100 described in the above solutions, where the battery 100 is configured to provide electric energy for the electric device.

The electric device may be any one of the aforementioned devices or systems in which the battery 100 is used.

In the technical solutions of the embodiments of the present application, by adopting the battery cell 102 or the battery 100 described above, the use reliability of the electric device can be improved.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a housing component, defining an accommodating cavity and comprising a mounting wall;
a post terminal component, mounted on the mounting wall and comprising a post terminal body; and
an electrode component, accommodated in the accommodating cavity and comprising an active substance-coated part, a conductive part, and an insulating member, wherein the conductive part is connected between the active substance-coated part and the post terminal body; at least part of the insulating member is disposed between an end part of the active substance-coated part connected to the conductive part and the post terminal body, and the insulating member is provided with a clearance hole for the conductive part to pass through,
wherein the conductive part is bent to form an open slot, and the insulating member extends into the open slot and abuts against at least part of a slot wall of the conductive part that is configured to form the open slot.

2. The battery cell according to claim 1, wherein the clearance hole comprises a first clearance hole, and the insulating member comprises:
an insulating support, disposed at one end of the active substance-coated part proximal to the mounting wall and provided with the first clearance hole, wherein the insulating support at least partially extends into the open slot and abuts against the at least part of the slot wall of the conductive part that forms the open slot.

3. The battery cell according to claim 2, wherein the insulating support comprises:
a support body, disposed at one end of the active substance-coated part proximal to the mounting wall, wherein the first clearance hole is formed in the support body, and the first clearance hole is provided with a first hole wall and a second hole wall disposed opposite to each other in a width direction of the post terminal body; and
a first partition sheet, disposed on the first hole wall and connected to the support body, wherein the first partition sheet extends in a direction close to a center of the first clearance hole, extends into the open slot, and abuts against the at least part of the slot wall of the conductive part that forms the open slot.

4. The battery cell according to claim 3, wherein the first partition sheet extends horizontally from the first hole wall to the second hole wall, or extends obliquely in a direction close to the active substance-coated part.

5. The battery cell according to claim 3, wherein a thickness of the first partition sheet is less than a thickness of the support body, and the first partition sheet is separated from a hole wall of the first clearance hole on both sides thereof in a length direction of the post terminal body, such that the first partition sheet is deformable under pressing of the conductive part.

6. The battery cell according to claim 3, wherein in a length direction of the post terminal body, a dimension of the first partition sheet is greater than or equal to a dimension of the conductive part.

7. The battery cell according to claim 3, wherein the conductive part comprises a convergence segment, a first extension segment, and a second extension segment arranged in an extension direction thereof, the convergence segment is connected to the active substance-coated part, the second extension segment is connected to the post terminal body, a first end of the first extension segment is connected to the convergence segment by a first bent part, and the other end of the first extension segment is connected to the second extension segment by a second bent part, such that the conductive part forms at least two open slots spaced apart from each other in a thickness direction of the mounting wall, and openings of the two open slots face different directions,
wherein the first partition sheet at least partially extends into the open slot between the first extension segment and the convergence segment, and at least abuts against the first extension segment.

8. The battery cell according to claim 7, wherein in the width direction of the post terminal body, a dimension of an overlapping region between the first partition sheet and the first extension segment is greater than half of a dimension of the first extension segment and less than the dimension of the first extension segment.

9. The battery cell according to claim 3, wherein the insulating support further comprises:
a second partition sheet, disposed on the second hole wall and connected to the support body, wherein the second partition sheet extends in a direction close to the center of the first clearance hole and is spaced apart from the first partition sheet, a perforation in communication with the first clearance hole is formed between the second partition sheet and the first partition sheet, the conductive part passes through the perforation, and the second partition sheet abuts against the conductive part.

10. The battery cell according to claim 9, wherein a dimension of the perforation in the width direction of the post terminal body is greater than or equal to a thickness of the conductive part.

11. The battery cell according to claim 9, wherein in a length direction of the post terminal body, a dimension of the second partition sheet is greater than or equal to a dimension of the conductive part.

12. The battery cell according to claim 9, wherein the conductive part comprises a convergence segment, a first extension segment, and a second extension segment arranged in an extension direction thereof, the convergence segment is connected to the active substance-coated part, the second extension segment is connected to the post terminal body, a first end of the first extension segment is connected to the convergence segment by a first bent part, and the other end of the first extension segment is connected to the second extension segment by a second bent part, such that the conductive part forms at least two open slots spaced apart from each other in a thickness direction of the mounting wall, and openings of the two open slots face different directions,
wherein the second partition sheet extends toward the open slot between the first extension segment and the second extension segment, and at least abuts against the convergence part.

13. The battery cell according to claim 12, wherein in the width direction of the post terminal body, a dimension of an overlapping region between the second partition sheet and the convergence segment is less than half of a dimension of the convergence segment.

14. The battery cell according to any one of claims 2 to 13, wherein the clearance hole comprises a second clearance hole, and the insulating member comprises:
an insulating film, wherein the insulating film completely wraps the active substance-coated part, the second clearance hole is formed in the insulating film at a position opposite to the mounting wall and is adapted to a thickness of the conductive part, a peripheral wall of the insulating film where the second clearance hole is formed is interposed between the insulating support and the active substance-coated part, and the conductive part sequentially passes through the second clearance hole and the first clearance hole to be connected to the post terminal body.

15. The battery cell according to claim 14, wherein the insulating film is provided with a retaining piece in a connected manner in at least a partial region in a circumferential direction of the second clearance hole, and a hardness of the retaining piece is greater than a hardness of the insulating film.

16. The battery cell according to any one of claims 1 to 15, wherein the conductive part comprises a convergence segment, a first extension segment, and a second extension segment arranged in an extension direction thereof, the convergence segment is connected to the active substance-coated part, the second extension segment is connected to the post terminal body, and two ends of the first extension segment are connected to the convergence segment and the second extension segment, respectively;
the first extension segment passes through the clearance hole, and the convergence segment and the second extension segment are located on two sides of the insulating member, respectively.

17. The battery cell according to claim 16, wherein the conductive part comprises a plurality of stacked tab plates, and root parts of the plurality of tab plates adjacent to the active substance-coated part converge to form the convergence segment in a triangular shape;
the plurality of tab plates converge at a position of the convergence segment facing away from the active substance-coated part and are connected to form the first extension segment and the second extension segment.

18. The battery cell according to claim 16, wherein a first end of the first extension segment is connected to the convergence segment by a first bent part and a first open slot is defined therebetween, and a second end of the first extension segment is connected to the second extension segment by a second bent part and a second open slot is defined therebetween; openings of the first open slot and the second open slot face different directions, and the two open slots are spaced apart from each other in a thickness direction of the mounting wall; the insulating member at least partially extends into the first open slot to be located between the first extension segment and the active substance-coated part.

19. The battery cell according to claim 18, wherein the insulating member at least partially extends in a direction close to the second open slot to be located between the second extension segment and the active substance-coated part.

20. The battery cell according to claim 16, wherein the convergence segment, the first extension segment, and the second extension segment define a third open slot, and the insulating member at least partially extends into the third open slot to be interposed between the second extension segment and the active substance-coated part.

21. The battery cell according to any one of claims 16 to 20, wherein the conductive part comprises a tab, the tab comprises a plurality of stacked tab plates, and the convergence segment, the first extension segment, and the second extension segment are formed by different parts of the tab.

22. The battery cell according to any one of claims 16 to 20, wherein the conductive part comprises:
a tab, connected to one end of the active substance-coated part proximal to the mounting wall, wherein the tab comprises a plurality of stacked tab plates; and
a conductive member, connected between the tab and the post terminal body, wherein part of the conductive member forms the second extension segment, and another part forms at least part of the first extension segment; at least part of the tab forms the convergence segment.

23. The battery cell according to claim 22, wherein the conductive member comprises an adapter piece, and the adapter piece comprises a plurality of stacked and connected adapter foils, such that the adapter piece is deformable.

24. The battery cell according to any one of claims 1 to 23, wherein the post terminal component further comprises an adapter structure and an insulating structure, the adapter structure surrounds the post terminal body and is connected to the mounting wall, and the insulating structure is fitted between the adapter structure and the post terminal body in an insulating and sealing manner.

25. The battery cell according to claim 24, wherein the adapter structure is formed as an elongated strip extending in a length direction of the mounting wall, and a contour shape of the post terminal body matches a contour shape of the adapter structure; or the adapter structure is formed as an elongated strip extending in a length direction of the mounting wall, and the post terminal body is disposed at a central position of the adapter structure in the length direction and is circular.

26. The battery cell according to claim 24, wherein the insulating structure comprises a sealing structural member, and the sealing structural member is disposed around a peripheral side of the adapter structure facing the post terminal body and is at least partially clamped between the adapter structure and the post terminal body in an inner-outer direction of the mounting wall.

27. The battery cell according to claim 24, wherein the mounting wall is provided with a mounting hole, the post terminal component covers the mounting hole, and an edge of the adapter structure overlaps one side of the mounting wall in a wall thickness direction.

28. The battery cell according to claim 27, wherein an edge of the adapter structure overlaps one side of the mounting wall facing away from the electrode component, the mounting wall is provided with a first recess disposed around the mounting hole, the first recess is open in a direction facing away from the electrode component, and the edge of the adapter structure is provided with a flange part embedded in the first recess.

29. The battery cell according to claim 27 or 28, wherein an edge of the adapter structure overlaps one side of the mounting wall facing away from the electrode component, the mounting hole is an elongated strip-shaped hole, and the post terminal component is formed as an elongated strip-shaped structure matching a shape of the mounting hole.

30. The battery cell according to claim 27, wherein an edge of the adapter structure overlaps one side of the mounting wall facing the electrode component, the edge of the adapter structure is provided with a second recess that is open in a direction facing away from the electrode component, the mounting wall comprises a lap joint part protruding into the mounting hole, and the lap joint part is embedded in the second recess.

31. The battery cell according to claim 24, wherein the post terminal component defines, in an enclosing manner, a first accommodating groove that is, relative to the mounting wall, recessed in a direction facing away from the electrode component and open in a direction facing the electrode component, the electrode component is connected to the post terminal component by the conductive part, and at least part of the conductive part is accommodated in the first accommodating groove and connected to the post terminal body.

32. The battery cell according to claim 24, wherein the post terminal body is provided with a second accommodating groove, the second accommodating groove is open facing away from the accommodating cavity, a groove bottom wall of the second accommodating groove is provided with a through hole, and the conductive part passes through the through hole and is at least partially accommodated in the second accommodating groove.

33. The battery cell according to any one of claims 1 to 32, wherein the housing component comprises a housing body provided with an opening and a housing cover, and the housing cover covers the opening; the mounting wall comprises a wall body of the housing body disposed opposite to the opening, and/or the mounting wall comprises the housing cover.

34. A battery, comprising the battery cell according to any one of claims 1 to 33.

35. The battery according to claim 34, wherein the battery comprises a case, a plurality of battery cells are provided and accommodated in the case, a bottom of the case is a case bottom plate, and the post terminal component is disposed on one side of the housing component facing the case bottom plate or on one side of the housing component facing away from the case bottom plate.

36. An electric device, comprising the battery cell according to any one of claims 1 to 33; or comprising the battery according to claim 34 or 35.
